# EUROPEAN PATENT APPLICATION

(11) **EP 4 300 276 A1**
(43) Date of publication of application: **03.01.2024**
(21) Application number: 22794990.6
(22) Date of filing: 28.04.2022
(51) Int. Cl.: G06F 3/0481, G06F 3/14

(54) **CROSS-DEVICE CONTENT SHARING METHOD AND ELECTRONIC DEVICE**

(30) Priority: 30.04.2021 CN 202110482100
(71) Applicant: Huawei Technologies Co., Ltd., Shenzhen, Guangdong 518129 (CN)
(72) Inventor: ZHOU, Xueer, Shenzhen, Guangdong 518129 (CN); SHE, Zhi, Shenzhen, Guangdong 518129 (CN); LU, Yuedong, Shenzhen, Guangdong 518129 (CN); WEI, Fanxiang, Shenzhen, Guangdong 518129 (CN)
(74) Representative: Epping - Hermann - Fischer
(86) International application number: PCT/CN2022/089921
(87) International publication number: WO 2022/228520

(57) **Abstract**

This application provides a cross-device content sharing method and an electronic device, and is applied to a system that includes a first electronic device and a second electronic device. The second electronic device displays a first window and a second window. The first window includes first content projected by the first electronic device onto the second electronic device. The second window includes second content. The method includes: The second electronic device sends received information about a first operation and the second content to the first electronic device, where the first operation is used to drag the second content from the second window to the first window. In response to the received information about the first operation and the second content, the first electronic device sends projection data including the first content and the second content to the second electronic device. In response to the received projection data, the second electronic device updates content in the first window to the first content and the second content. According to a solution provided in this application, content exchange in a projection scenario can be quickly and smoothly implemented, and simplicity and smoothness of an operation process are improved.

## Description

### CROSS-REFERENCE TO RELATED APPLICATIONS

This application claims priority to Chinese Patent Application No. 202110482100.2, filed with the China National Intellectual Property Administration on April 30, 2021 and entitled "CROSS-DEVICE CONTENT SHARING METHOD AND ELECTRONIC DEVICE", which is incorporated herein by reference in its entirety.

### TECHNICAL FIELD

This application relates to the field of electronic device technologies, and in particular, to a cross-device content sharing method and an electronic device.

### BACKGROUND

As technologies of screen collaboration and multi-screen interaction gradually develop and mature, there are increasing requirements for multi-screen interaction, and application scenarios of multi-screen interaction become increasingly abundant. In a multi-device projection scenario, there are increasing requirements for content exchange between different devices. Therefore, how to quickly and smoothly implement content exchange between devices in more and more complex multi-device projection scenarios is an urgent problem to be resolved currently.

### SUMMARY

Embodiments of this application provide a cross-device content sharing method and an electronic device, to quickly and smoothly implement content exchange in a projection scenario, and improve simplicity and smoothness of an operation process.

According to a first aspect, an embodiment of this application provides a cross-device content sharing method, applied to a system including a first electronic device and a second electronic device. The second electronic device displays a first window and a second window. The first window includes first content projected by the first electronic device onto the second electronic device. The second window includes second content. The method includes:
When receiving a first operation, the second electronic device sends information about the first operation to the first electronic device, and sends the second content to the first electronic device.

The first operation is used to drag the second content from the second window to the first window.

The first electronic device sends projection data to the second electronic device in response to the received information about the first operation and the received second content. The projection data includes the first content and the second content. The second electronic device updates the first content in the first window to the first content and the second content in response to the received projection data.

In the method, in a scenario in which the first electronic device projects a screen onto the second electronic device, content projected by the first electronic device onto the second electronic device is displayed in the first window of the second electronic device, and other content is displayed in the second window of the second electronic device. After receiving the first operation, the second electronic device interacts with the first electronic device, to collaboratively implement sharing of content in the second window to the first window. In this manner, a user can trigger content exchange by using a one-time drag operation, namely, the first operation. An operation process is simple and smooth, and content sharing in a projection scenario can be quickly and smoothly implemented.

In a possible design, the method further includes: The second electronic device sends information about a second operation to the first electronic device when receiving the second operation. The second operation is used to drag the first content from the first window to the second window. The first electronic device sends content data to the second electronic device in response to the received information about the second operation. The content data includes the first content. The second electronic device updates the second content in the second window to the first content and the second content in response to the received content data.

In the method, based on a fact that the second electronic device and the first electronic device collaboratively implement sharing of content in the first window to the second window, the second electronic device may interact with the first electronic device after receiving the second operation, to collaboratively implement sharing of the content in the first window to the second window. In this manner, the user can trigger content exchange by using a one-time drag operation, namely, the second operation. The operation process is simple and smooth, and content exchange in the projection scenario can be quickly and smoothly implemented.

In a possible design, the first content is content that is on a first interface and that is displayed after being generated by the first electronic device, or the first content is content that is on a second interface and that is not displayed after being generated by the first electronic device. The second content is content displayed after being generated by the second electronic device, or the second content is content projected by a third electronic device onto the second electronic device.

In the method, a plurality of projection scenarios with a possible content exchange requirement are provided. In these projection scenarios, if the first electronic device may project, onto the second electronic device, the content that is on the first interface and that is displayed by the first electronic device, the second electronic device may be used as a mirror screen of the first electronic device. Alternatively, if the first electronic device may project, onto the second electronic device, the content that is on the second interface and that is not displayed after being generated, the second electronic device may be used as an expanded screen of the first electronic device. In addition, the content displayed by the second electronic device may be local content, or may be content projected by the third electronic device. In the foregoing different scenarios, the cross-device content sharing method provided in this embodiment of this application may be used, to quickly and smoothly implement content exchange in the projection scenario.

In a possible design, the first operation or the second operation includes at least one of the following: an operation indicated by operation information from the first electronic device, where the operation information is information about an operation performed on a first external input device of the first electronic device, and the first external input device is configured to report, to the first electronic device, the operation performed on the first external input device; an operation performed on a second external input device of the second electronic device, where the second external input device is configured to report, to the second electronic device, the operation performed on the second external input device; or a touch operation performed on a display of the second electronic device.

In the method, three solutions for receiving a user operation by the second electronic device are provided. In view of this, after the first electronic device projects the screen onto the second electronic device, the user may use a plurality of different control modes, and perform operation control on only one electronic device side, to control and implement content exchange between the first electronic device and the second electronic device. Therefore, a corresponding operation procedure is very simple and smooth, and is easy to perform. This further improves smoothness and experience of the user operation.

In a possible design, when the second electronic device receives the first operation, or when the second electronic device receives the second operation, the method further includes: The second electronic device displays a first mark in response to a target operation, where the first mark moves synchronously with a track point of the target operation, and the target operation is the first operation or the second operation. Alternatively, when determining that a track point of a target operation is located outside the first window, the second electronic device displays a first mark in response to the target operation; or when determining that a track point of a target operation is located inside the first window, the second electronic device displays a second mark projected by the first electronic device, where the second mark moves synchronously with the track point of the target operation. Alternatively, when determining that a track point of a target operation is located outside the first window, the second electronic device displays a first mark in response to the target operation; or the second electronic device displays a first mark and a second mark when determining that a track point of a target operation is located inside the first window, where the second mark is transparent and the first mark moves synchronously with the second mark, or the first mark is transparent and the second mark moves synchronously with the first mark.

In the method, the second electronic device can display a mark in a plurality of different manners, to intuitively display a movement track of a received operation. Marks on the display of the second electronic device may always be displayed as a same mark, so that smoothness of displaying the mark can be ensured. Alternatively, the second electronic device may display different marks in the first window and the second window projected by the first electronic device, so that an electronic device that controls display of the mark can be distinguished, to avoid confusion.

In a possible design, any mark includes a cursor and/or a content icon. The cursor indicates a location of the track point of the target operation. The content icon indicates operation content of the target operation. The operation content is the second content when the target operation is the first operation, or the operation content is the first content when the target operation is the second operation.

In the method, the cursor can display a movement track of an operation in real time and intuitively, and the content icon can intuitively display content on which an operation needs to be performed. An operation of dragging a piece of content may be displayed more clearly and intuitively with reference to locations of the cursor and the content icon, a movement path, and the like.

In a possible design, a cursor included in the first mark is different from a cursor included in the second mark.

In the method, different cursors are displayed to distinguish an electronic device that generates and displays marks corresponding to the cursors. Therefore, when the marks are displayed, a main device that controls display of the marks may be reflected.

In a possible design, the method further includes: If determining that location coordinates of the track point of the target operation are within a location coordinate range of the first window, the second electronic device determines that the track point of the target operation is located inside the first window; or if determining that location coordinates of the track point of the target operation are not within a location coordinate range of the first window, the second electronic device determines that the track point of the target operation is located outside the first window. Alternatively, if determining that the track point of the target operation is located on a layer on which the first window is located, the second electronic device determines that the track point of the target operation is located inside the first window; or if determining that the track point of the target operation is not located on a layer on which the first window is located, the second electronic device determines that the track point of the target operation is located outside the first window. In the method, the second electronic device may accurately determine a location of the mark based on location coordinates of the mark, to determine a display mode of the mark based on the location of the mark. Alternatively, the second electronic device may quickly determine, based on a layer on which the mark is located, a change of an area in which the mark is located, to determine a display mode of the mark based on a location of the mark. During actual implementation, the foregoing two modes may be flexibly selected and used based on an application scenario, an actual requirement, and the like, to obtain better effect.

In a possible design, the method further includes: In response to a received third operation, the second electronic device switches the first window to run in the background, and displays a third window, where the third window includes third content. In response to a received fourth operation, the second electronic device switches the first window to display in the foreground, and stops displaying the third window.

In the method, the second electronic device may perform switching control on a displayed window based on a received specified operation. This further improves flexibility of displaying a window. In a possible design, after the second electronic device displays the third window, the method further includes: If determining that the second mark is currently displayed, the second electronic device switches the second mark to the first mark. After the second electronic device switches the first window to display in the foreground, the method further includes: If determining that the first mark is located inside the first window, the second electronic device switches the first mark to the second mark.

In the method, after window switching, the second electronic device may determine, based on the location of the mark, whether to switch a displayed mark, to ensure that a process of displaying the mark is not affected before and after window switching.

In a possible design, that the second electronic device displays a first mark and a second mark when determining that a track point of a target operation is located inside the first window includes: The second electronic device displays the first mark in response to the target operation, where the first mark moves synchronously with the track point of the target operation; when determining that the first mark is located inside the first window, the second electronic device sets the first mark to be transparent, and sends first location information to the first electronic device, where the first location information includes the location of the track point of the target operation or a location of the first mark; the first electronic device generates the second mark in response to the first location information, and projects the second mark onto the second electronic device; and the second electronic device displays the second mark in the first window in response to the received second mark. Alternatively, the second electronic device sends information about the target operation to the first electronic device; the first electronic device generates the second mark in response to the received information about the target operation, sets the second mark to be transparent, projects the second mark onto the second electronic device, and sends second location information to the second electronic device, where the second location information includes a location of the second mark; and the second electronic device displays the second mark in the first window in response to the received second mark, and displays the first mark in the first window in response to received first location information.

In the method, a display location of the mark may be synchronized between the second electronic device and the first electronic device through interaction, so that two marks with a same moving path are simultaneously displayed on the second electronic device, and one of the two marks is set to a transparent state based on the location of the mark. This can ensure during display of the mark that the location of the mark is accurate, and that only one mark is presented to the user.

In a possible design, after the second electronic device displays the second mark in the first window in response to the received second mark, and displays the first mark in the first window in response to the received first location information, the method further includes: When determining that an icon style of the second mark changes, the first electronic device notifies the second electronic device of a changed icon style of the first mark. The second electronic device updates the icon style of the second mark to the changed icon style of the first mark in response to the received changed icon style of the first mark.

In the method, when the second electronic device displays, based on a projection mark of the first electronic device, the mark in a window projected by the first electronic device, an icon style of the displayed mark is updated with an icon style of the projection mark of the first electronic device. Therefore, when the mark is displayed, a display effect of the mark of the first electronic device can be retained. This greatly improves user perception and user experience.

In a possible design, the first interface displayed after being generated by the first electronic device includes the second mark. Before the second electronic device receives the first operation, the method further includes: When determining that the second mark moves out of the first interface, the first electronic device stops displaying the second mark, and sends received information about an operation to the second electronic device.

In the method, when the displayed mark moves out of the first interface, the first electronic device forwards the received information about the operation to the second electronic device, and the second electronic device responds to the information about the operation, so that the second electronic device can be controlled by performing operation control on the first electronic device. In a possible design, the first window and the second window are located on a third interface displayed after being generated by the second electronic device. The method further includes: When determining that the first mark moves out of the third interface, the second electronic device sends first switching mark information to the first electronic device. The first switching mark information is used to notify the first electronic device to display a mark. In response to the received first switching mark information, the first electronic device displays the second mark on the first interface, and stops sending the received information about the operation to the second electronic device.

In the method, when the displayed mark moves out of the third interface, and the first electronic device stops sending the received information about the operation to the second electronic device, the second electronic device can be controlled by stopping performing operation control on the first electronic device. Then the first electronic device may respond to the received operation.

In a possible design, the first interface displayed after being generated by the first electronic device or the second interface not displayed after being generated by the first electronic device includes the second mark. Before the second electronic device receives the first operation, the method further includes: The second electronic device sends third location information to the first electronic device, where the third location information is location information that is of the second window and that is on an interface on which the first window is located. The first electronic device determines a target area that corresponds to the received third location information and that is on the first interface or the second interface. When determining that the second mark moves into the target area, the first electronic device stops displaying the second mark, and sends received information about an operation to the second electronic device.

In the method, after the second electronic device notifies the first electronic device of the location information that is of the second window and that is on the interface on which the first window is located, when the first electronic device displays the mark in the first window in a projection manner, the first electronic device may determine, based on the location of the mark and the location information, whether to trigger the second electronic device to switch the displayed mark. Further, effect of displaying different marks in different windows on the second electronic device is controlled.

In a possible design, the method further includes: When determining that the first mark moves into the first window, the second electronic device sends second switching mark information to the first electronic device, where the second switching mark information is used to notify the first electronic device to display a mark through projection. The first electronic device generates the second mark in response to the received second switching mark information, projects the second mark onto the second electronic device, and stops sending the received information about the operation to the second electronic device. The second electronic device displays the second mark in the first window in response to the received second mark.

In the method, the second electronic device may determine, based on the location of the mark, an occasion and a switching manner for triggering switching display of the mark, and can control switching of the displayed mark when the mark is located in different windows. This further implements effect of displaying different marks in the different windows.

In a possible design, the information about the first operation includes at least one of the following: first drag event information, second drag event information, and the first operation. The first drag event information includes a location of a track point at which the first operation ends and information about the second content, and the second drag event information includes a location at which a track point of the first operation enters the first window and the information about the second content.

In the method, the second electronic device may notify, in different manners, the first electronic device of an operation event of dragging content, so that the first electronic device performs a subsequent response.

In a possible design, that the second electronic device sends, when receiving a first operation, information about the first operation to the first electronic device includes: When determining that the first operation ends, the second electronic device sends the first drag event information to the first electronic device. Alternatively, when determining that the track point of the first operation enters the first window, the second electronic device sends the second drag event information to the first electronic device, and synchronizes the first operation to the first electronic device.

In the method, the second electronic device may notify the second electronic device of the information about the first operation in different manners. This improves flexibility of solution implementation. The second electronic device may notify the first electronic device after a content dragging operation ends, or may notify the first electronic device in real time during a content dragging operation. During specific implementation, the second electronic device may select a proper manner based on a display requirement, to obtain a better display effect.

In a possible design, after the second electronic device sends the first drag event information to the first electronic device, the method further includes: The first electronic device displays a first transparent window in response to the received first drag event information. The first transparent window is used to carry an event of dragging the second content by the first electronic device. The first electronic device stops displaying the first transparent window.

In the method, after receiving information about the content dragging operation, the first electronic device displays the first transparent window to carry a content drag event, and a drag event of the second electronic device may be executed on the first electronic device based on original content dragging logic of the first electronic device. In addition, the transparent window does not affect a visual effect of a display interface on the first electronic device.

In a possible design, after the second electronic device sends the second drag event information to the first electronic device, the method further includes: The first electronic device displays a second transparent window in response to the received second drag event information. The second transparent window is used by the first electronic device to generate an event of dragging the second content. The first electronic device stops displaying the second transparent window. When the second electronic device synchronizes the first operation to the first electronic device, the method further includes: The first electronic device determines, based on the first operation synchronized by the second electronic device, an operation of dragging the second content on the first electronic device. When determining that the first operation synchronized by the second electronic device ends, the first electronic device determines to end the event of dragging the second content.

In the method, when executing the content dragging operation, the first electronic device may determine, based on the first operation synchronized by the second electronic device, a movement path corresponding to dragged content in the first electronic device, and may perform a drag event corresponding to the first operation based on logic that the first electronic device drags the content from one location to another location. In addition, the transparent window does not affect the visual effect of the display interface on the first electronic device.

In a possible design, a display area of the second window is included in a display area of the first window; or the first window and the second window are located in different display areas.

In the method, a window displayed by the second electronic device may have a plurality of layout manners. This improves flexibility of window displaying.

According to a second aspect, an embodiment of this application provides a cross-device content sharing method, applied to a second electronic device. The second electronic device displays a first window and a second window. The first window includes first content projected by a first electronic device onto the second electronic device. The second window includes second content. The method includes:
sending information about a first operation to the first electronic device when the first operation is received; and sending the second content to the first electronic device, where the first operation is used to drag the second content from the second window to the first window; receiving projection data from the first electronic device, where the projection data includes the first content and the second content; and updating the first content in the first window to the first content and the second content in response to the received projection data.

In a possible design, the method further includes: sending information about a second operation to the first electronic device when the second operation is received, where the second operation is used to drag the first content from the first window to the second window; receiving content data from the first electronic device, where the content data includes the first content; and updating the second content in the second window to the first content and the second content in response to the received content data.

In a possible design, the first content is content that is on a first interface and that is displayed after being generated by the first electronic device, or the first content is content that is on a second interface and that is not displayed after being generated by the first electronic device. The second content is content displayed after being generated by the second electronic device, or the second content is content projected by a third electronic device onto the second electronic device.

In a possible design, the first operation or the second operation includes at least one of the following: an operation indicated by operation information from the first electronic device, where the operation information is information about an operation performed on a first external input device of the first electronic device, and the first external input device is configured to report, to the first electronic device, the operation performed on the first external input device; an operation performed on a second external input device of the second electronic device, where the second external input device is configured to report, to the second electronic device, the operation performed on the second external input device; or a touch operation performed on a display of the second electronic device.

In a possible design, when the first operation is received, or when the second operation is received, the method further includes: displaying a first mark in response to a target operation, where the first mark moves synchronously with a track point of the target operation, and the target operation is the first operation or the second operation; when it is determined that a track point of a target operation is located outside the first window, displaying a first mark in response to the target operation; or when it is determined that a track point of a target operation is located inside the first window, displaying a second mark projected by the first electronic device, where the second mark moves synchronously with the track point of the target operation; or when it is determined that a track point of a target operation is located outside the first window, displaying a first mark in response to the target operation; or displaying a first mark and a second mark when it is determined that a track point of a target operation is located inside the first window, where the second mark is transparent and the first mark moves synchronously with the second mark, or the first mark is transparent and the second mark moves synchronously with the first mark.

In a possible design, any mark includes a cursor and/or a content icon. The cursor indicates a location of the track point of the target operation. The content icon indicates operation content of the target operation. The operation content is the second content when the target operation is the first operation, or the operation content is the first content when the target operation is the second operation.

In a possible design, a cursor included in the first mark is different from a cursor included in the second mark.

In a possible design, the method further includes: if it is determined that location coordinates of the track point of the target operation are within a location coordinate range of the first window, determining that the track point of the target operation is located inside the first window; or if it is determined that location coordinates of the track point of the target operation are not within a location coordinate range of the first window, determining that the track point of the target operation is located outside the first window; or if it is determined that the track point of the target operation is located on a layer on which the first window is located, determining that the track point of the target operation is located inside the first window; or if it is determined that the track point of the target operation is not located on a layer on which the first window is located, determining that the track point of the target operation is located outside the first window.

In a possible design, the method further includes: in response to a received third operation, switching the first window to run in the background, and displaying a third window, where the third window includes third content; and in response to a received fourth operation, switching the first window to display in the foreground, and stopping displaying the third window.

In a possible design, after the third window is displayed, the method further includes: if it is determined that the second mark is currently displayed, switching the second mark to the first mark. After the first window is switched to display in the foreground, the method further includes: if it is determined that the first mark is located inside the first window, switching the first mark to the second mark.

In a possible design, the displaying a first mark and a second mark when it is determined that a track point of a target operation is located inside the first window includes: displaying the first mark in response to the target operation, where the first mark moves synchronously with the track point of the target operation; when it is determined that the first mark is located inside the first window, setting the first mark to be transparent, and sending first location information to the first electronic device, where the first location information includes the location of the track point of the target operation or a location of the first mark; receiving the second mark projected by the first electronic device; and displaying the second mark in the first window in response to the received second mark; or sending information about the target operation to the first electronic device; receiving the second mark projected by the first electronic device, and receiving second location information from the first electronic device, where the second mark is transparent, and the second location information includes a location of the second mark; and displaying the second mark in the first window in response to the received second mark, and displaying the first mark in the first window in response to the received first location information.

In a possible design, after the second mark is displayed in the first window in response to the received second mark, and the first mark is displayed in the first window in response to the received first location information, the method further includes: receiving a changed icon style of the first mark from the first electronic device; and updating an icon style of the second mark to the changed icon style of the first mark in response to the received changed icon style of the first mark. In a possible design, the first window and the second window are located on a third interface displayed after being generated by the second electronic device. The method further includes: when it is determined that the first mark moves out of the third interface, sending first switching mark information to the first electronic device, where the first switching mark information is used to notify the first electronic device to display a mark.

In a possible design, before the first operation is received, the method further includes: sending third location information to the first electronic device, where the third location information is location information that is of the second window and that is on an interface on which the first window is located.

In a possible design, the method further includes: when it is determined that the first mark moves into the first window, sending second switching mark information to the first electronic device, where the second switching mark information is used to notify the first electronic device to display a mark through projection; receiving the second mark projected by the first electronic device; and displaying the second mark in the first window in response to the received second mark.

In a possible design, the information about the first operation includes at least one of the following: first drag event information, second drag event information, and the first operation. The first drag event information includes a location of a track point at which the first operation ends and information about the second content, and the second drag event information includes a location at which a track point of the first operation enters the first window and the information about the second content.

In a possible design, the sending information about a first operation to the first electronic device when the first operation is received includes: when it is determined that the first operation ends, sending the first drag event information to the first electronic device; or when it is determined that the track point of the first operation enters the first window, sending the second drag event information to the first electronic device, and synchronizing the first operation to the first electronic device.

In a possible design, a display area of the second window is included in a display area of the first window; or the first window and the second window are located in different display areas.

According to a third aspect, an embodiment of this application provides a cross-device content sharing method, applied to a first electronic device. First content generated by the first electronic device is projected onto a second electronic device. The second electronic device displays a first window and a second window. The first window includes the first content. The second window includes second content. The method includes:
when information about a first operation from the second electronic device and the second content are received, sending projection data to the second electronic device in response to the information about the first operation and the second content, where the first operation is used to drag the second content from the second window to the first window, and the projection data includes the first content and the second content.

In a possible design, the method further includes: when information about a second operation is received from the second electronic device, sending content data to the second electronic device in response to the information about the second operation, where the second operation is used to drag the first content from the first window to the second window, and the content data includes the first content.

In a possible design, the first content is content that is on a first interface and that is displayed after being generated by the first electronic device, or the first content is content that is on a second interface and that is not displayed after being generated by the first electronic device. The second content is content displayed after being generated by the second electronic device, or the second content is content projected by a third electronic device onto the second electronic device.

In a possible design, the first operation or the second operation includes information about an operation performed on a first external input device of the first electronic device, and the first external input device is configured to report, to the first electronic device, the operation performed on the first external input device.

In a possible design, the first interface displayed after being generated by the first electronic device includes a second mark. Before the information about the first operation from the second electronic device and the second content are received, the method further includes: when it is determined that the second mark moves out of the first interface, stopping displaying the second mark, and sending received information about an operation to the second electronic device.

In a possible design, the method further includes: when first switching mark information from the second electronic device is received, displaying the second mark on the first interface in response to the first switching mark information, and stopping sending the received information about the operation to the second electronic device, where the first switching mark information is used to notify the first electronic device to display a mark.

In a possible design, the first interface displayed after being generated by the first electronic device or the second interface not displayed after being generated by the first electronic device includes the second mark. Before the information about the first operation from the second electronic device and the second content are received, the method further includes: when third location information from the second electronic device is received, determining a target area that corresponds to the received third location information and that is on the first interface or the second interface, where the third location information is location information that is of the second window and that is on an interface on which the first window is located; and when it is determined that the second mark moves into the target area, stopping displaying the second mark, and sending the received information about the operation to the second electronic device.

In a possible design, the method further includes: when second switching mark information from the second electronic device is received, generating the second mark in response to the second switching mark information, projecting the second mark onto the second electronic device, and stopping sending the received information about the operation to the second electronic device, where the second switching mark information is used to notify the first electronic device to display a mark through projection.

In a possible design, the method further includes: when first location information from the second electronic device is received, generating the second mark in response to the first location information, and projecting the second mark onto the second electronic device, where the first location information includes a location of a track point of the first operation, a location of a track point of the second operation, or a location of the first mark, and the first mark is a transparent mark displayed on the second electronic device; or when information about a target operation from the second electronic device is received, generating the second mark in response to the information about the target operation, setting the second mark to be transparent, projecting the second mark onto the second electronic device, and sending the second location information to the second electronic device, where the second location information includes a location of the second mark. In a possible design, after the second mark is generated, the second mark is set to be transparent and projected into the second electronic device, and the second location information is sent to the second electronic device, the method further includes: when it is determined that an icon style of the second mark changes, notifying the second electronic device of a changed icon style of the first mark.

In a possible design, any mark includes a cursor and/or a content icon. The cursor indicates a location of a track point of the target operation. The target operation is the first operation or the second operation. The content icon indicates operation content of the target operation. The operation content is the second content when the target operation is the first operation, or the operation content is the first content when the target operation is the second operation.

In a possible design, a cursor included in the first mark is different from a cursor included in the second mark.

In a possible design, the information about the first operation includes at least one of the following: first drag event information, second drag event information, and the first operation. The first drag event information includes a location of a track point at which the first operation ends and information about the second content, and the second drag event information includes a location at which a track point of the first operation enters the first window and the information about the second content.

In a possible design, receiving the information about the first operation from the second electronic device includes: receiving the first drag event information from the second electronic device; or receiving the second drag event information from the second electronic device and receiving the first operation synchronized by the second electronic device.

In a possible design, after the first drag event information from the second electronic device is received, the method further includes: displaying a first transparent window in response to the first drag event information, where the first transparent window is used to carry an event of dragging the second content; and stopping displaying the first transparent window.

In a possible design, after the second drag event information from the second electronic device is received, the method further includes: displaying a second transparent window in response to the received second drag event information, where the second transparent window is used to generate the event of dragging the second content; and stopping displaying the second transparent window. When the first operation synchronized by the second electronic device is received, the method further includes: determining, based on the first operation synchronized by the second electronic device, an operation of dragging the second content on the first electronic device; and when it is determined that the first operation synchronized by the second electronic device ends, determining to end the event of dragging the second content.

According to a fourth aspect, an embodiment of this application provides a system. The system includes a first electronic device and a second electronic device. The second electronic device displays a first window and a second window. The first window includes first content projected by the first electronic device onto the second electronic device. The second window includes second content.

The first electronic device is configured to perform the method according to any one of the third aspect or the possible designs of the third aspect. The second electronic device is configured to perform the method according to any one of the second aspect or the possible designs of the second aspect.

According to a fifth aspect, an embodiment of this application provides an electronic device. The electronic device includes a display, a memory, and one or more processors. The memory is configured to store computer program code, and the computer program code includes computer instructions. When the computer instructions are invoked and executed by the one or more processors, the electronic device is enabled to perform the method according to any one of the second aspect or the possible designs of the third aspect.

According to a sixth aspect, an embodiment of this application provides a chip. The chip is coupled to a memory in an electronic device, so that the chip invokes, when running, a computer program stored in the memory, to implement the method according to any one of the second aspect or the possible designs of the second aspect, or implement the method according to any one of the third aspect or the possible designs of the third aspect.

According to a seventh aspect, an embodiment of this application provides a computer-readable storage medium. The computer-readable storage medium stores a computer program. When the computer program is run on an electronic device, the electronic device is enabled to perform the method according to any one of the second aspect or the possible designs of the second aspect, or perform the method according to any one of the third aspect or the possible designs of the third aspect.

According to an eighth aspect, an embodiment of this application provides a computer program product. The computer program product includes a computer program or instructions. When the computer program or the instructions are run on an electronic device, the electronic device is enabled to perform the method according to any one of the second aspect or the possible designs of the second aspect, or perform the method according to any one of the third aspect or the possible designs of the third aspect.

For beneficial effect of the second aspect to the eighth aspect, refer to descriptions of the beneficial effect of the first aspect. Details are not described herein again.

### BRIEF DESCRIPTION OF DRAWINGS

FIG. 1a-1 and FIG. 1a-2 are example diagrams of a screen collaboration system according to an embodiment of this application;
FIG. 1b-1 and FIG. 1b-2 are example diagrams of a screen collaboration system according to an embodiment of this application;
FIG. 1c-1 and FIG. 1c-2 are example diagrams of a screen collaboration system according to an embodiment of this application;
FIG. 1d-1 and FIG. 1d-2 are example diagrams of a screen collaboration system according to an embodiment of this application;
FIG. 2a is a schematic diagram of a hardware architecture of an electronic device according to an embodiment of this application;
FIG. 2b is a schematic diagram of a software architecture of an electronic device according to an embodiment of this application;

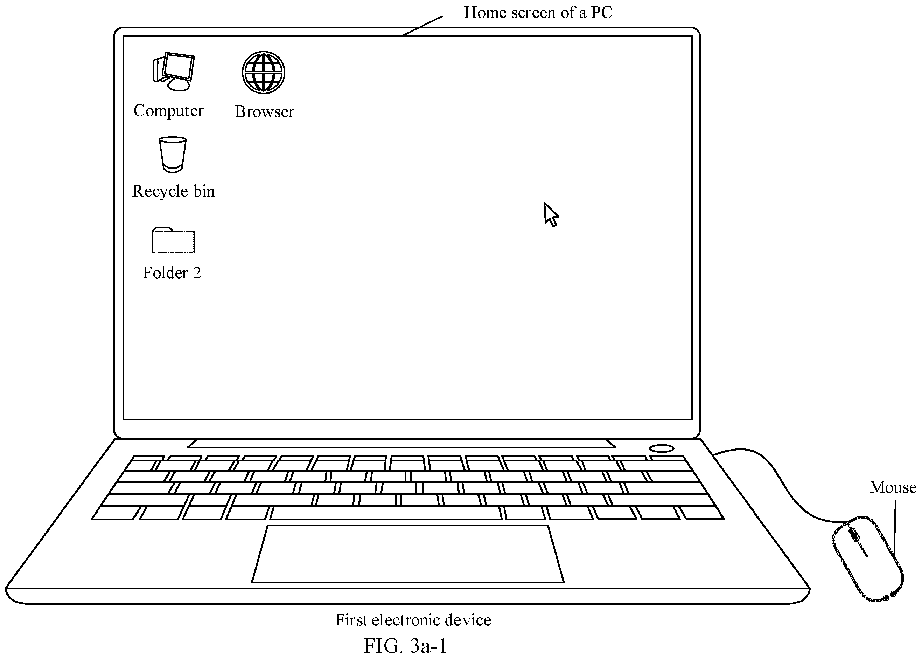

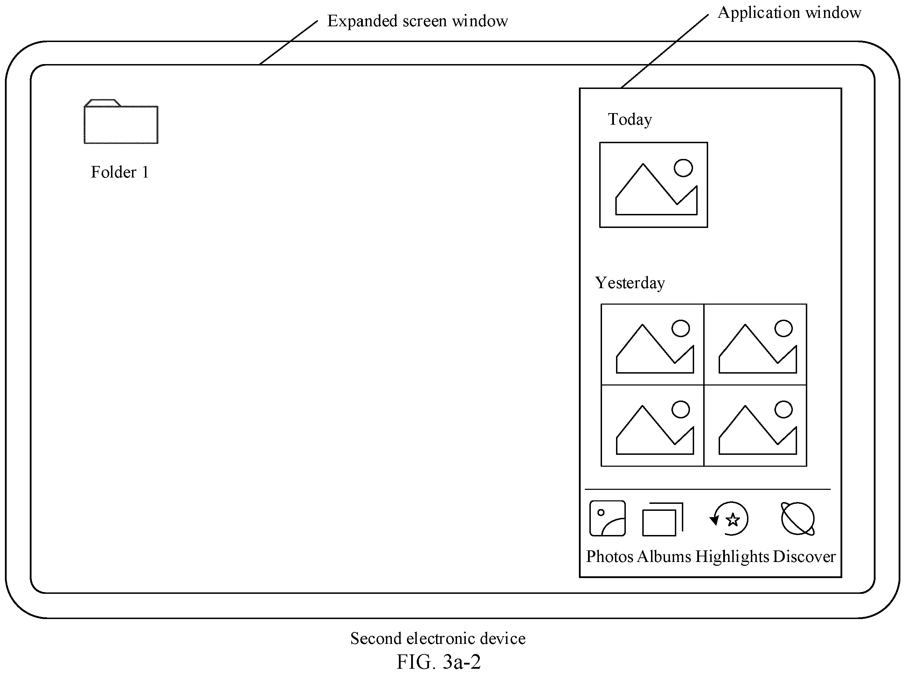

FIG. 3a-1 and FIG. 3a-2 are example diagrams of a screen collaboration system according to an embodiment of this application;

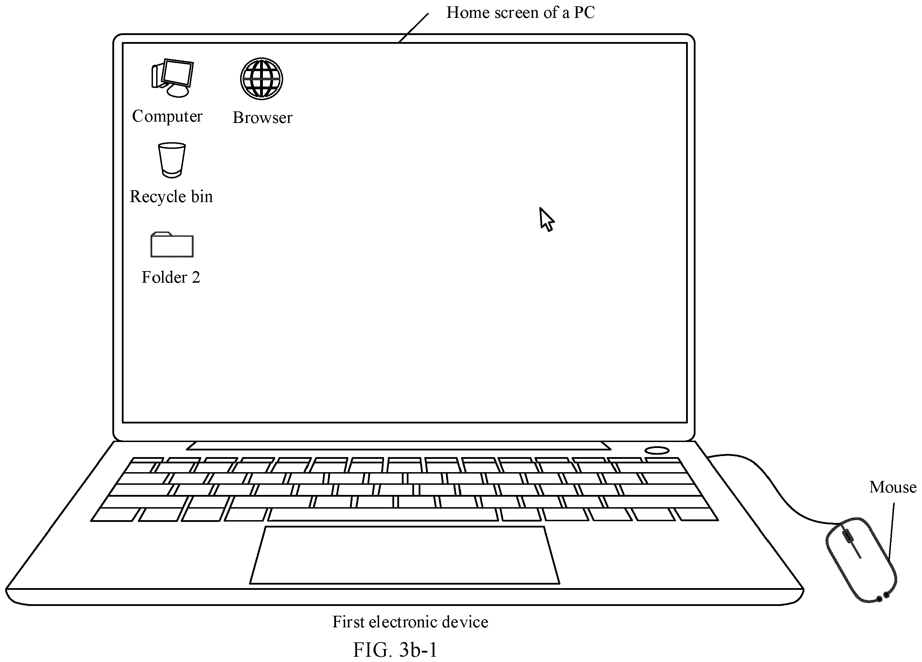

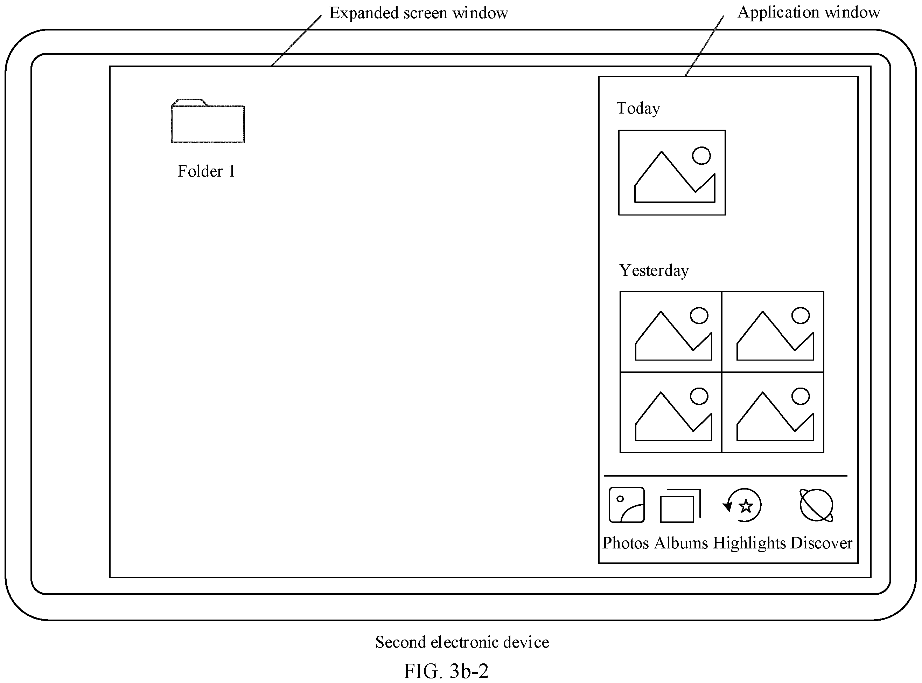

FIG. 3b-1 and FIG. 3b-2 are example diagrams of a screen collaboration system according to an embodiment of this application;

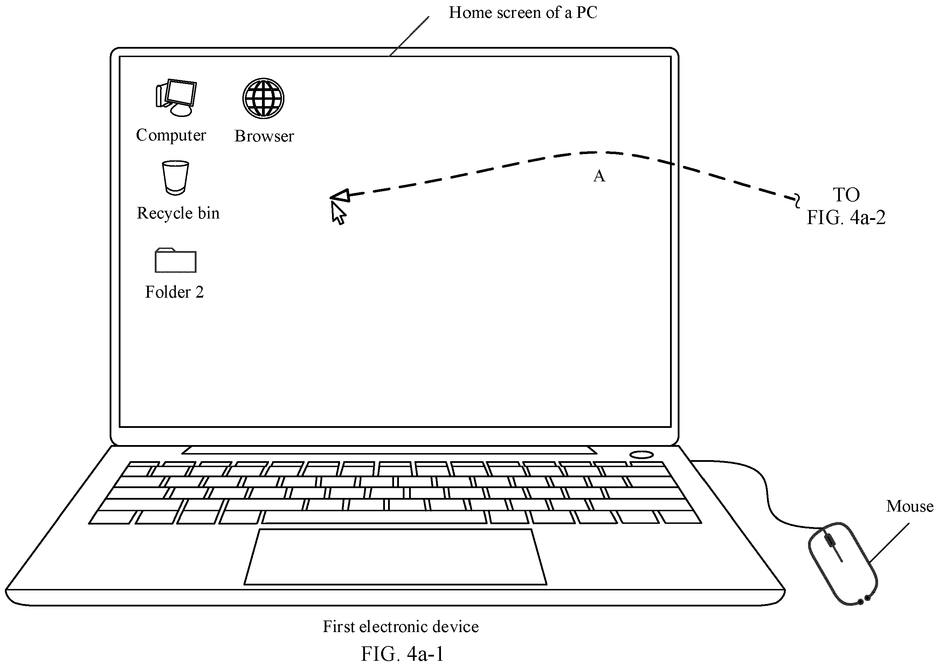

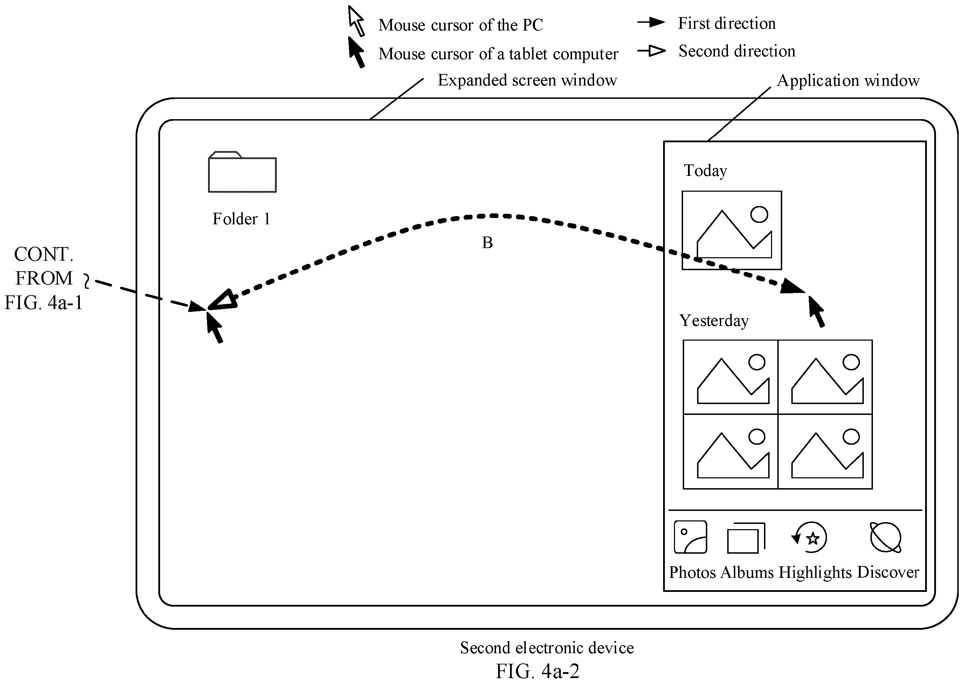

FIG. 4a-1 and FIG. 4a-2 are example diagrams of a screen collaboration system according to an embodiment of this application;

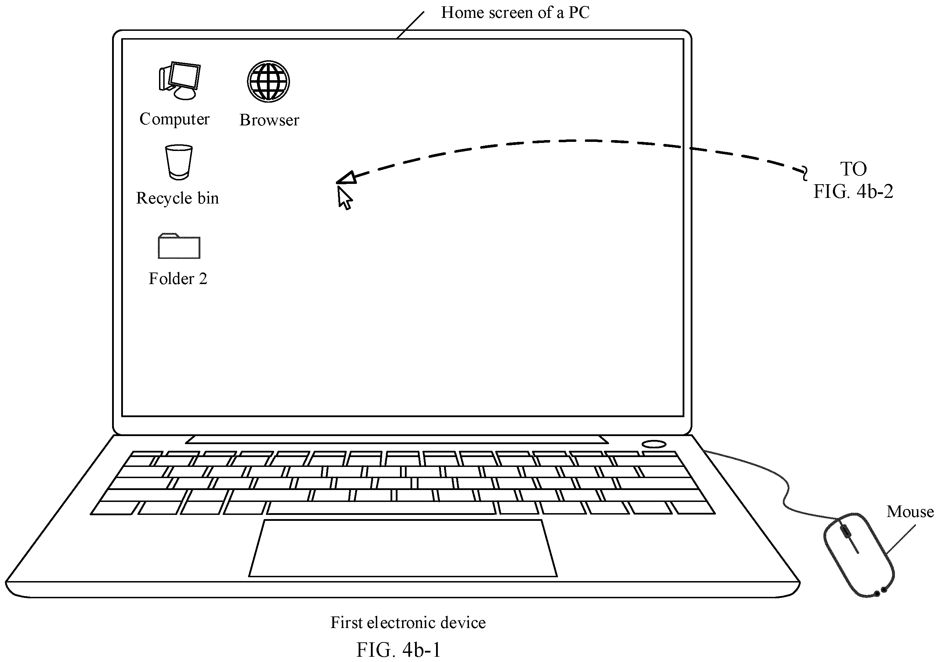

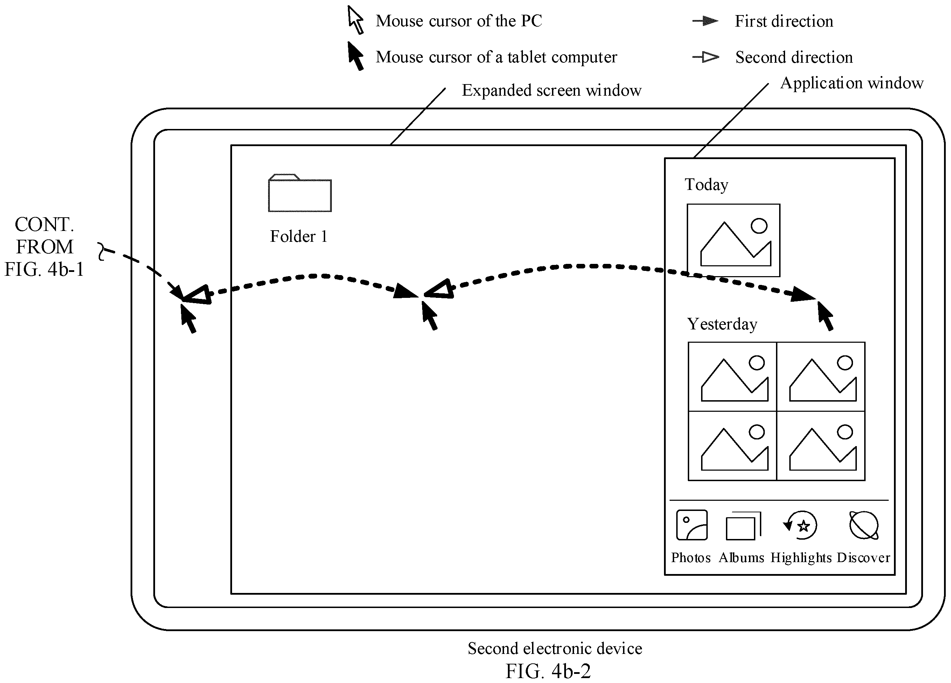

FIG. 4b-1 and FIG. 4b-2 are example diagrams of a screen collaboration system according to an embodiment of this application;

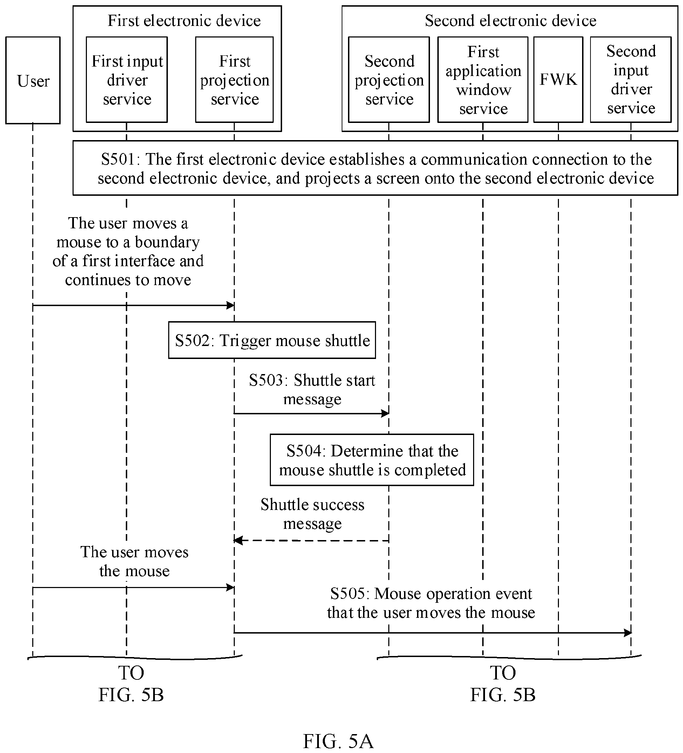

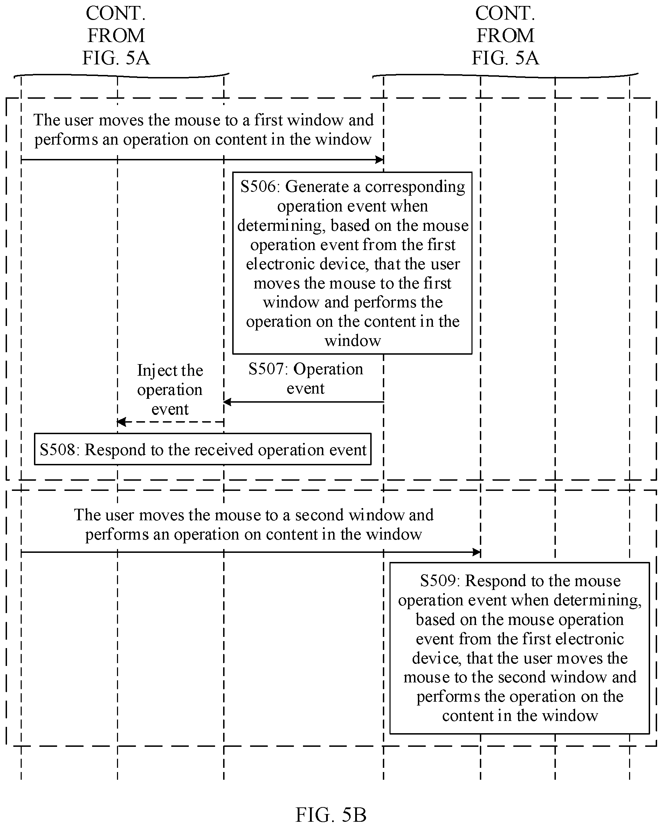

FIG. 5A and FIG. 5B are a schematic flowchart of an inter-device control method according to an embodiment of this application;

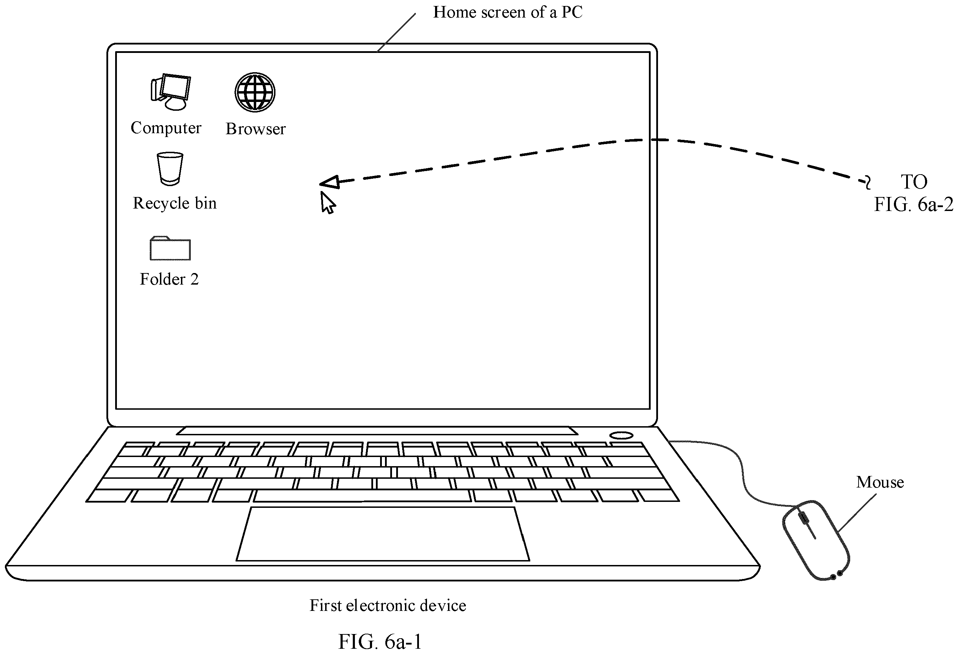

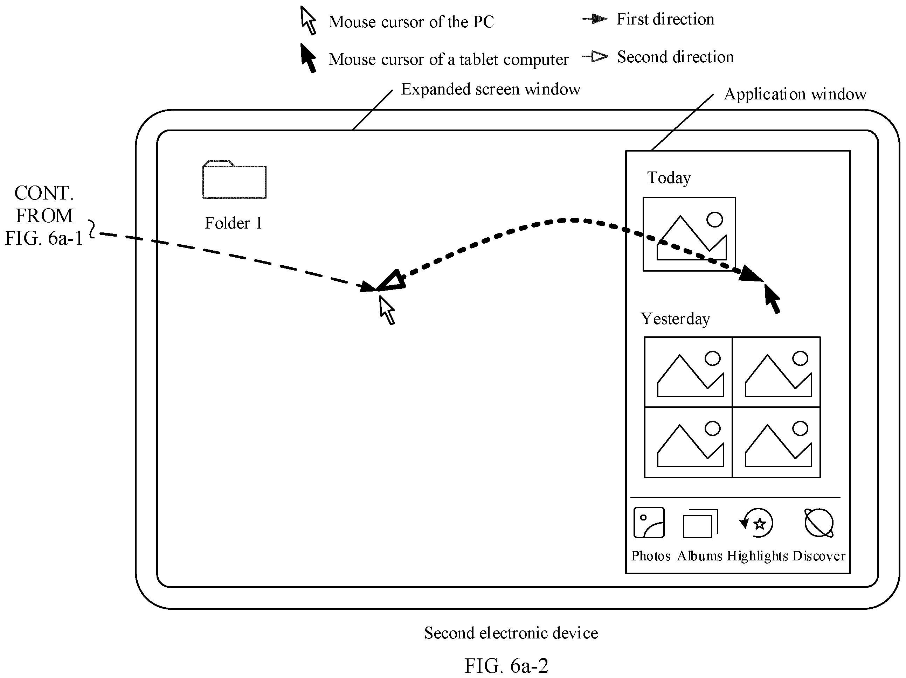

FIG. 6a-1 and FIG. 6a-2 are example diagrams of a screen collaboration system according to an embodiment of this application;

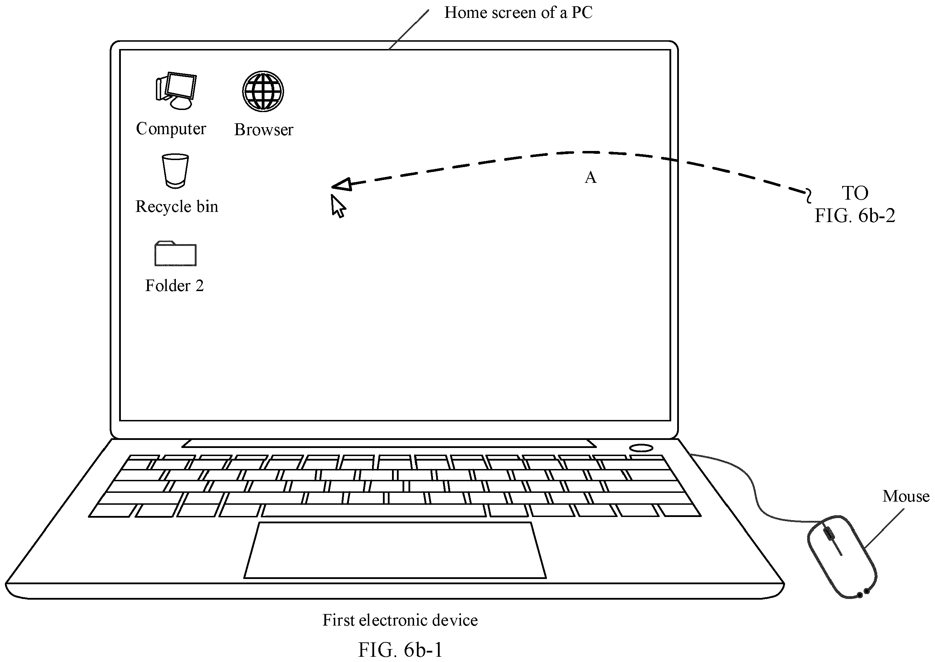

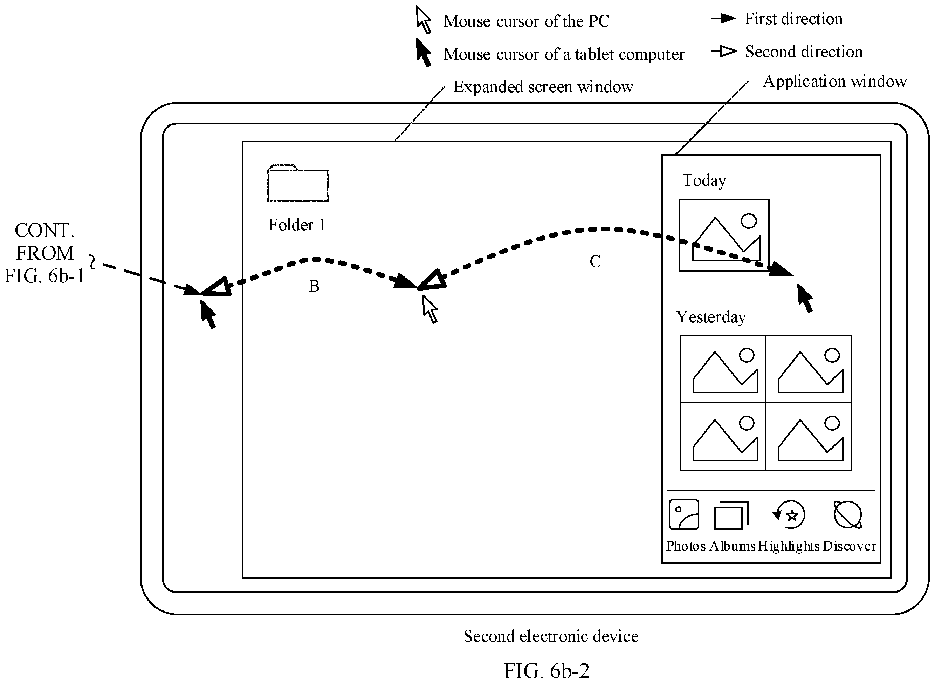

FIG. 6b-1 and FIG. 6b-2 are example diagrams of a screen collaboration system according to an embodiment of this application;

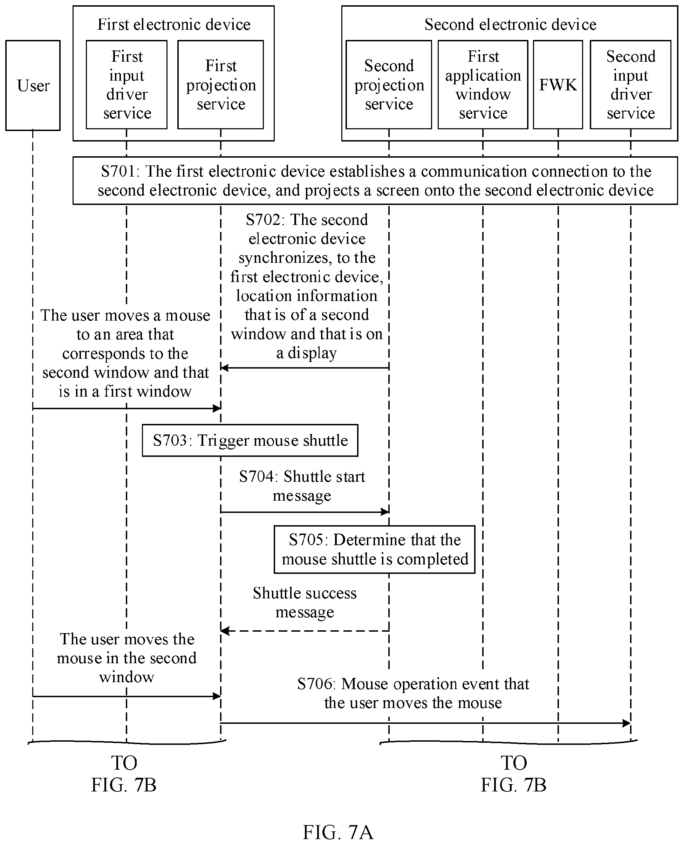

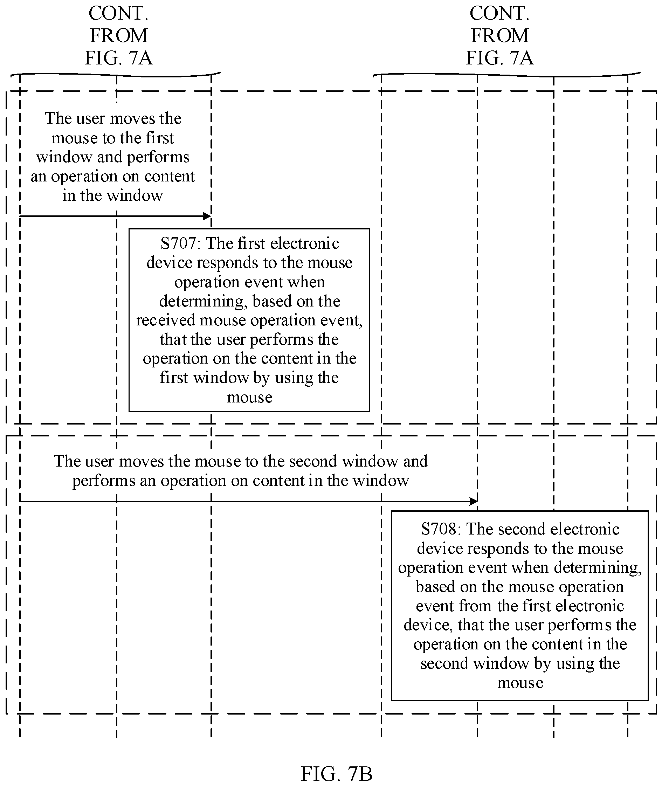

FIG. 7A and FIG. 7B are a schematic flowchart of an inter-device control method according to an embodiment of this application;

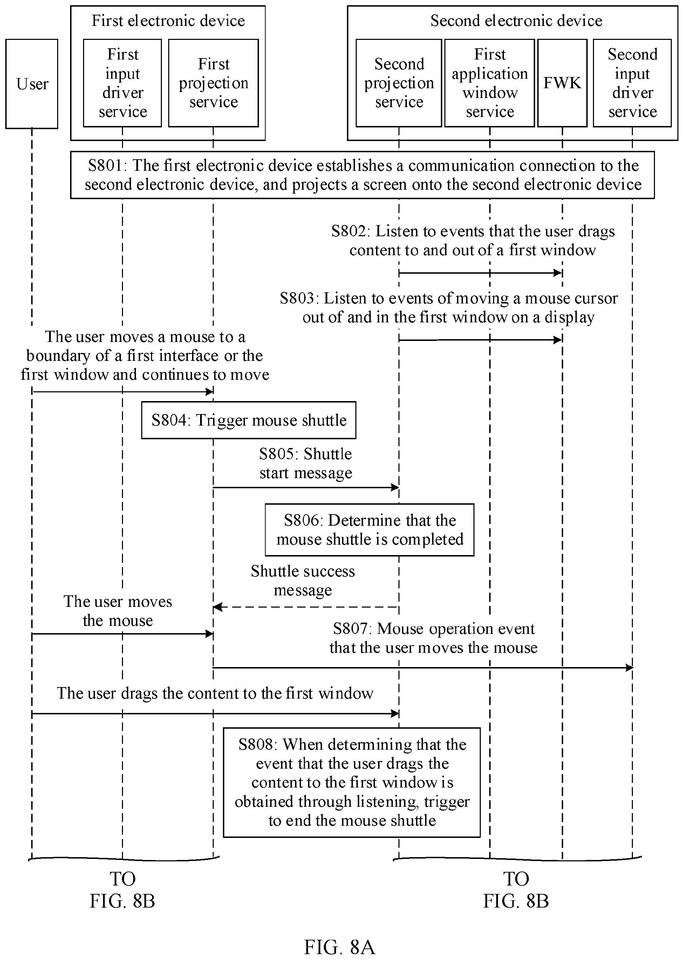

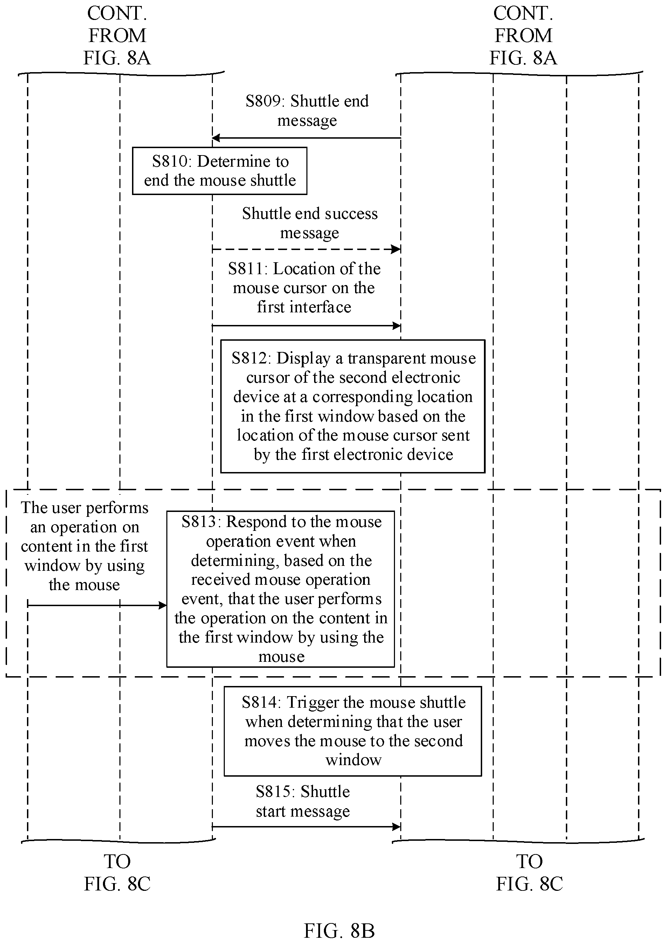

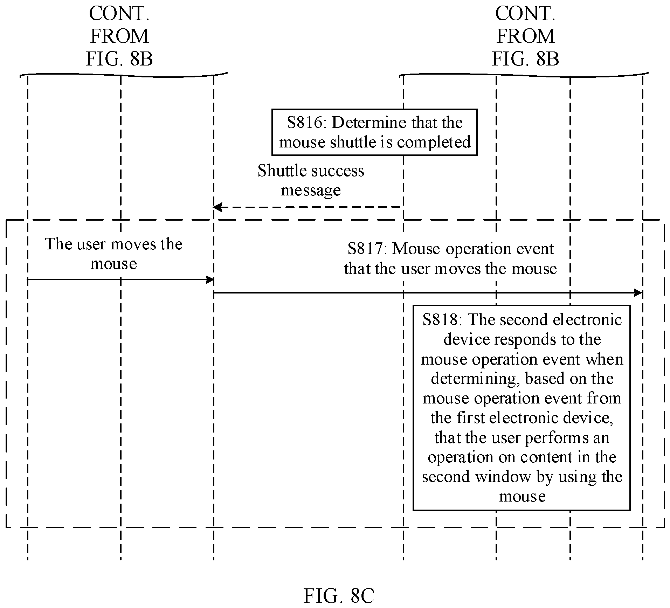

FIG. 8A, FIG. 8B, and FIG. 8C are a schematic flowchart of an inter-device control method according to an embodiment of this application;

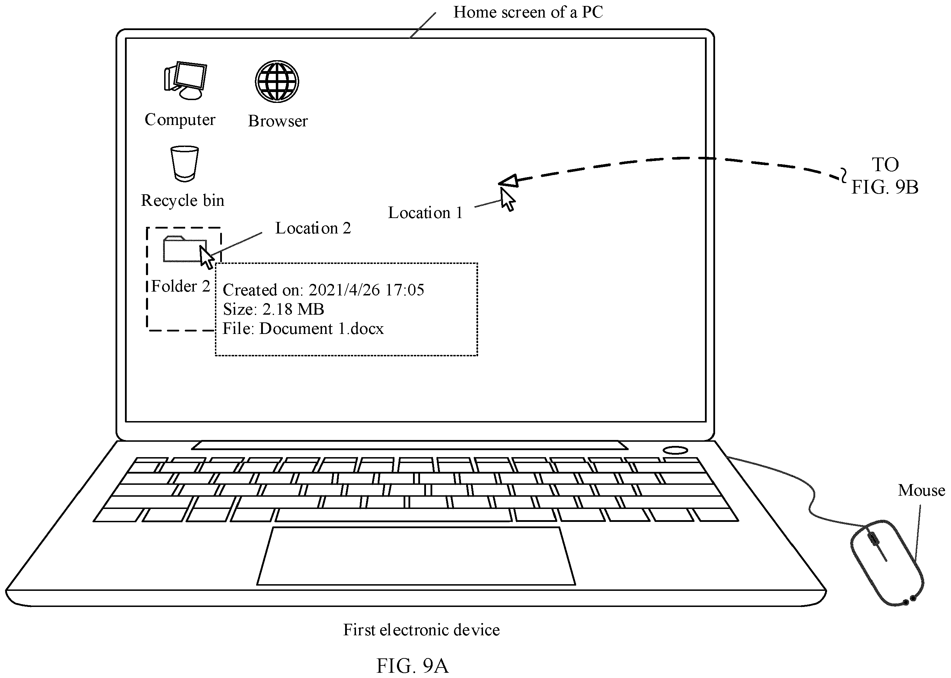

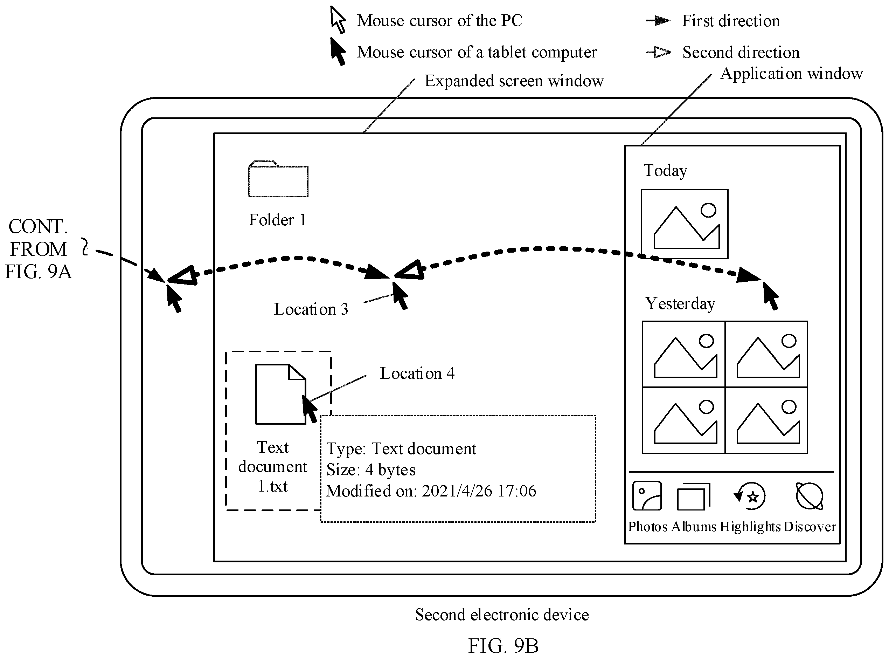

FIG. 9A and FIG. 9B are example diagrams of a screen collaboration system according to an embodiment of this application;

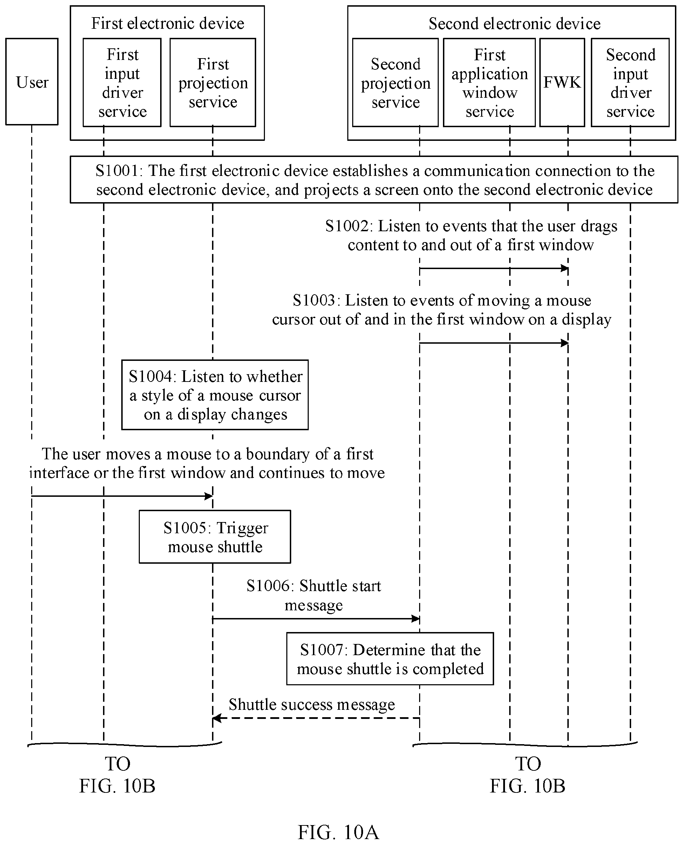

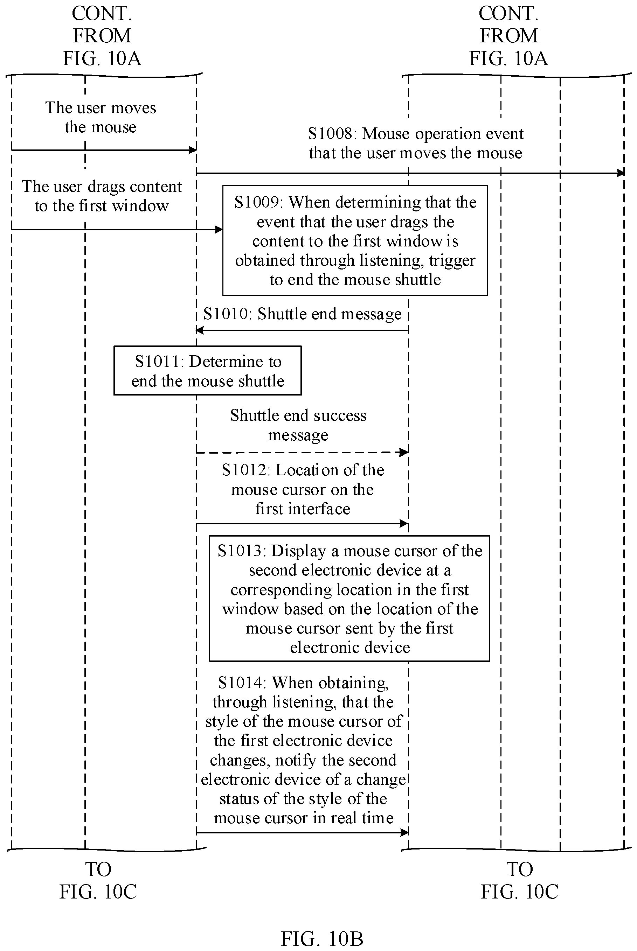

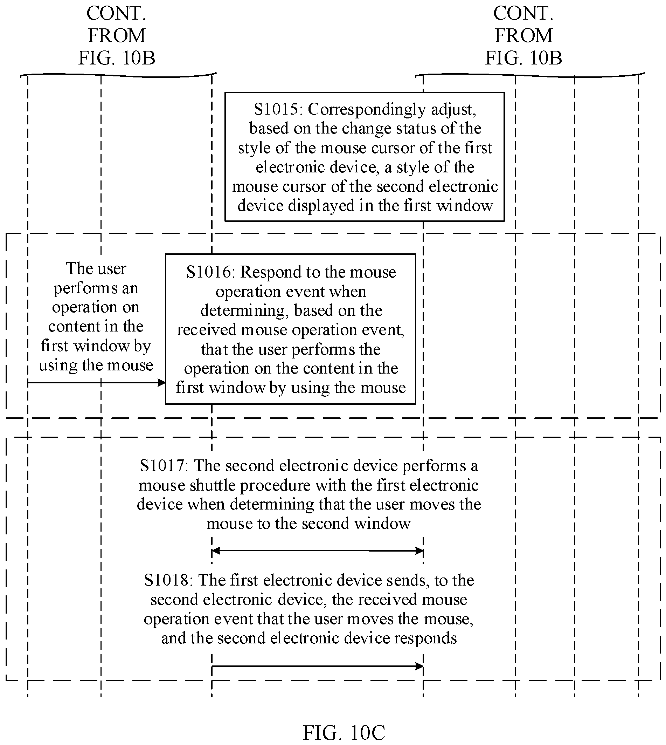

FIG. 10A, FIG. 10B, and FIG. 10C are a schematic flowchart of an inter-device control method according to an embodiment of this application;
FIG. 11a-1 and FIG. 11a-2 are example diagrams of a screen collaboration system according to an embodiment of this application;

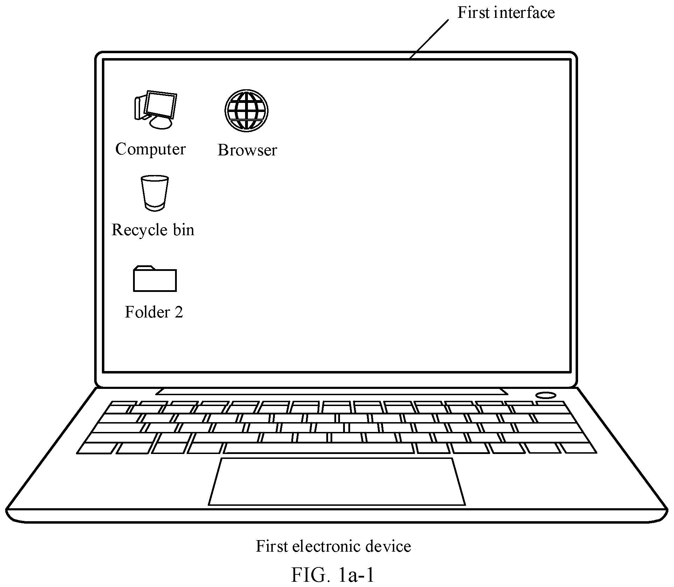

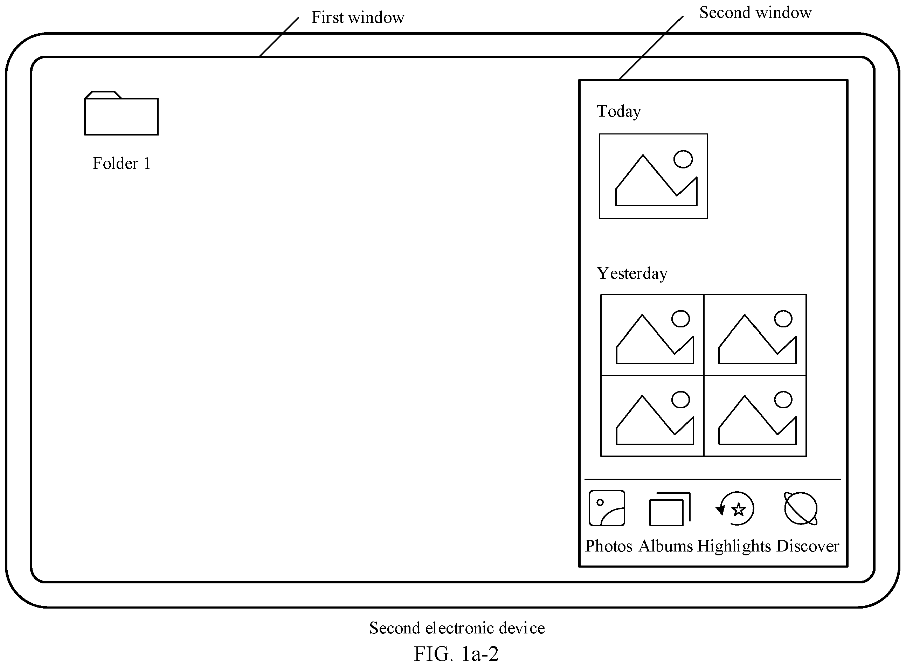

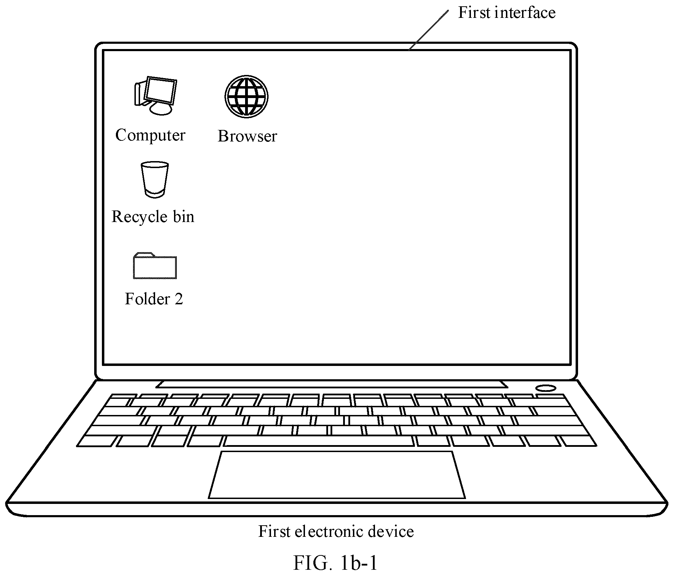

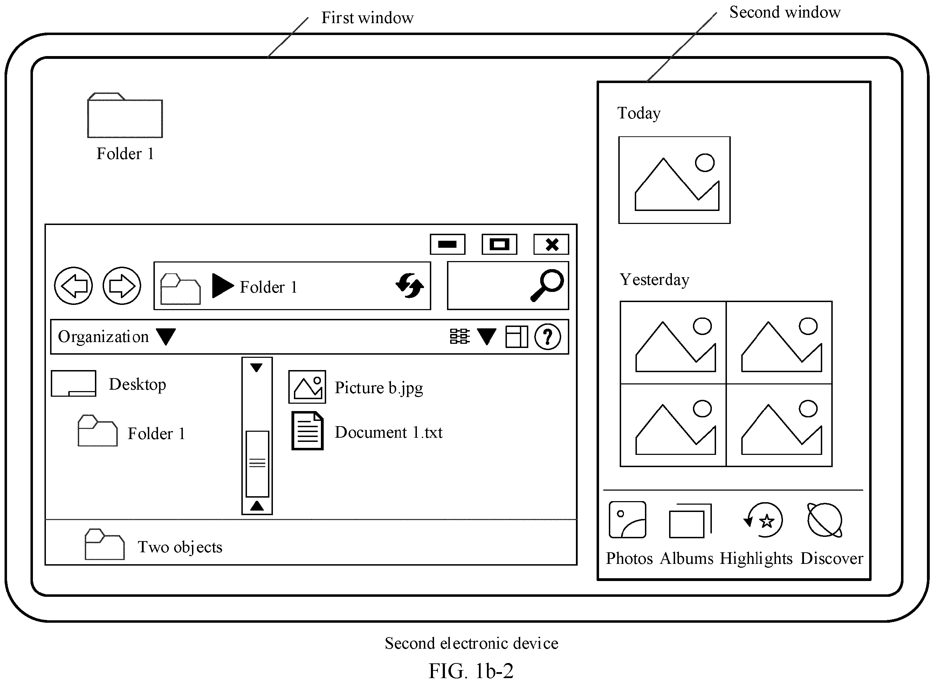

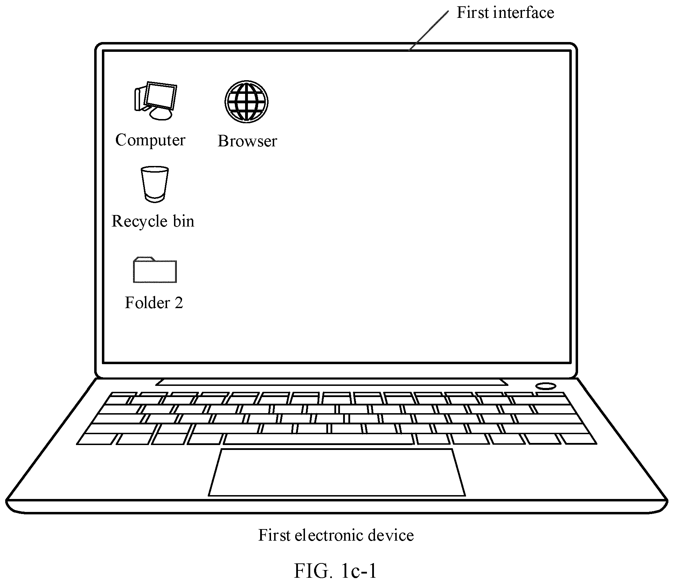

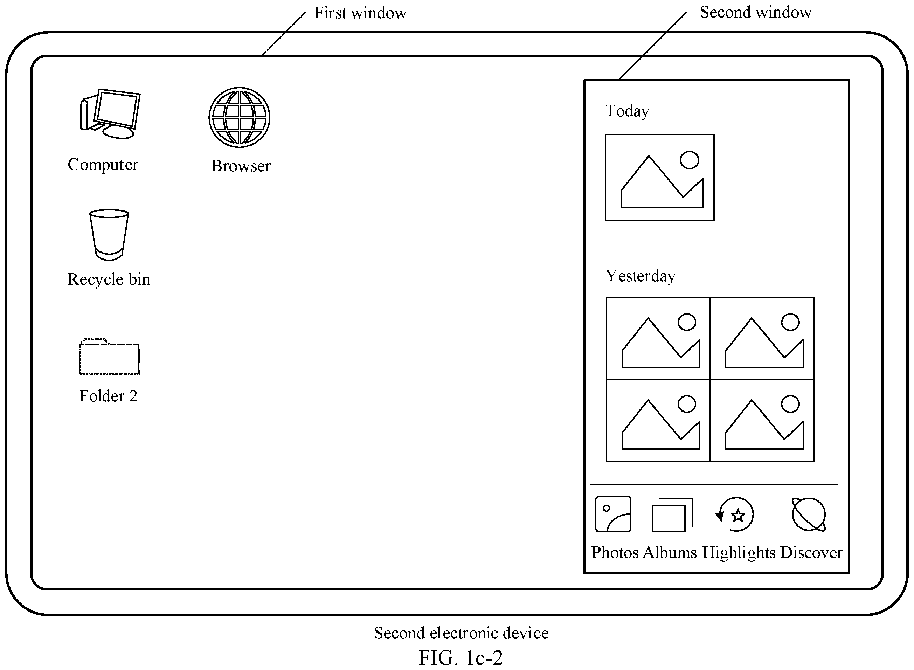

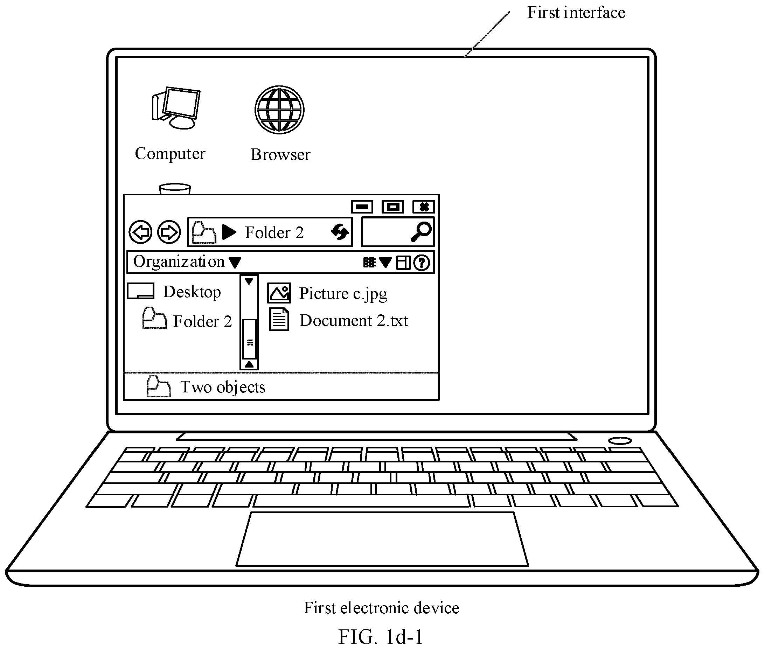

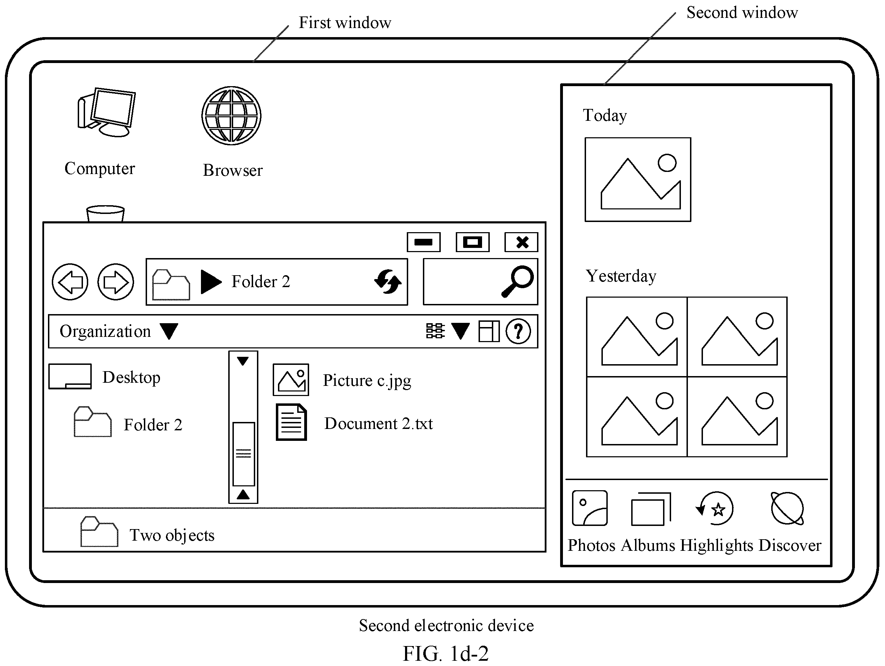

FIG. 1 1b-1 and FIG. 1 1b-2 are example diagrams of a screen collaboration system according to an embodiment of this application;

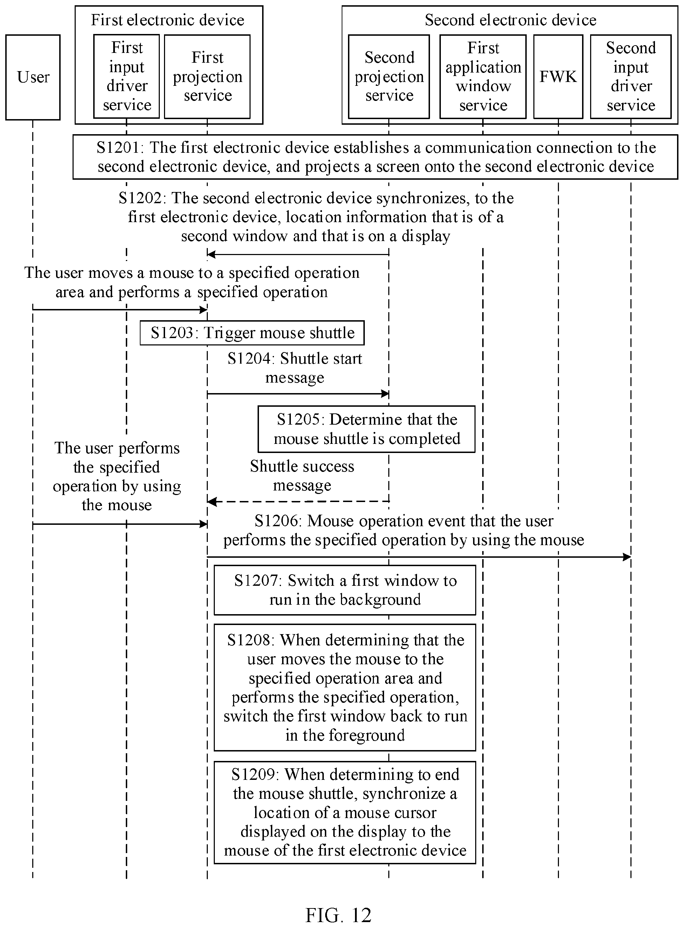

FIG. 12 is a schematic flowchart of an inter-device control method according to an embodiment of this application;

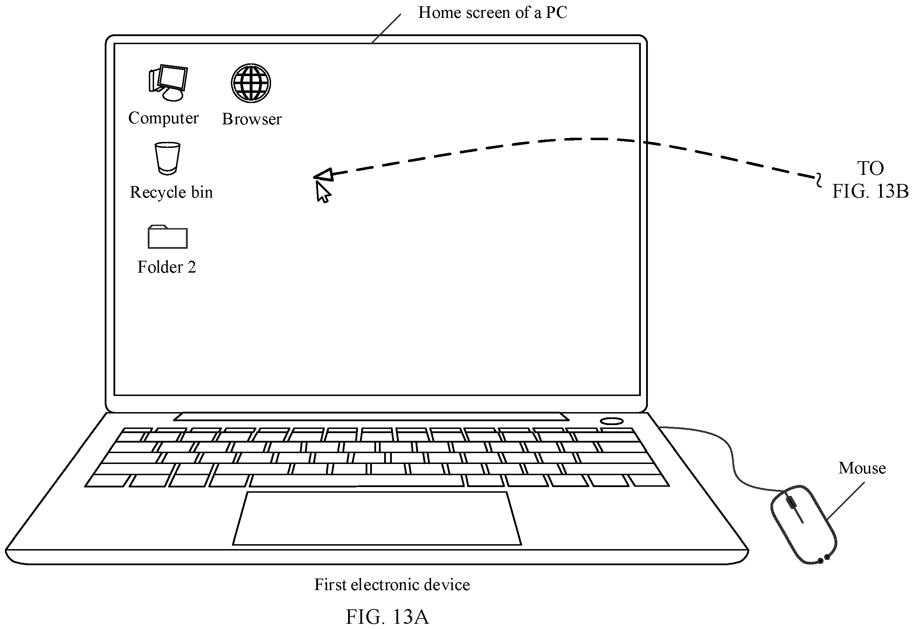

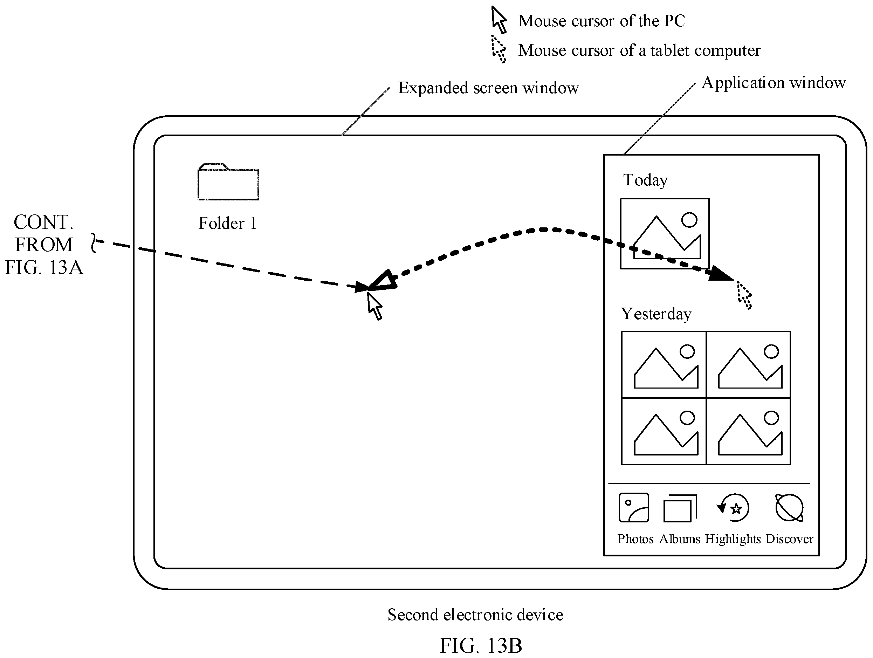

FIG. 13A and FIG. 13B are example diagrams of a screen collaboration system according to an embodiment of this application;

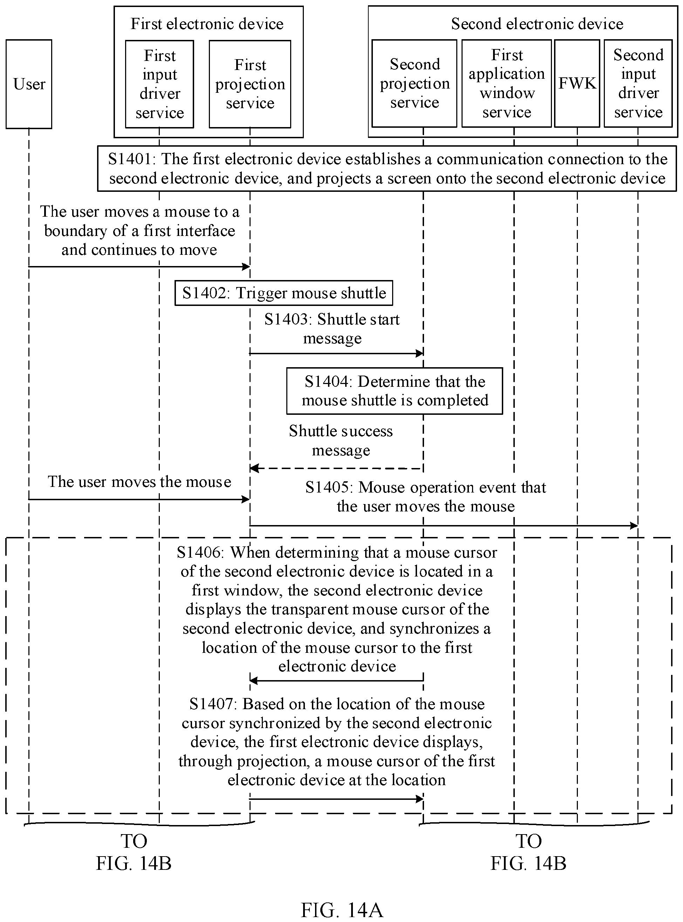

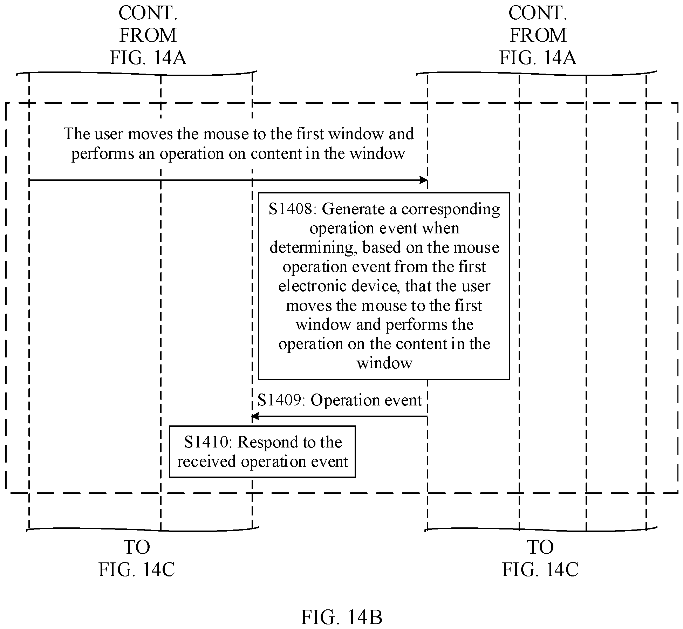

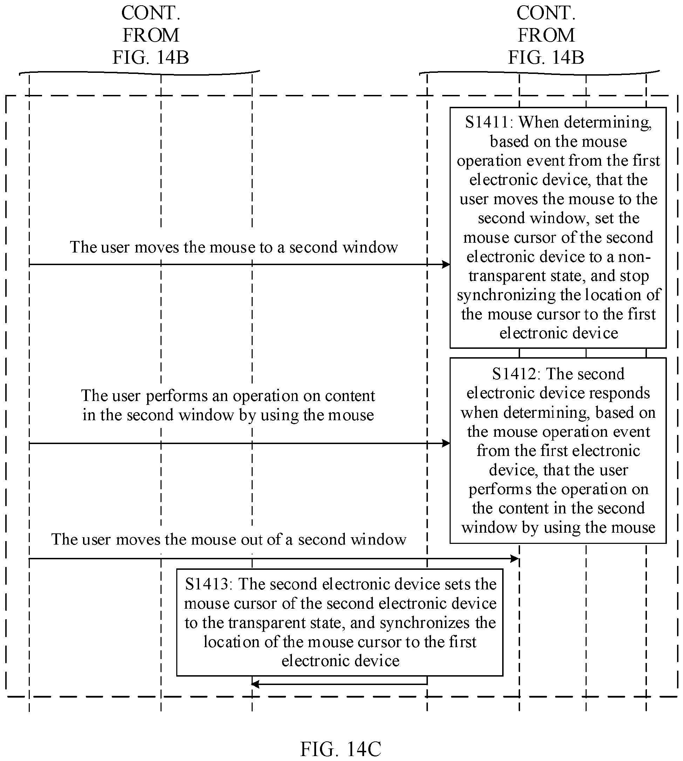

FIG. 14A, FIG. 14B, and FIG. 14C are a schematic diagram of an inter-device control method according to an embodiment of this application;

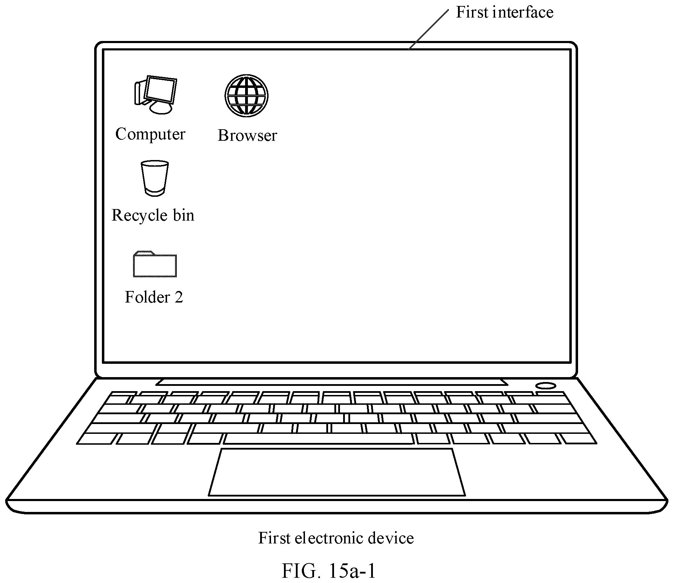

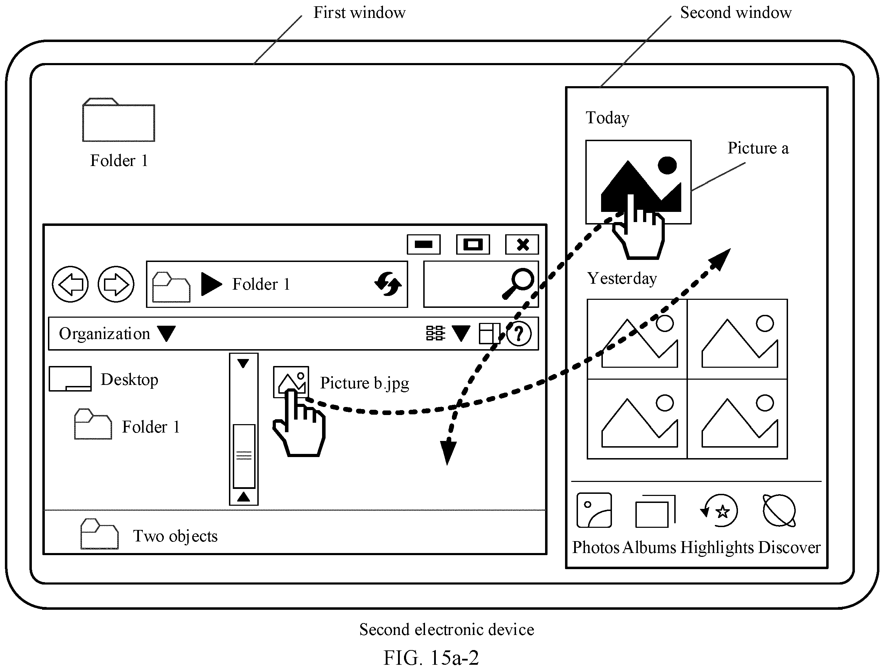

FIG. 15a-1 and FIG. 15a-2 are example diagrams of a screen collaboration system according to an embodiment of this application;

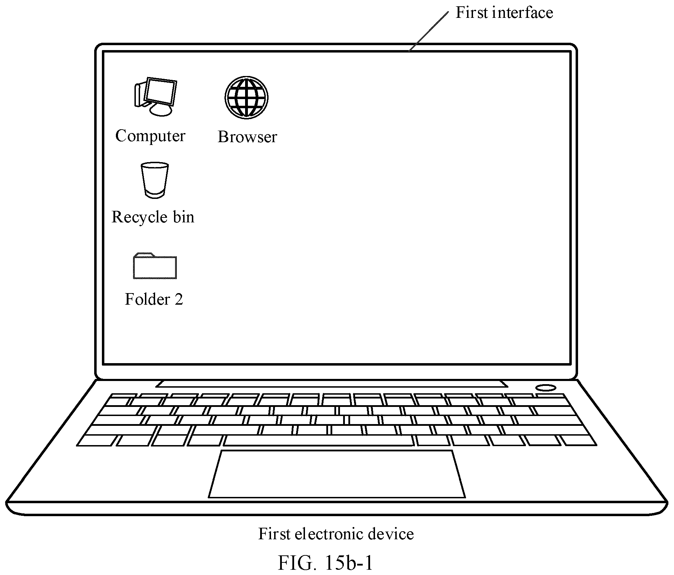

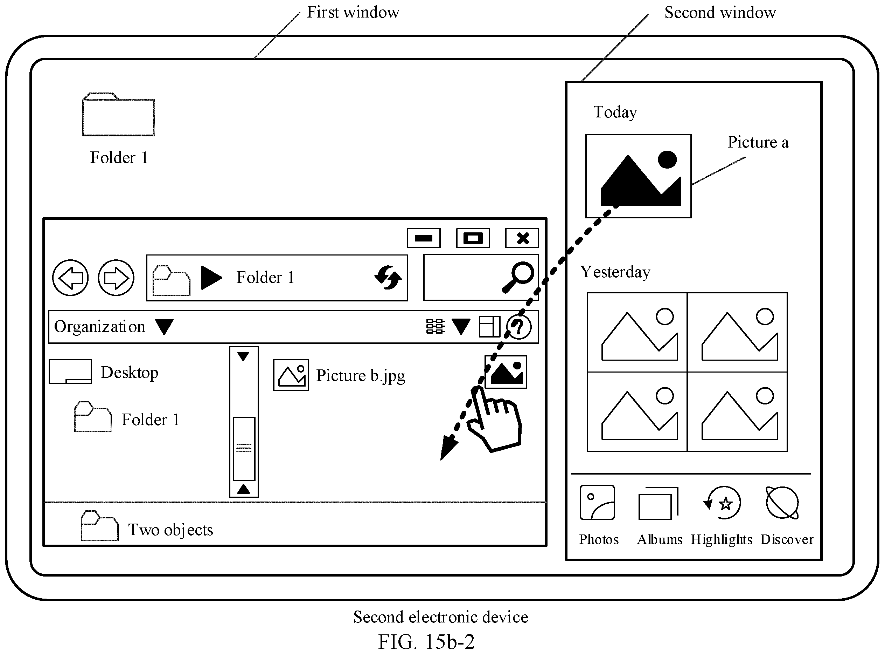

FIG. 15b-1 and FIG. 15b-2 are example diagrams of a screen collaboration system according to an embodiment of this application;

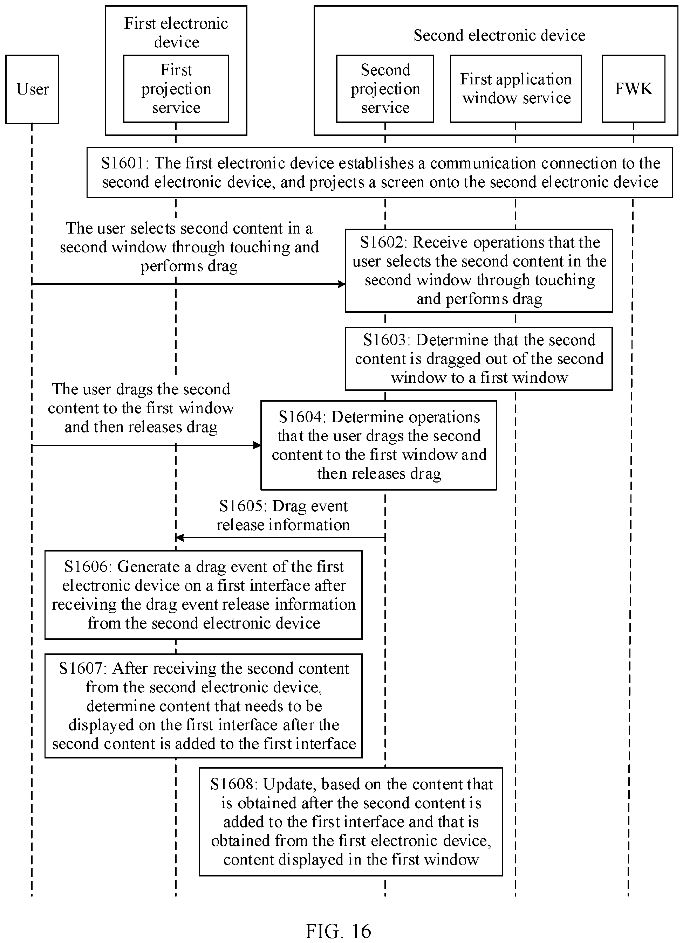

FIG. 16 is a schematic diagram of an inter-device content sharing method according to an embodiment of this application;

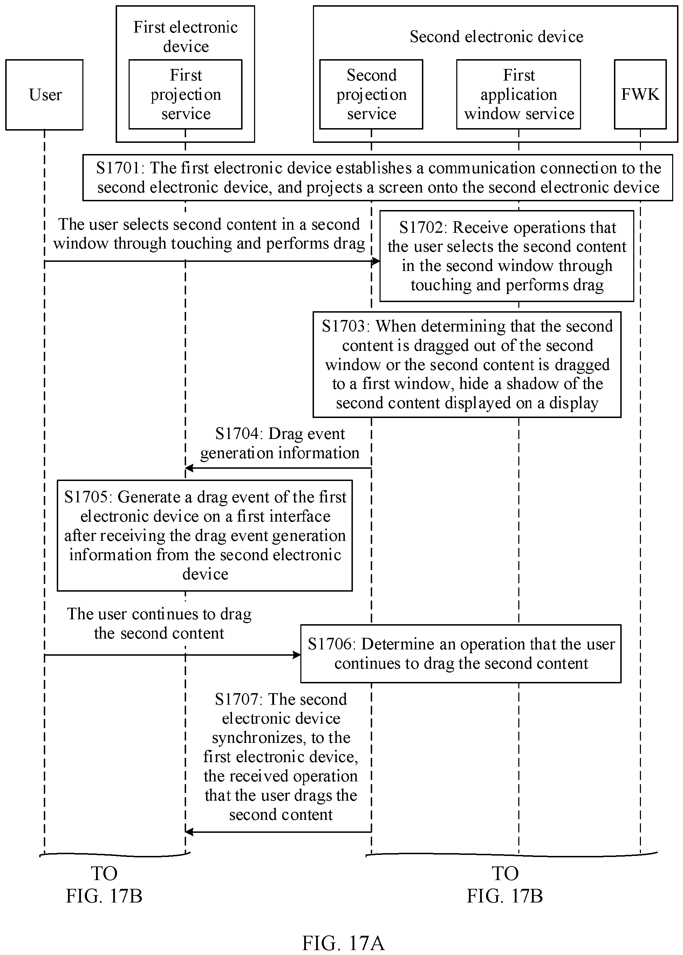

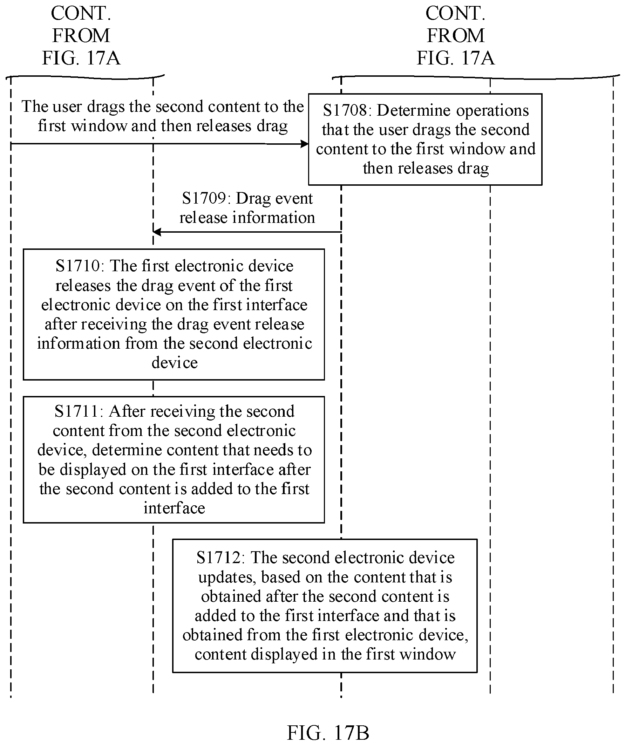

FIG. 17A and FIG. 17B are a schematic diagram of an inter-device content sharing method according to an embodiment of this application;

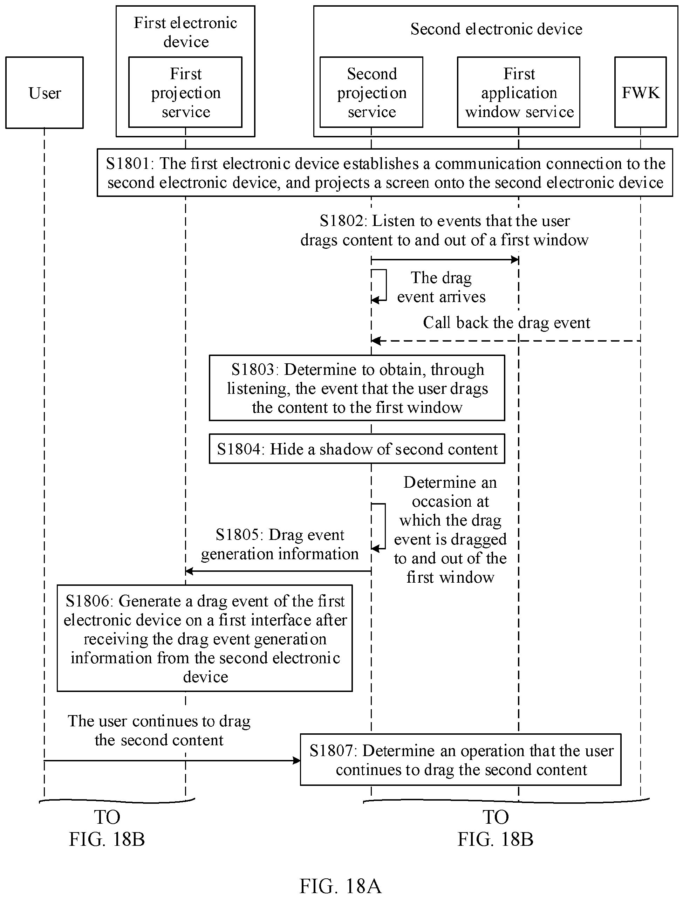

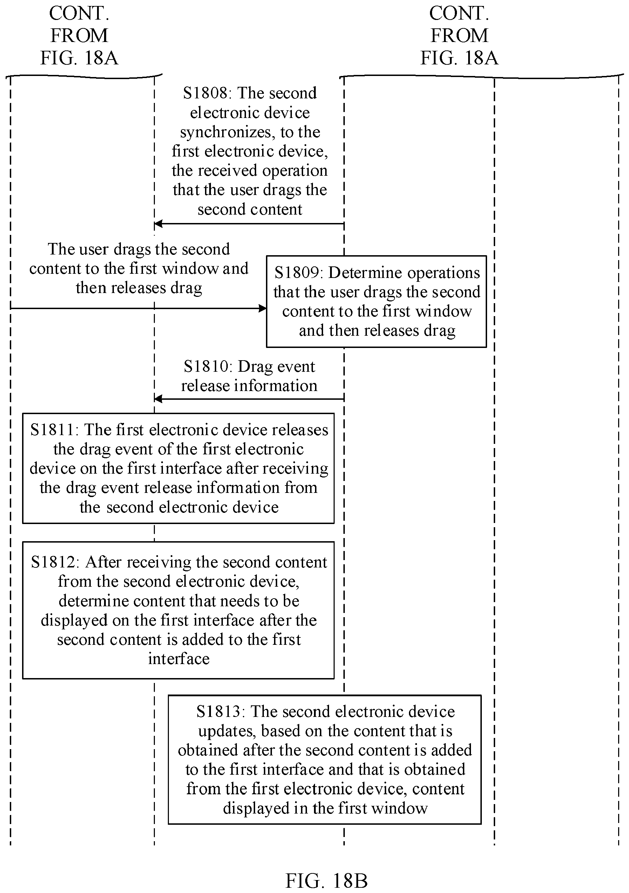

FIG. 18A and FIG. 18B are a schematic diagram of an inter-device content sharing method according to an embodiment of this application;

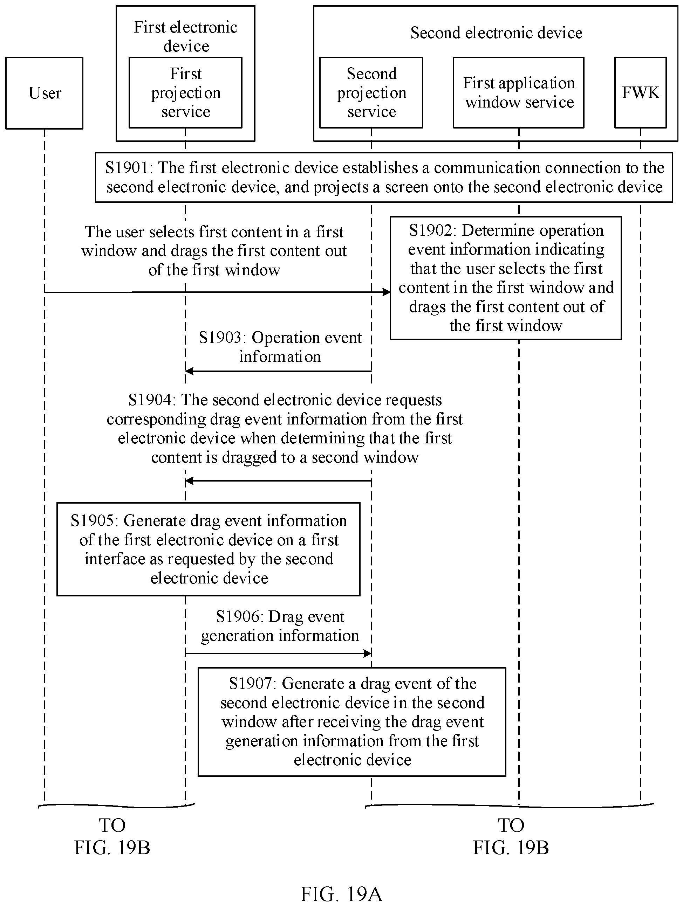

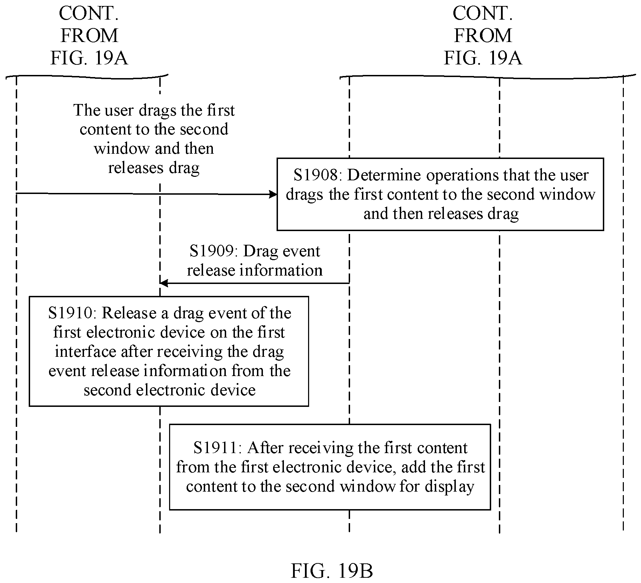

FIG. 19A and FIG. 19B are a schematic diagram of an inter-device content sharing method according to an embodiment of this application;

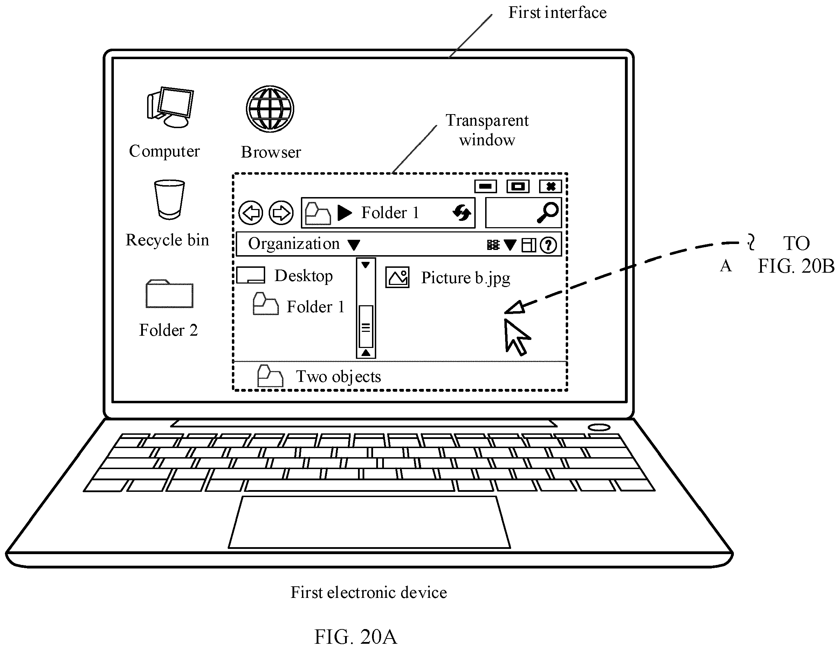

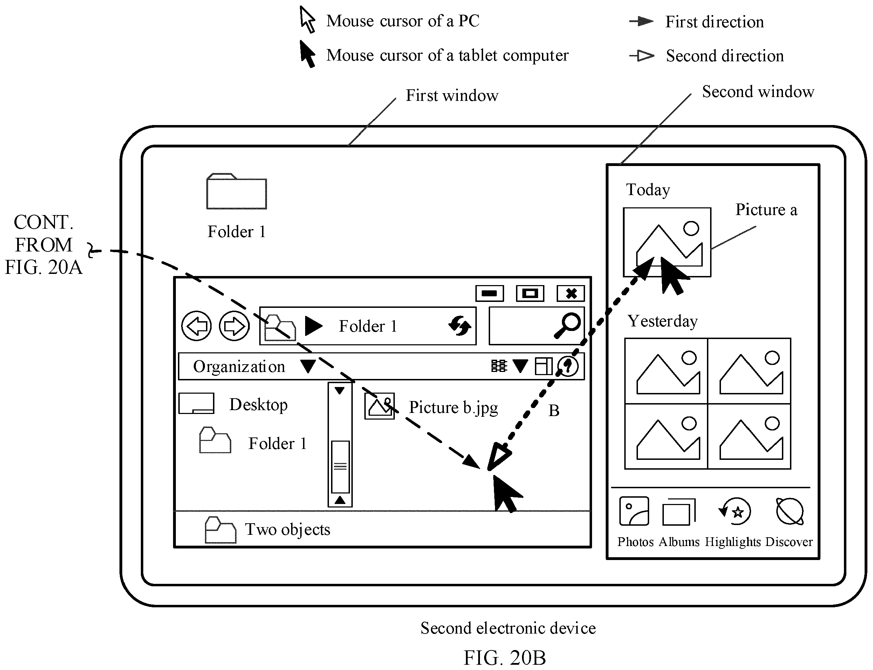

FIG. 20A and FIG. 20B are example diagrams of a screen collaboration system according to an embodiment of this application;

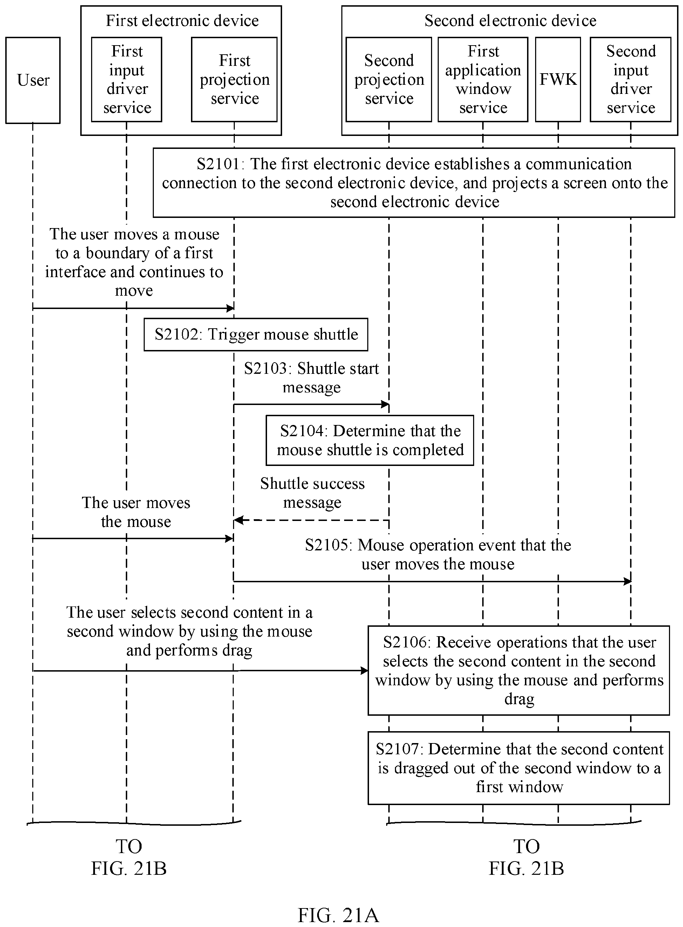

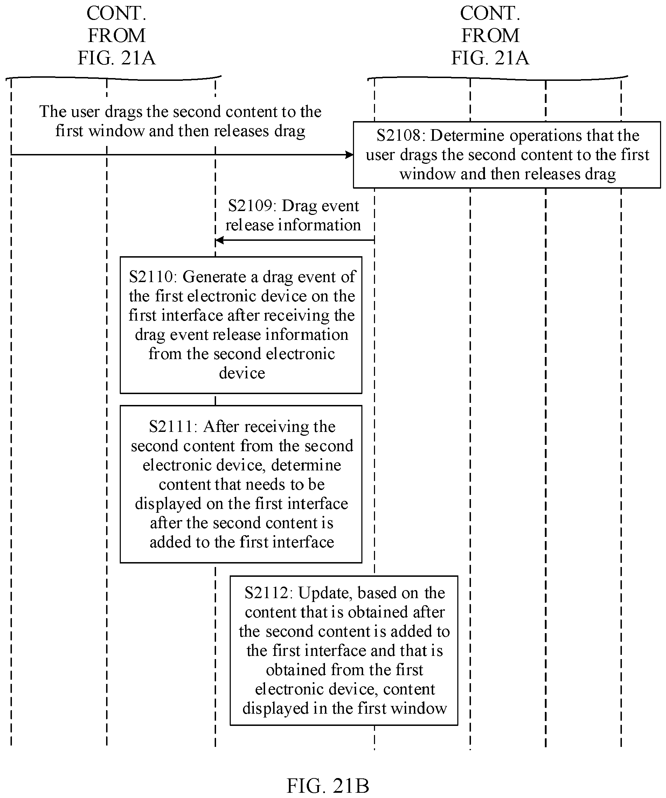

FIG. 21A and FIG. 21B are a schematic diagram of an inter-device content sharing method according to an embodiment of this application;

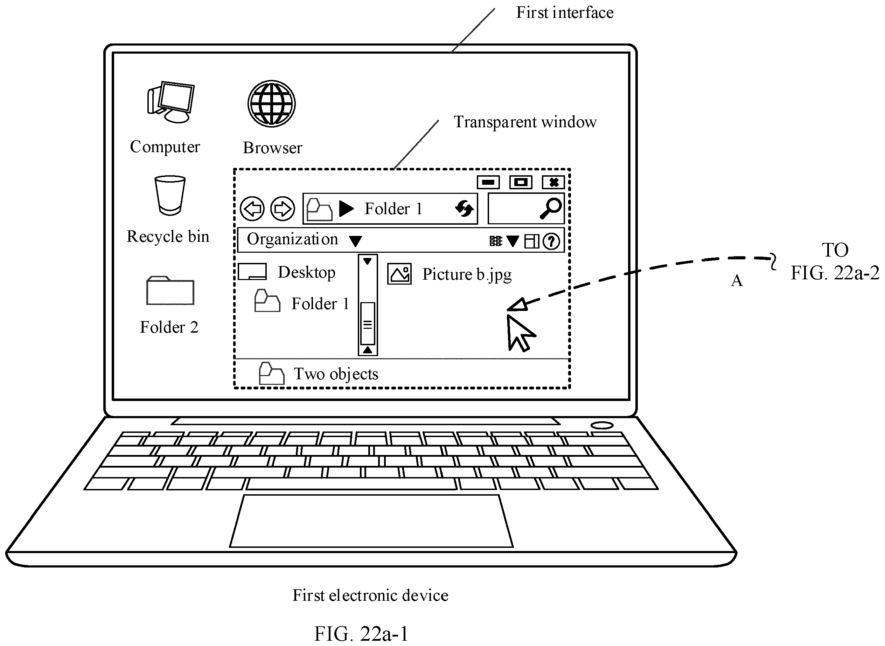

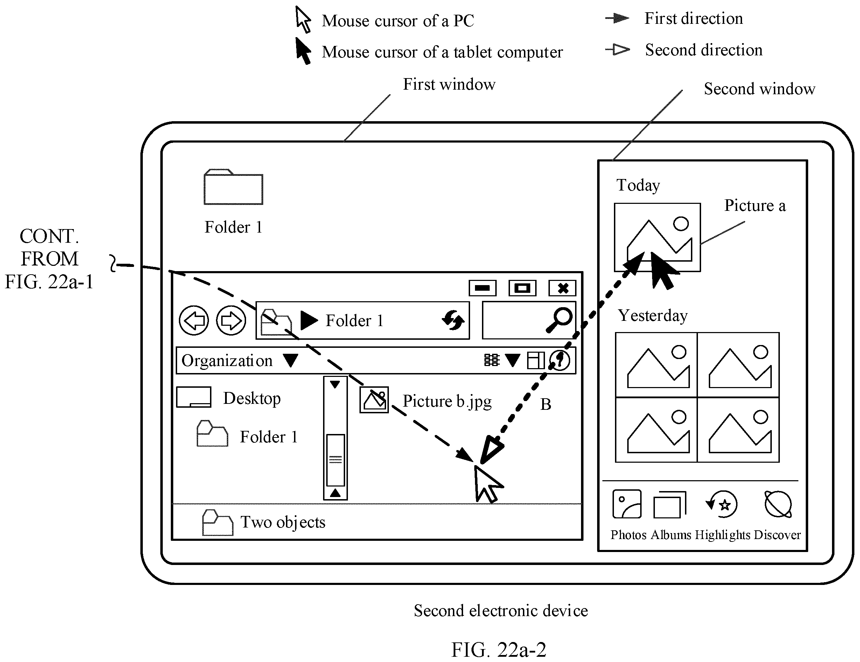

FIG. 22a-1 and FIG. 22a-2 are example diagrams of a screen collaboration system according to an embodiment of this application;

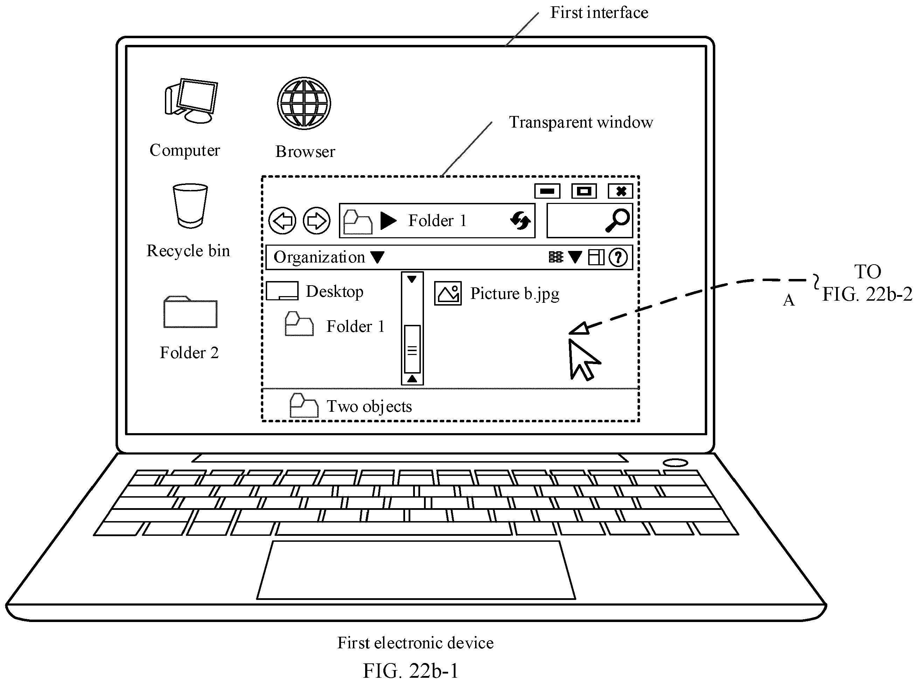

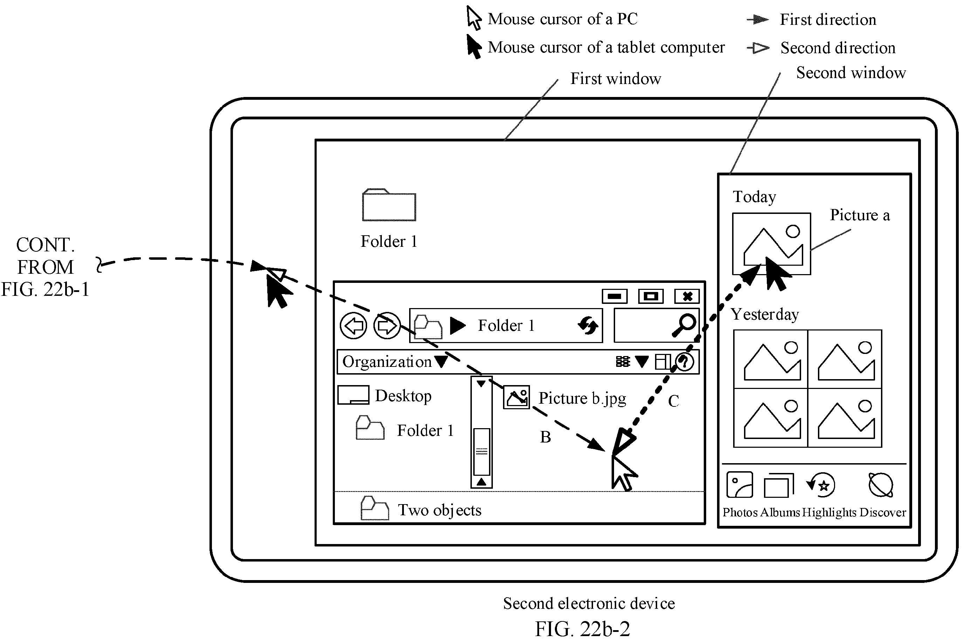

FIG. 22b-1 and FIG. 22b-2 are example diagrams of a screen collaboration system according to an embodiment of this application;

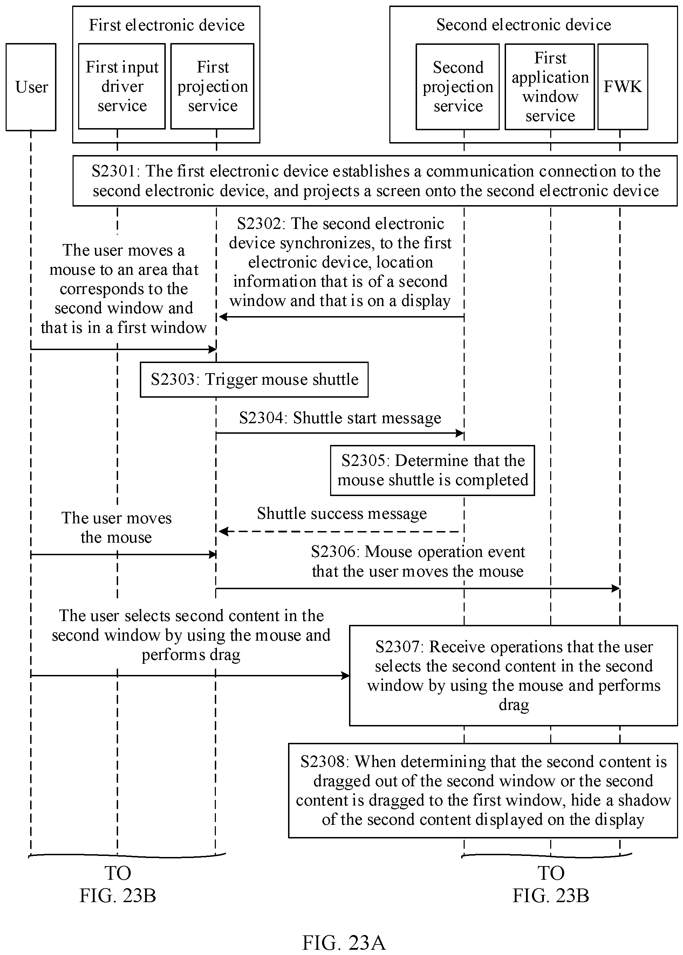

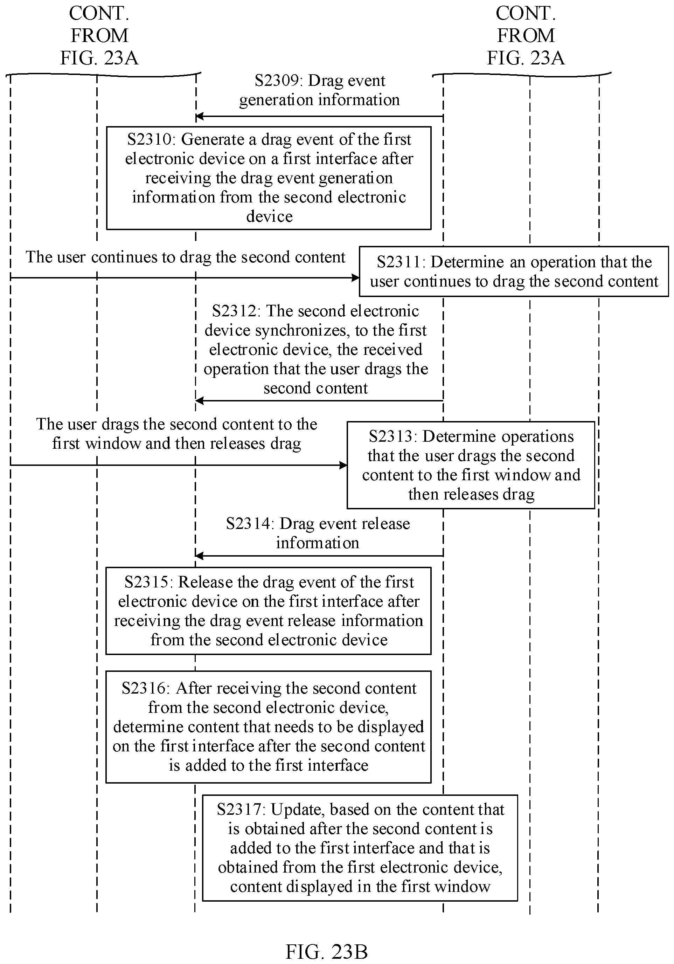

FIG. 23A and FIG. 23B are a schematic diagram of an inter-device content sharing method according to an embodiment of this application;

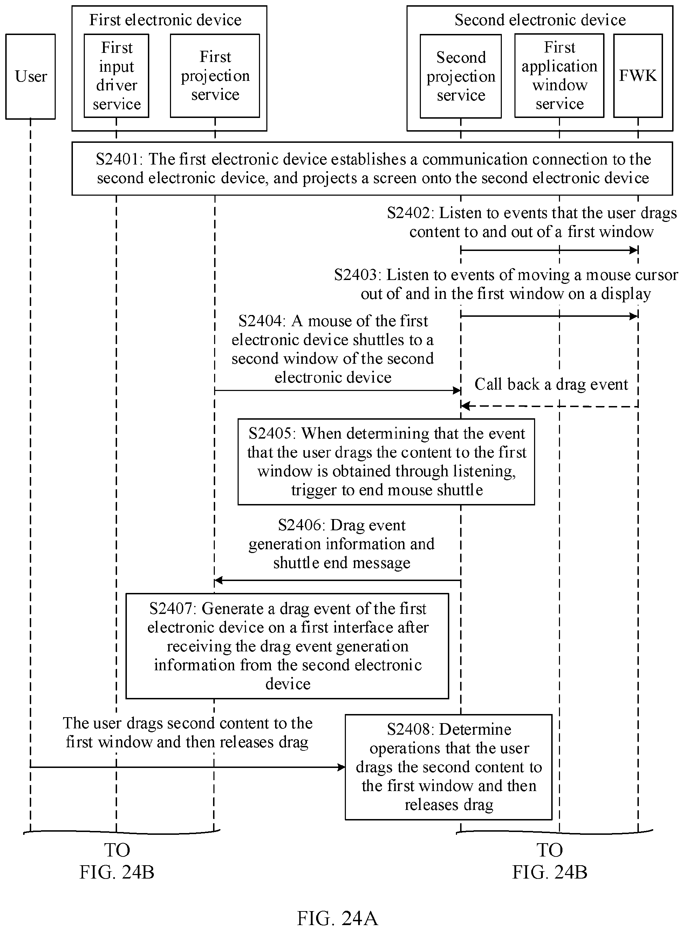

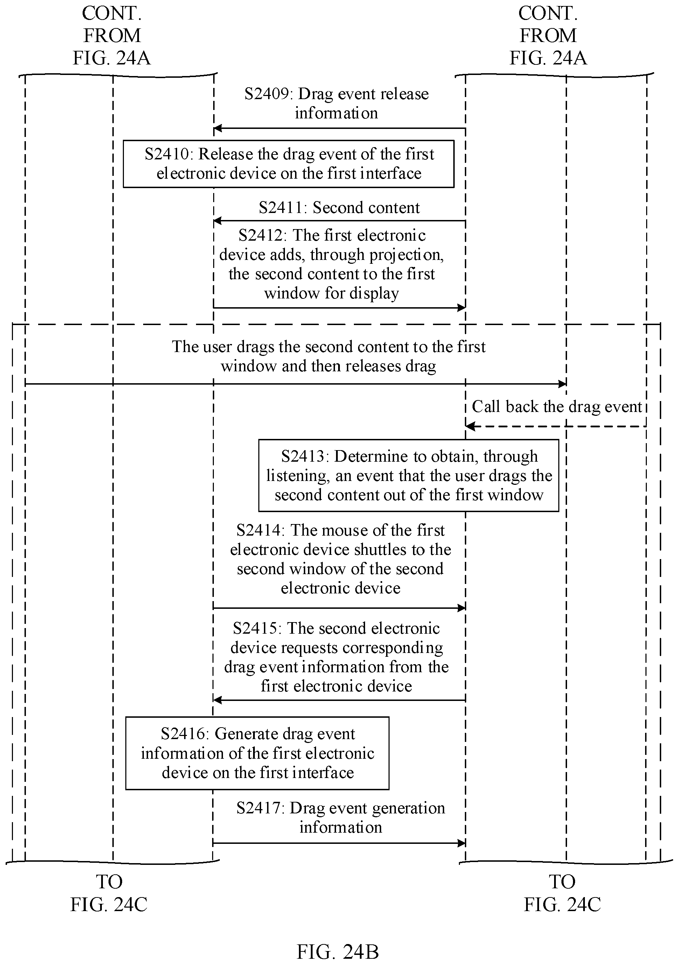

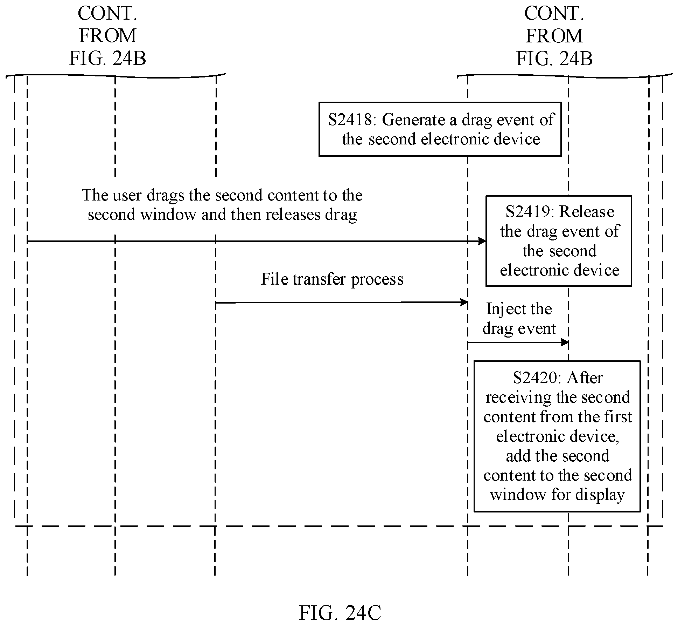

FIG. 24A, FIG. 24B, and FIG. 24C are a schematic diagram of an inter-device content sharing method according to an embodiment of this application;

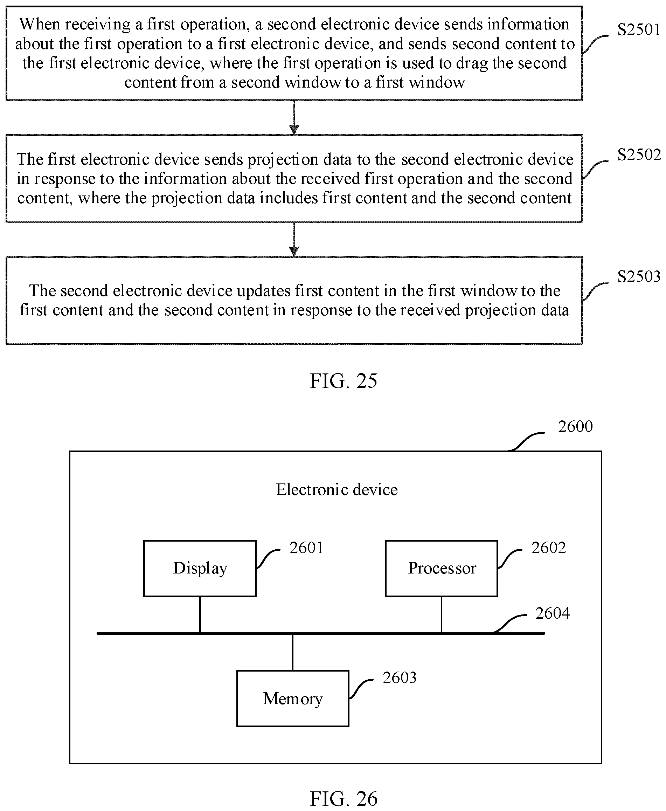

FIG. 25 is a schematic diagram of a cross-device content sharing method according to an embodiment of this application; and
FIG. 26 is a schematic diagram of an electronic device according to an embodiment of this application.

### DESCRIPTION OF EMBODIMENTS

To make the objectives, technical solutions, and advantages of embodiments of this application clearer, the following further describes embodiments of this application in detail with reference to the accompanying drawings. In descriptions of embodiments of this application, the terms "first" and "second" mentioned below are merely intended for a purpose of description, and shall not be understood as an indication or implication of relative importance or implicit indication of the number of indicated technical features. Therefore, a feature restricted by "first" or "second" may explicitly or implicitly include one or more features.

For ease of understanding, descriptions of concepts related to embodiments of this application are provided as examples for reference, as shown in the following:
(1) An electronic device is a device with a display. The electronic device in embodiments of this application may be a portable device like a mobile phone, a tablet computer, a wearable device with a display function and a wireless communication function, a vehicle-mounted terminal device, an augmented reality (augmented reality, AR) device/a virtual reality (virtual reality, VR) device, a notebook computer, a personal computer (personal computer, PC), a netbook, and a personal digital assistant (personal digital assistant, PDA), and a smart device like a smart home device (for example, a smart television).
   In embodiments of this application, the electronic device may alternatively be a portable terminal device that further includes another function, for example, a personal digital assistant and/or a picture display function. An example embodiment of the portable terminal device includes but is not limited to a portable terminal device using iOS^{®}, Android^{®}, Microsoft^{®}, or another operating system. The portable terminal device may alternatively be another portable terminal device, for example, a laptop (laptop) with a display. It should be further understood that, in embodiments of this application, the electronic device may alternatively be not a portable terminal device, but a desktop computer with a display.
(2) Screen collaboration, also referred to as multi-screen collaboration, projection, simultaneous display, screen mirroring, and screen sharing, means that a picture output and displayed on screen a of a device A (for example, a mobile phone, a tablet computer, a notebook computer, or a computer) is displayed on a set area of a screen b of a device B (for example, a tablet computer, a notebook computer, a computer, a television, an all-in-one machine, or a projector) in real time. In addition, a picture change of the screen a caused by operating the device A is synchronously displayed on the set area of the screen b. Optionally, in some scenarios, a picture change of the set area of the screen b caused by operating the set area of the screen b of the device B by a user is also synchronously displayed on the picture of the screen a.
(3) An external device, briefly referred to as a "peripheral device", is a device connected outside a host of a computer system, and generally includes an external input device, an external output device, and an external memory. The external device is an important part of the computer system, and plays the role of information transmission, transfer and storage. In embodiments of this application, the external input device may include a keyboard, a mouse, a pen input device (for example, a stylus), and the like.
(4) An application (application, app), also referred to as an application, is a software program that can implement one or more specific functions. Generally, a plurality of applications may be installed in an electronic device, for example, a camera application, a short message application, and a browser application. The application mentioned in embodiments may be an application installed before delivery of the electronic device, or may be an application downloaded from a network or obtained from another electronic device by a user in a process of using the electronic device.

In addition, content in embodiments of this application may be an application, a file, a text, or the like. For example, the file may be a multimedia file, and the multimedia file may include an image file, a video file, an audio file, a text file (for example, a Word file, an Excel file, or a PowerPoint file), and a web page file. The text can be a segment of text selected in the text file.

It should be understood that, in embodiments of this application, "at least one" means one or more, and "a plurality of means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally represents an "or" relationship between the associated objects. "At least one of the following" or a similar expression indicates any combination of these items, including any combination of single items or a plurality of items. For example, at least one of a, b, or c may indicate a, b, c, a and b, a and c, b and c, or a, b, and c, where a, b, and c may be singular or plural.

An embodiment of this application provides a cross-device content sharing method, to perform content sharing between electronic devices on which screen collaboration is established, and implement flexible control of content sharing between the electronic devices.

With reference to the accompanying drawings, the following describes the cross-device content sharing method provided in embodiments of this application.

An embodiment of this application provides a screen collaboration system. The system includes a plurality of electronic devices that includes at least a first electronic device and a second electronic device. The second electronic device may be any electronic device in at least one electronic device that establishes inter-device screen collaboration with the first electronic device. In other words, the first electronic device is a device that initiates projection, and the second electronic device is a device that accepts projection.

Screen collaboration between the first electronic device and the second electronic device may be any one of the following cases:
Case 1: The first electronic device may project content displayed on a display of the first electronic device onto a display of the second electronic device for display, and the display of the second electronic device is used as a mirror screen of the display of the first electronic device.
Case 2: The first electronic device may project content displayed on a virtual display of the first electronic device onto a display of the second electronic device for display, and the display of the second electronic device is used as an expanded screen of a display of the first electronic device. For the electronic device, when the electronic device is connected to a physical display, one configured display may be viewed in a display setting of a system. In this case, when the electronic device is connected to another physical display, two configured displays may be viewed in the display setting of the system. The two displays may display content in a mirroring (copying) mode or an expanded mode. In other words, content displayed on the two displays may be the same or may be different. Based on a display mode of the two displays, in embodiments of this application, when the first electronic device displays the content on the display of the first electronic device, the first electronic device may drive another virtual display to serve as a second display of the first electronic device. When the virtual display works, it means that a new display is added for the user. The virtual display can construct a virtual display to display content, and can control a location at which the content is displayed on the virtual display. For example, the displayed content is projected onto another electronic device for display, so that the user can view the content.

In the screen collaboration system, after the first electronic device projects a screen onto the second electronic device, the second electronic device generates a projection window on the display of the second electronic device. The projection window is used to display content projected by the first electronic device. The second electronic device may display an application window of the second electronic device on the display, and display local content of the second electronic device in the application window.

Optionally, the screen collaboration system may further include a third electronic device. When displaying, in the projection window, the content projected by the first electronic device, the second electronic device may simultaneously display, on the display, an application window projected by the third electronic device, and display, in the application window, projection content from the third electronic device. Optionally, the application window is used to display an interface displayed after an application is opened.

An area that is occupied by the projection window displayed on the second electronic device and that is on the display may be an entire display of the second electronic device, or may be a part of an area on the display.

The content projected by the first electronic device onto the second electronic device may be all content currently displayed on the display of the first electronic device, or all content displayed on the virtual display. For example, the content may include a desktop interface of the first electronic device, or include a desktop interface of the first electronic device and an application interface displayed after an application on a desktop is opened.

Specifically, a first interface is displayed on the display of the first electronic device, and the first interface may include all content displayed on the display. Optionally, the first electronic device may further display a second interface on the virtual display, and the second interface may include all to-be-displayed content except the content displayed on the display. A third interface is displayed on the display of the second electronic device, and the third interface may include a first window and a second window. The first window is used to display the content projected by the first electronic device onto the second electronic device, and content in the first window may be the content in the first interface, or may be the content in the second interface. The second window is used to display content displayed after a local application of the second electronic device is opened, or the second window is used to display content projected by the third electronic device onto the second electronic device. For example, the content in the second window may be content displayed after an application in the third electronic device is opened.

For example, the first electronic device is a PC, the second electronic device is a tablet computer, and the third electronic device is a mobile phone. As shown in FIG. 1a-1 and FIG. 1a-2, a first interface is displayed on a display of the PC, and content included in the first interface may be a PC desktop and an application icon on the PC desktop. A first window and a second window are displayed on a display of the tablet computer. The first window may be used as an expanded screen of the PC, a second interface of the PC is displayed in the first window, and content included in the second interface may be an expanded desktop of the PC desktop and some application icons on the expanded desktop. Content included in the second window may be a gallery interface projected by the mobile phone (not shown in the figure) onto the tablet computer.

An interface or a window on a plurality of layers on the display of the first electronic device may also be displayed in the first window. For example, as shown in FIG. 1b-1 and FIG. 1b-2, after an application "folder 1" on the expanded desktop of the PC desktop is opened, the expanded desktop of the PC desktop and an application interface displayed after the application "folder 1" is opened may be displayed in the first window.

For another example, the first electronic device is a PC, the second electronic device is a tablet computer, and the third electronic device is a mobile phone. As shown in FIG. 1c-1 and FIG. 1c-2, a first interface is displayed on a display of the PC, and content included in the first interface may be an application icon on a PC desktop. A first window and a second window are displayed on a display of the tablet computer. The first window may be used as a mirror screen of the PC, and content included in the first window is the same as the content included in the first interface. Content included in the second window may be a local gallery interface of the tablet computer. An interface or a window on a plurality of layers may also be displayed in the display of the PC. For example, the interface may be a PC desktop shown in FIG. 1d-1 and an application interface displayed after a "folder 2" on the PC desktop is opened. In this case, the PC desktop and the application interface displayed after the application "folder 2" is opened are also displayed in the first window.

In embodiments of this application, in a plurality of windows displayed by the second electronic device, the windows may be displayed hierarchically, or may be displayed by partition, or some windows are in a hierarchical display relationship, and some windows are in a partition display relationship. For example, as shown in FIG. 1b-1 and FIG. 1b-2 or FIG. 1d-1 and FIG. 1d-2, a display area of the first window displayed by the second electronic device may be an entire area of the display of the second electronic device, and a display area of the second window may be a part of a display area of the display of the second electronic device. A layer on which the second window is located is above a layer on which the first window is located.

It should be noted that, in the accompanying drawings in embodiments of this application, locations, areas, and the like of interfaces or windows displayed on the first electronic device or the second electronic device are merely examples. For example, locations, sizes, and the like of windows on the second electronic device may be set by the user, and may be further changed after being set. For example, the user may drag a window to change a location of the window on a display. In addition, the user may adjust a size of the window, to change a display area of the window. In addition, in embodiments of this application, the first electronic device projects the first interface or the second interface onto the second electronic device. When the first interface or the second interface is displayed in the first window, a size of the first window is correspondingly proportional to a size of the first interface or the second interface.

In embodiments of this application, the first electronic device can wirelessly communicate with the second electronic device. Optionally, the first electronic device and the second electronic device may access a same local area network. For example, the first electronic device and the second electronic device may establish a wireless connection to a same wireless access point. For another example, the first electronic device and the second electronic device may access a same wireless fidelity (wireless fidelity, Wi-Fi) hotspot. For another example, the first electronic device and the second electronic device may access a same Bluetooth beacon according to a Bluetooth protocol. The first electronic device and the second electronic device 102 may communicate with each other by using a short-range wireless communication technology like Bluetooth or Wi-Fi. In embodiments of this application, the first electronic device and the second electronic device may alternatively be connected in a wired manner and communicate with each other. Optionally, the first electronic device and the second electronic device may be connected through a data cable like a universal serial bus (universal serial bus, USB) data cable and communicate with each other. In embodiments of this application, the first electronic device and the second electronic device are smart devices with output and display functions, and may be, for example, a mobile phone, a tablet computer, a computer, or a smart television.

It should be noted that, in the following embodiments, the cross-device content sharing method provided in embodiments of this application is described by using an example in which the first electronic device in the screen collaboration system is the device that initiates projection and the second electronic device is the device that accepts projection.

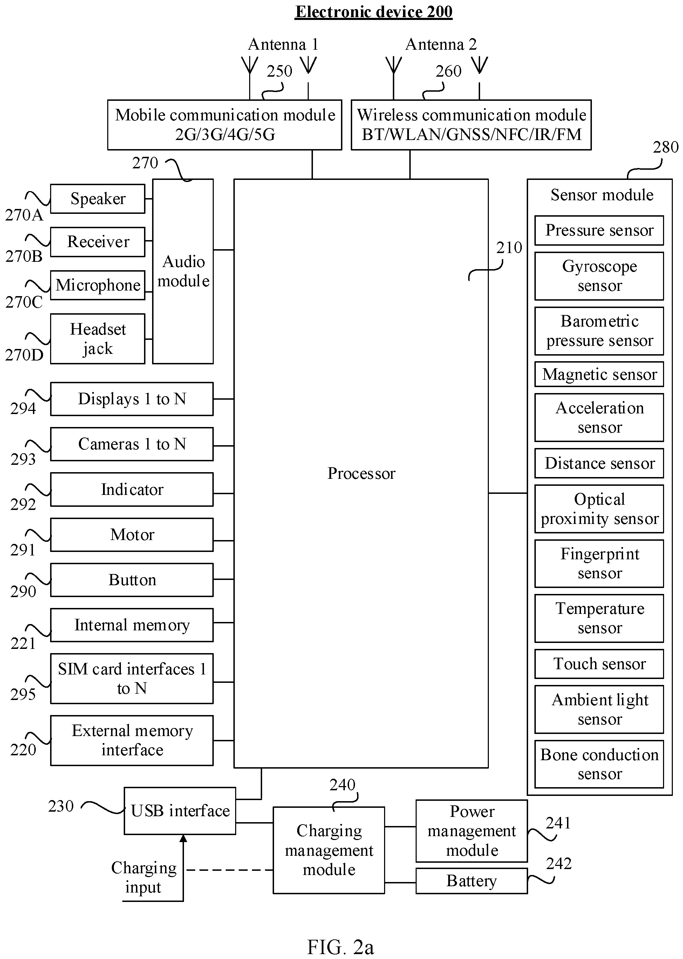

An embodiment of this application provides an electronic device. The electronic device and another electronic device may form a screen collaboration system, to implement the cross-device content sharing method provided in embodiments of this application. With reference to FIG. 2a, the following describes a structure of an electronic device according to an embodiment of this application.

As shown in FIG. 2a, an electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like.

It may be understood that the electronic device shown in FIG. 2a is merely an example, and does not constitute limitation on the electronic device. The electronic device may include more or fewer components than those shown in the figure, or two or more components may be combined, or different component configurations may be used. Components shown in FIG. 2a may be implemented by hardware, software, or a combination of hardware and software that includes one or more signal processing and/or application-specific integrated circuits.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent devices, or may be integrated into one or more processors. The controller may be a nerve center and a command center of the electronic device 200. The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

Execution of the cross-device content sharing method provided in embodiments of this application may be controlled by the processor 210 or completed by invoking another component. For example, a processing program in embodiments of this application stored in the internal memory 221 is invoked, to control the wireless communication module 260 to perform data communication with another electronic device, so as to implement cross-device data transmission and content sharing. This improves collaborative control efficiency of the electronic device, and improves user experience. The processor 210 may include different components. For example, when a CPU and a GPU are integrated, the CPU and the GPU may cooperate to perform the cross-device content sharing method provided in embodiments of this application. For example, in the cross-device content sharing method, some algorithms are executed by the CPU, and other algorithms are executed by the GPU, to obtain high processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 294, where N is a positive integer greater than 1. The display 294 may be configured to display information input by a user or information provided to a user, and various graphical user interfaces (graphical user interfaces, GUIs). For example, the display 294 may display a photo, a video, a web page, a file, or the like. In addition, it may be understood that, in some embodiments, a status bar may further include a Bluetooth icon, a Wi-Fi icon, an icon of an external device, and the like. In some embodiments, after the processor 210 detects a touch event performed on an application icon by a user by using a finger (a stylus or the like), in response to the touch event, the processor 210 starts a user interface of an application corresponding to the application icon, and displays the user interface of the application on the display 294. In some embodiments, after detecting an operation event of tapping an application icon by using an external input device (for example, a mouse) of the electronic device 200, the processor 210 performs a corresponding control operation on the application in response to the operation event.

In embodiments of this application, the display 294 may be one integrated flexible display, or may be a spliced display including two rigid screens and one flexible screen located between the two rigid screens. After the processor 210 runs the cross-device content sharing method provided in embodiments of this application, the processor 210 may control the display 294 to display a related result.

The camera 293 (which may be a front-facing camera, a rear-facing camera, or a camera that may serve as both a front-facing camera and a rear-facing camera) is configured to capture a static image or a video. Usually, the camera 293 may include a photosensitive element like a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code, and the computer-executable program code includes instructions. The processor 210 executes various function applications and data processing of the electronic device 200 by running the instructions stored in the internal memory 221. The internal memory 221 may include a program storage area and a data storage area. The program storage area may store an operating system, code of an application (for example, a cross-device data transmission function, or a cross-device data transmission function), and the like. The data storage area may store data (for example, data that needs to be shared when the cross-device content sharing method provided in embodiments of this application is performed) and the like created when the electronic device 200 is used.

The internal memory 221 may further store one or more computer programs corresponding to an algorithm of the cross-device content sharing method provided in embodiments of this application. The one or more computer programs are stored in the internal memory 221 and are configured to be executed by one or more processors 210. The one or more computer programs include instructions, and the instructions may be used to perform steps in the foregoing embodiments.

In addition, the internal memory 221 may include a high-speed random access memory, and may further include a nonvolatile memory, for example, at least one magnetic disk storage device, a flash memory device, or a universal flash storage (universal flash storage, UFS).

Certainly, algorithm code of the cross-device content sharing method provided in embodiments of this application may be further stored in an external memory. In this case, the processor 210 may run, through the external memory interface 220, code of a cross-device data transmission algorithm stored in the external memory.

The sensor module 280 may include a fingerprint sensor, a touch sensor, a pressure sensor, a magnetic sensor, an ambient light sensor, a barometric pressure sensor, a bone conduction sensor, and the like.

The touch sensor is also referred to as a "touch panel". The touch sensor may be disposed on the display 294. The touch sensor is configured to detect a touch operation performed on or near the touch sensor. The touch sensor may transfer the detected touch operation to the application processor to determine a type of a touch event. A visual output related to the touch operation may be provided on the display 294. In some other embodiments, the touch sensor may alternatively be disposed on a surface of the electronic device 200, or disposed in a location different from the display 294.

A wireless communication function of the electronic device 200 may be implemented through the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that is applied to the electronic device 200 and that includes 2G, 3G, 4G, and 5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering and amplification on the received electromagnetic wave, and transmit the electromagnetic wave to the modem processor for demodulation. The mobile communication module 250 may further amplify a signal modulated by the modem processor, and convert the signal into an electromagnetic wave through the antenna 1 for radiation. In some embodiments, at least some functional modules of the mobile communication module 250 may be disposed in the processor 210. In some embodiments, at least some functional modules in the mobile communication module 250 may be disposed in a same component as the at least some modules in the processor 210. In embodiments of this application, the mobile communication module 250 may be further configured to exchange information with another electronic device, for example, send user operation information and to-be-shared content to the another electronic device, or the mobile communication module 250 may be configured to receive user operation information and to-be-shared content that are sent by another electronic device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio apparatus (which is not limited to the speaker 270A, the receiver 270B, or the like), or displays an image or a video on the display 294. In some embodiments, the modem processor may be an independent component. In some other embodiments, the modem processor may be independent of the processor 210, and is disposed in a same device as the mobile communication module 250 or another functional module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processing module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert a processed signal into an electromagnetic wave through the antenna 2 for radiation. In embodiments of this application, the wireless communication module 260 is configured to establish a communication connection to another electronic device to perform data exchange. Alternatively, the wireless communication module 260 may be configured to access an access point device, and send a related instruction, data, and the like to another electronic device.

The electronic device 200 may implement an audio function, for example, music playing and recording, by using the audio module 270, the speaker 270A, the receiver 270B, the microphone 270C, the headset jack 270D, the application processor, and the like. The electronic device 200 may receive an input of the button 290, and generate a button signal input related to a user setting and function control of the electronic device 200. The electronic device 200 may generate a vibration prompt (for example, an incoming call vibration prompt) by using the motor 291. The indicator 292 in the electronic device 200 may be an indicator, and may be configured to indicate a charging status and a power change, or may be configured to indicate a message, a missed call, a notification, or the like. The SIM card interface 295 in the electronic device 200 is configured to connect to a SIM card. The SIM card may be inserted into the SIM card interface 295 or removed from the SIM card interface 295, to implement contact with or separation from the electronic device 200.

It should be understood that, in an actual application, the electronic device 200 shown in FIG. 2a is merely an example, and the electronic device 200 may have more or fewer components than those shown in FIG. 2a, or two or more components may be combined, or different component configurations may be used. Components shown in the figure may be implemented by hardware, software, or a combination of hardware and software that includes one or more signal processing and/or application-specific integrated circuits.

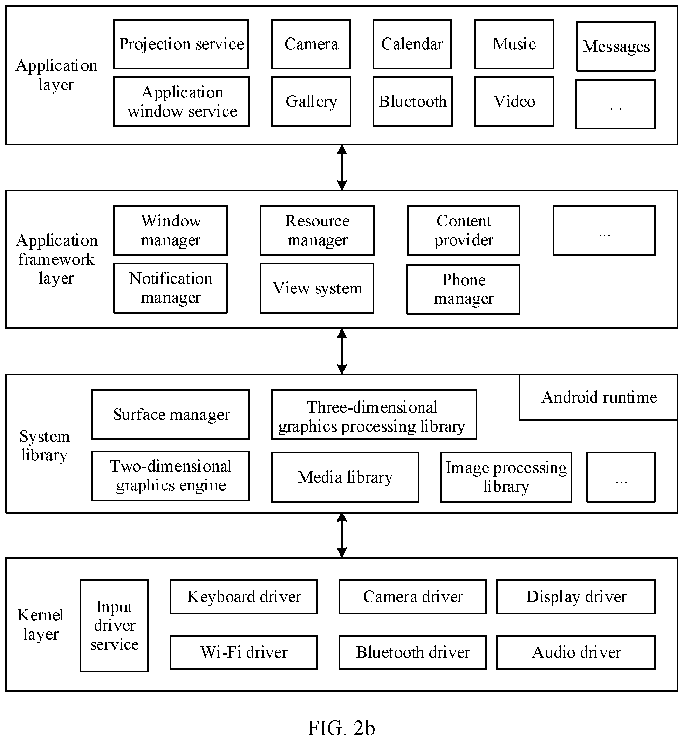

In the electronic device 200 provided in embodiments of this application, a software system of the electronic device 200 may use a layered architecture, an event-driven architecture, a microkernel architecture, a microservice architecture, or a cloud architecture. In embodiments of this application, an Android system with a layered architecture is used as an example to describe a software structure of the electronic device shown in FIG. 2b.

In the layered architecture, software is divided into several layers, and each layer has a clear role and task. The layers communicate with each other through a software interface. As shown in FIG. 2b, the software architecture may be divided into four layers: an application layer, an application framework (framework, FWK) layer, an Android runtime and system library, and a Linux kernel layer from top to bottom.

The application layer is a top layer of an operating system and includes native applications of the operating system, such as Camera, Gallery, Calendar, Bluetooth, Music, Video, and Messages. An application in embodiments of this application is briefly referred to as an application (application, APP), and is a software program that can implement one or more specific functions. Usually, a plurality of applications may be installed in the electronic device, for example, a camera application, a mailbox application, and a smart home device control application. An application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a kernel layer) of an operating system by using the application framework, to develop an application of the developer.

The application framework layer provides an API and a programming framework for an application of the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include information such as a file (for example, a document, a video, an image, or an audio) and a text.

The view system includes a visual control, for example, a control for displaying content such as a text, a picture, and a document. The view system may be configured to construct an application. An interface in a display window may include one or more views. For example, a display interface including a messages notification icon may include a text display view and an image display view. The phone manager is configured to provide a communication function of the terminal device. The notification manager enables an application to display notification information in a status bar, and may be configured to convey a notification message. The notification manager may automatically disappear after a short pause without requiring a user interaction.

In some embodiments, the application layer may include a projection service for managing, in a screen collaboration scenario, an interface or a window that is on a display and that is related to screen collaboration, for example, listening to user operation information that is related to the interface or the window and received by another software layer, controlling a display window on the display based on the user operation information obtained through listening, performing screen collaboration-related information interaction with a projection service of another electronic device, and obtaining to-be-displayed content in the interface or window.

In some embodiments, the application layer may further include an application window service for managing a local application window displayed on a display of an electronic device, or managing application windows projected by some specific electronic devices, for example, listening to user operation information that is related to the window and received by another layer, and controlling a display window on a display based on the user operation information obtained through listening.

The Android runtime includes a kernel library and a virtual machine. The Android runtime is responsible for scheduling and management of the Android system.

The kernel library of the Android system includes two parts: a function that needs to be called in Java language, and the kernel library of the Android system. The application layer and the application framework layer are run on the virtual machine. For example, the virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playing and recording of a plurality of common audio and video formats, static image files, and the like. The media library may support a plurality of audio and video encoding formats such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for 2D drawing.

The kernel (Kernel) layer provides core system services of the operating system, for example, security, memory management, process management, network protocol stack, and a driver model are implemented based on the kernel layer. The kernel layer is also used as an abstraction layer between hardware and software stacks. There are many drivers related to the electronic device on this layer, mainly including a display driver, a driver of a keyboard used as an input device, a flash driver based on a memory technology device, a camera driver, an audio driver, a Bluetooth driver, a Wi-Fi driver, and the like.

In some embodiments, the kernel layer may further include an input driver service for obtaining operation information that is related to an interface or a window displayed on a display and that is from an external input device (for example, a mouse, a keyboard, or a touchpad), a sensor (for example, a touchscreen or a touch sensor), or another electronic device, and reporting the operation information.

In some embodiments, the first electronic device and the second electronic device may be implemented by using the hardware architecture and the software architecture. For example, an application layer of the first electronic device may include a first projection service, and an application layer of the second electronic device may include a second projection service and a first application window service. The first projection service and the second projection service cooperate with each other to manage an interface or a window (for example, a first interface, a second interface, a first window, or a second window) related to screen collaboration between the first electronic device and the second electronic device. The first application window service is used to manage a local window displayed on the display of the second electronic device or a window (for example, the second window) projected by the third electronic device.

For example, the first projection service may be used to obtain content of a first interface displayed on the display of the first electronic device, or obtain a second interface displayed on the virtual display of the first electronic device, and project a screen onto the second electronic device in real time. The second projection service may be used to receive projection content from the first electronic device, and display the projection content in a generated first window.

In some embodiments, a kernel layer of the first electronic device may further include a first input driver service for receiving an operation event that the user controls the first electronic device. The operation event may be detected by the first electronic device or may be from another device, for example, may be detected by a sensor of the first electronic device, or may be from the external input device, or may be sent by the second electronic device. A kernel layer of the second electronic device may further include a second input driver service for receiving an operation event that the user controls the second electronic device. The operation event may be detected by the second electronic device or may be from another device, for example, may be detected by a sensor of the second electronic device, or may be from the external input device, or may be sent by the first electronic device or the third electronic device. The second driver service may be a virtual external input device enabled by the second electronic device.

For example, a touch sensor on the second electronic device may receive a touch operation of the user, a corresponding hardware interrupt is sent to the second input driver service at the kernel layer, and the second input driver service processes the touch operation into an operation event (including touch coordinates and a timestamp of the touch operation). The operation event is stored at the kernel layer. The application framework layer may obtain the operation event from the kernel layer, and may send the operation event to the second projection service, so that the second projection service gives a response.

For another example, after the second projection service of the second electronic device determines an operation event corresponding to a touch operation of the user, if the second projection service of the second electronic device determines that the operation event is content projected by the first electronic device onto the second electronic device, the second projection service of the second electronic device may send information about the operation event to the first electronic device by using the wireless communication module. The first projection service of the first electronic device gives a response.

In some embodiments, the first projection service of the first electronic device may also obtain, by using an application layer hook, the operation event that the user controls the first electronic device. The second projection service of the second electronic device may also obtain, by using the application layer hook, the operation event that the user controls the second electronic device.

It should be understood that the various services described above are merely examples. In an actual application, the first electronic device or the second electronic device may be divided into more or fewer services based on other factors, or functions of each service may be divided in another manner, or no service may be divided and the first electronic device or the second electronic device works as a whole. For example, the first projection service and the first input driver service of the first electronic device may be integrated into one service to implement a corresponding function. According to the cross-device content sharing method provided in embodiments of this application, after the first electronic device projects a screen onto the second electronic device in the screen collaboration system, content sharing may be implemented between a local window of the second electronic device and an interface projected by the first electronic device onto the second electronic device, or content sharing may be implemented between an interface projected by the first electronic device onto the second electronic device and a window projected by the third electronic device onto the second electronic device. For example, in projection scenarios shown in FIG. 1a-1 to FIG. 1d-2, content sharing between the first window and the second window on the second electronic device may be implemented.

For a scenario in which the first electronic device projects the screen onto the second electronic device in the screen collaboration system, refer to the foregoing content.

In the content sharing method provided in the following embodiments, a control mode of the first electronic device may be a control mode of using an external input device, and a control mode of the second electronic device may be a touch control mode, the control mode of using an external input device, or the like. In addition, in a scenario of screen collaboration between the first electronic device and the second electronic device, the first electronic device side may control the second electronic device, and the second electronic device side may also control the first electronic device. When the touch control mode is used for an electronic device, the electronic device may receive, by using a touch sensor, an operation event performed by the user on a display, and then perform corresponding control based on the received operation event. When the control mode of using an external input device is used for an electronic device, the electronic device may receive, by using an external input device like a mouse, a keyboard, or a touchpad, an operation event performed by the user by using the external input device, and then perform corresponding control based on the received operation event.

Therefore, the user can control the first electronic device or the second electronic device in the touch control mode or the control mode of using an external input device. In addition, in the scenario of screen collaboration between the first electronic device and the second electronic device, in the foregoing control mode, the user can control the second electronic device by controlling the first electronic device, or control the first electronic device by controlling the second electronic device. In this way, the user can achieve the foregoing content sharing effect by performing operation control on only the first electronic device side, or performing operation control on only the second electronic device side. This ensures continuity of a content sharing operation performed by the user, and helps easily and quickly complete content sharing in a projection scenario. Examples are provided below for description.

In embodiments of this application, control modes for the first electronic device and the second electronic device may include modes described in the following first to third parts. In the control mode described in the following first part, the user can perform an operation on the first electronic device side, to control the first electronic device and the second electronic device. In the control modes described in the following second and third parts, the user can perform an operation on the second electronic device side, to control the first electronic device and the second electronic device.

Details are described below.
1. The control mode of using an external input device is used for the first electronic device side. After the first electronic device establishes a communication connection to the external input device, the first electronic device may receive an operation event from the external input device, and control, based on the operation event, content to be displayed on the display of the first electronic device, or content to be displayed on the display of the second electronic device. The first electronic device may establish a connection to the external input device in a wired or wireless manner. The operation event described herein may be an operation performed by the user on the external input device. In this way, the user can control the first electronic device in the control mode of using an external input device, or can control the second electronic device by using the first electronic device as an intermediary.

For example, refer to FIG. 3a-1 and FIG. 3a-2 or FIG. 3b-1 and FIG. 3b-2. The first electronic device is a PC, the external input device connected to the first electronic device is a mouse, and the second electronic device is a tablet computer. After screen collaboration is established between the first electronic device and the second electronic device, a home screen of the PC is displayed as a display of the PC. The home screen of the PC includes a PC desktop and some application icons in the PC desktop. An expanded screen window projected by the PC onto the tablet computer is displayed on a display of the tablet computer. The expanded screen window includes another part of application icons on the PC desktop. In addition, an application window is further displayed on the display of the tablet computer. For example, the application window includes a gallery interface projected by another mobile phone onto the tablet computer. The PC may mark, by displaying a mouse cursor on the display, a location (for example, as shown in FIG. 3a-1 and FIG. 3a-2 or FIG. 3b-1 and FIG. 3b-2) of a track point of an operation performed by the user on the display, and the user moves the mouse cursor accordingly by moving the mouse, to display a location of a track point of a mouse movement track in real time.

FIG. 3a-1 and FIG. 3a-2 show a case in which an expanded screen window displayed on a tablet computer occupies an entire display area on a display of the tablet computer, and FIG. 3b-1 and FIG. 3b-2 show a case in which an expanded screen window displayed on a tablet computer occupies a part of a display area on a display of the tablet computer.

It should be noted that, in embodiments of this application, that screen collaboration is established between the first electronic device and the second electronic device is described by using an example in which the first electronic device projects a screen onto the second electronic device. The following provides examples of several control modes that may be specifically used when the control mode of using an external input device is used for the first electronic device side.

### Mode 1

The mouse cursor displayed on the display of the PC is a mouse cursor of the PC, and a mouse cursor displayed on the display of the tablet computer is a mouse cursor of the tablet computer. A specific control implementation method is described below. In addition, it should be noted herein that, in embodiments of this application, the mouse cursor of the PC is generated and displayed by the PC, the mouse cursor of the tablet computer is generated and displayed by the tablet computer, and the mouse cursor of the PC displayed on the tablet computer is displayed after the PC projects a screen onto the tablet computer.

After screen collaboration is established between the PC and the tablet computer, if the PC determines, based on a mouse operation event performed by the user by using a mouse, that a mouse cursor does not move beyond an area of the home screen of the PC, the PC determines that the mouse operation event acts on the PC, and the PC responds to the mouse operation event. The mouse cursor of the PC is displayed on the display of the PC in real time, and a display location of the mouse cursor on the display moves as the mouse moves.

If the PC determines, based on a mouse operation event performed by the user by using a mouse, that a mouse cursor moves from the home screen of the PC to a boundary of the home screen of the PC and continues to move, it is considered that the mouse shuttles to the tablet computer and serves as a mouse of the tablet computer. Then, the mouse operation event received by the PC acts on the tablet computer, and the tablet computer may respond to the operation event and display the mouse cursor of the tablet computer on the display in real time. After the mouse of the PC shuttles to the tablet computer and serves as the mouse of the tablet computer, the mouse operation event performed by the user by using the mouse is still received by the PC. After receiving the mouse operation event, the PC notifies the tablet computer of the mouse operation event, and the tablet computer responds accordingly. If the tablet computer determines, based on the received mouse operation event, that the mouse cursor of the tablet computer moves to an area boundary of the display of the PC and continues to move, so that the mouse cursor moves out of an area of the display, it is considered that the mouse shuttles back to the PC and serves as the mouse of the PC. Then, the mouse operation event received by the PC acts on the PC, and the PC may respond to the operation event.

The mouse cursor of the PC and the mouse cursor of the tablet computer may be displayed as different icons, to distinguish a device on which the mouse acts (namely, a device that responds to the mouse operation event). The different icons may be different shapes, sizes, colors, and the like of the cursor.

For example, as shown in FIG. 4a-1 and FIG. 4a-2 or FIG. 4b-1 and FIG. 4b-2, the mouse cursor of the PC displayed on the display of the PC and the mouse cursor of the tablet computer displayed on the display of the tablet computer are different icons. FIG. 4a-1 and FIG. 4a-2 correspond to a scenario in which an expanded screen of the PC occupies an entire area on the display of the tablet computer, and FIG. 4b-1 and FIG. 4b-2 correspond to a scenario in which the expanded screen of the PC occupies a part of the area on the display of the tablet computer.

It should be noted that, in schematic diagrams shown as FIG. 4b-1 and FIG. 4b-2, a plurality of mouse cursors on the display of the tablet computer indicate only a display form of the mouse cursors displayed when the mouse cursors are displayed in different areas on the display, and do not mean that the plurality of mouse cursors are simultaneously displayed on the display. For whether the plurality of mouse cursors are simultaneously displayed on the display, refer to related descriptions in embodiments. Unless otherwise specified, other accompanying drawings that show a mouse cursor in embodiments of this application are the same as those described above.

In this mode, a mouse connected to the PC is shared between the PC and the tablet computer, and a system including the PC and the tablet computer may be operated by using the mouse, to control a plurality of windows on the display of the PC and the display of the tablet computer.

The following describes the foregoing control mode with reference to a specific procedure. For ease of understanding, in the following descriptions, an example in which the first electronic device is a PC, the second electronic device is a tablet computer, and the external input device connected to the first electronic device is a mouse is still used for description.

Refer to FIG. 5A and FIG. 5B. A procedure of a control method provided in the mode 1 includes the following steps.

S501: The first electronic device establishes a communication connection to the second electronic device, and projects a screen onto the second electronic device.

It should be noted that, in embodiments of this application, after the first electronic device projects the screen onto the second electronic device, the first electronic device displays a first interface on a display, and the second electronic device displays a first window and a second window on a display.

In this mode, the first electronic device may display a mouse cursor of the first electronic device on the display based on an operation performed by the user on a mouse, or display a mouse cursor of the first electronic device in the first window through projection.

The connection established between the first electronic device and the second electronic device is, for example, a Bluetooth connection or a Wi-Fi connection. After the connection is established between the first electronic device and the second electronic device, an authentication process may be further performed. After authentication succeeds, the first electronic device and the second electronic device can communicate with each other through the connection.

For details how the first electronic device projects the screen onto the second electronic device, the first electronic device displays the first interface on the display, and the second electronic device displays the first window and the second window on the display, refer to related descriptions in the foregoing embodiments. Details are not described herein again.

That the first electronic device projects the screen onto the second electronic device may be that a first projection service of the first electronic device sends, to a second projection service of the second electronic device, content that needs to be displayed on an expanded screen or a mirror screen, and the second projection service displays the content in the first window.

For example, for location distribution of a display interface or a window on the displays of the first electronic device and the second electronic device and display content that are displayed after the first electronic device projects the screen onto the second electronic device, refer to distribution shown in FIG. 1b-1 and FIG. 1b-2.

S502: The first electronic device triggers mouse shuttle when determining that the user moves the mouse to a boundary of the first interface and continues to move.

When the first projection service of the first electronic device obtains, through listening, an operation event that the user moves the mouse to the boundary of the first interface and continues to move (so that the mouse cursor moves out of a first boundary), the first projection service of the first electronic device determines that an operation event input by the mouse subsequently acts on the second electronic device, to trigger the mouse shuttle.

In embodiments of this application, the mouse shuttle may be understood as using the mouse of the first electronic device as a mouse of the second electronic device, and controlling the second electronic device by using the mouse. Before the mouse shuttles, the mouse is connected to the first electronic device, a user operation detected by the mouse is also transmitted to the first electronic device, and the first electronic device responds. Therefore, the mouse is configured to directly control the first electronic device, and the mouse cursor is displayed on the display of the first electronic device. After the mouse shuttles, the mouse is still connected to the first electronic device, and a user operation detected by the mouse is also transmitted to the first electronic device. However, the first electronic device transmits the user operation detected by the mouse to the second electronic device, and the second electronic device responds. Therefore, the mouse is configured to directly control the second electronic device, and the mouse cursor is displayed on the display of the second electronic device.

S503: The first electronic device sends a shuttle start message to the second electronic device.

The first projection service sends the shuttle start message to the second projection service of the second electronic device. The shuttle start message is used to notify switching the mouse of the first electronic device to the mouse of the second electronic device, and subsequently the mouse acts on the second electronic device.

The shuttle start message carries a shuttle direction of the mouse of the first electronic device (for example, the mouse shuttles from the first electronic device to the second electronic device), and location information indicating that the mouse cursor leaves an edge of the first interface. The location information is used by the second electronic device to determine a start display location of the mouse cursor displayed after the mouse shuttles.

After the first electronic device sends the shuttle start message to the second electronic device, the first electronic device hides the mouse cursor of the first electronic device. Alternatively, after the first electronic device sends the shuttle start message to the second electronic device and receives a mouse shuttle success message returned by the second electronic device, the first electronic device hides the mouse cursor of the first electronic device.

S504: The second electronic device determines that the mouse shuttle is completed.

After receiving the shuttle start message, the second projection service accepts the mouse shuttle, and may return the mouse shuttle success message to the first projection service. The mouse shuttle success message notifies the first electronic device that the mouse shuttle succeeds, so that the first electronic device subsequently performs corresponding processing. For example, the first electronic device performs setting that the operation performed by the user on the mouse no longer acts on the first electronic device, but acts on the second electronic device.

When determining that the mouse shuttle is completed, the second electronic device displays the mouse cursor of the second electronic device on the display. When determining that the mouse cursor moves to a boundary of the display of the second electronic device, the second electronic device triggers the mouse to shuttle back to the first electronic device.

For example, for a display process corresponding to the shuttle trigger operation, refer to a process A of moving a mouse cursor in a first direction shown in FIG. 4a-1 and FIG. 4a-2. The first direction shown in FIG. 4a-1 and FIG. 4a-2 is from the first interface to the first window, and from the first window to the second window.

S505: The first electronic device sends, to the second electronic device, a received mouse operation event that the user moves the mouse.

After the first projection service obtains, through listening, the mouse operation event that the user moves the mouse, the first projection service sends the operation event to a second input driver service, and triggers the second electronic device to respond to the operation event based on input display logic of the second electronic device, so as to implement a control effect that the mouse operation event of the first electronic device acts on the second electronic device.

Optionally, if the user controls the first window by using the mouse, the method may further include the steps S506 and S507 after the step S505.

S506: The second electronic device generates a corresponding operation event when determining, based on the mouse operation event from the first electronic device, that the user moves the mouse to the first window and performs an operation on content in the window.

For example, when the second projection service determines that the user moves the mouse to the first window and clicks an application icon at a location in the first window, the generated corresponding operation event may be an operation of clicking the mouse at the location (coordinates) in the first window.

S507: The second electronic device sends the operation event to the first electronic device.

For example, the second projection service sends the determined operation event to the first projection service.

S508: The first electronic device responds to the received operation event.

For example, after receiving the operation event, the first projection service inputs the operation event to a first input driver service. After receiving the operation event, the first input driver service triggers the first electronic device to respond to the operation event, and displays through projection, in the first window of the second electronic device, content obtained by responding to the operation event.

Optionally, if the user controls the second window by using the mouse, the method may further include the step S509 after the step S505 or the step S508.

S509: The second electronic device responds to the mouse operation event when determining, based on the mouse operation event from the first electronic device, that the user moves the mouse to the second window and performs an operation on content in the window.

For example, refer to a process B of moving the mouse cursor in the first direction shown in FIG. 4a-1 and FIG. 4a-2.

The second projection service determines, based on the received mouse operation event, that when the user moves the mouse to the second window and clicks an icon of an application in the second window, the application is opened in response to the mouse operation event.

In the foregoing solution, in a scenario in which screen collaboration is established between the first electronic device and the second electronic device, the mouse of the first electronic device may shuttle to the second electronic device, and is used as the mouse of the second electronic device to control the second electronic device, so that the mouse cursor of the second electronic device may always be displayed on the display of the second electronic device. Therefore, the second electronic device can intuitively and smoothly display movement paths of various operations performed by the user on content displayed by the second electronic device. Compared with a current mode of projecting the mouse of the first electronic device and to-be-projected content together onto the second electronic device, in the mode, display smoothness of controlling the second electronic device by using the mouse of the first electronic device can be greatly improved. This improves use experience.

### Mode 2

A mouse cursor displayed on the display of the PC and in the expanded screen window of the tablet computer, is a mouse cursor of the PC, and a mouse cursor displayed in an area that is not occupied by the expanded screen window of the tablet computer and that is in the application window and the display of the tablet computer is a mouse cursor of the tablet computer.

In a first possible scenario, the expanded screen window of the tablet computer occupies an entire area of the display of the tablet computer, for example, as shown in FIG. 6a-1 and FIG. 6a-2. In a second possible scenario, the expanded screen window of the tablet computer occupies a part of the area of the display of the tablet computer, for example, as shown in FIG. 6b-1 and FIG. 6b-2. A specific control implementation method in each scenario is described below.

In the first possible scenario, after screen collaboration is established between the PC and the tablet computer, the tablet computer notifies the PC of location information (for example, coordinate information) of the application window on the display of the tablet computer, and the PC determines a corresponding location area of the location information in the expanded screen window, and determines the location area as a corresponding location area of the application window on an expanded screen of the PC.

If the PC determines, based on a mouse operation event performed by the user by using a mouse, that a mouse cursor moves out of the expanded screen window of the PC to the corresponding location area of the application window on the expanded screen of the PC, it is considered that the mouse shuttles to the tablet computer and serves as a mouse of the tablet computer. Then, if the mouse cursor is located in the location area, the mouse operation event received by the PC acts on the tablet computer, and the tablet computer may respond to the operation event, and display the mouse cursor of the tablet computer on the display. After the mouse of the PC shuttles to the tablet computer and serves as the mouse of the tablet computer, the mouse operation event performed by the user by using the mouse is still received by the PC. After receiving the mouse operation event, the PC notifies the tablet computer of the mouse operation event, and the tablet computer responds accordingly. If the tablet computer determines, based on a received mouse operation event, that the mouse cursor of the tablet computer leaves the corresponding location area of the application window on the expanded screen of the PC, it is considered that the mouse shuttles back to the PC and serves as the mouse of the PC. Then the mouse operation event received by the PC acts on the PC. The PC can respond to the operation event and project the mouse cursor of the PC onto the expanded screen window for display.

For example, as shown in FIG. 6a-1 and FIG. 6a-2, the mouse cursor displayed on the home screen of the PC and the expanded screen of the PC is the mouse cursor of the PC, and the mouse cursor displayed in the application window of the tablet computer is the mouse cursor of the tablet computer.

In this mode, a mouse connected to the PC is shared between the PC and the tablet computer, and a system including the PC and the tablet computer may be operated by using the mouse, to control a plurality of windows on the display of the PC and the display of the tablet computer.

The following describes the foregoing control mode with reference to a specific procedure. For ease of understanding, in the following descriptions, an example in which the first electronic device is a PC, the second electronic device is a tablet computer, and the external input device connected to the first electronic device is a mouse is still used for description.

Refer to FIG. 7A and FIG. 7B. A procedure of a control method in the first possible scenario includes the following steps.

S701: The first electronic device establishes a communication connection to the second electronic device, and projects a screen onto the second electronic device.

S702: The second electronic device synchronizes, to the first electronic device, location information that is of a second window and that is on a display.

For example, a first application window service notifies a first projection service of regional coordinate information of the second window on the display, and the first projection service converts the coordinate information into regional coordinate information corresponding to the first window. An area corresponding to the converted regional coordinate information is an area that corresponds to the second window and that is in the first window.

S703: The first electronic device triggers mouse shuttle when determining that the user moves a mouse to an area that corresponds to the second window and that is in the first window.

When obtaining, through listening, that the user moves the mouse to the area that corresponds to the second window and that is in the first window, the first projection service determines that an operation event subsequently input by the mouse acts on the second electronic device, to trigger mouse shuttle.

In this mode, the first electronic device can obtain, through listening, whether the mouse cursor on the display of the second electronic device enters the second window, and further determine whether to trigger the mouse shuttle.

S704: The first electronic device sends a shuttle start message to the second electronic device.

The shuttle start message carries a shuttle direction of the mouse of the first electronic device (for example, the mouse shuttles from the first electronic device to the second electronic device), and location information indicating that the mouse cursor enters an edge of the area that corresponds to the second window and that is in the first window. The location information is used by the second electronic device to determine a start display location of the mouse cursor displayed after the mouse shuttles.

S705: The second electronic device determines that the mouse shuttle is completed.

When determining that the mouse shuttle is completed, the second electronic device displays the mouse cursor of the second electronic device in the second window of the display. When determining that the mouse cursor moves out of the second window, the second electronic device triggers the mouse to shuttle back to the first electronic device.

S706: The first electronic device sends, to the second electronic device, a received mouse operation event that the user moves the mouse.

In the mouse operation event, a movement location of the mouse is always located in the area that corresponds to the second window and that is in the first window.

Optionally, before the mouse shuttle is triggered, the mouse cursor of the first electronic device is located in the first window and does not enter the area that corresponds to the second window and that is in the first window. If the user controls the first window by using the mouse, the foregoing procedure may further include the following step S707.

S707: The first electronic device responds to the mouse operation event when determining, based on the received mouse operation event, that the user performs an operation on content in the first window by using the mouse.

Optionally, after the mouse shuttle is triggered, the mouse cursor of the second electronic device is located in the area that corresponds to the second window and that is in the first window. If the user controls the second window by using the mouse, the foregoing procedure may further include the following step S708.

S708: The second electronic device responds to the mouse operation event when determining, based on the mouse operation event from the first electronic device, that the user performs an operation on content in the second window by using the mouse.

For execution of some steps in the procedure, refer to related descriptions of related steps in FIG. 5A and FIG. 5B. Repeated content is not described herein again.

In the foregoing solution, in a scenario in which screen collaboration is established between the first electronic device and the second electronic device, the mouse of the first electronic device may shuttle to the second electronic device, serve as the mouse of the second electronic device, and control a window in the second electronic device other than a window projected by the first electronic device. In this case, the second electronic device displays, only in the projection window, a mouse cursor generated by the first electronic device, and displays, in another area, a mouse cursor generated by the second electronic device, to intuitively represent a control end device for content displayed by the second electronic device. Compared with a current mode in which the mouse of the first electronic device can control, only through projection, a window projected by the first electronic device onto the second electronic device, in the mode, different electronic devices can be quickly controlled by using one mouse. This improves flexibility and smoothness of the control mode in a projection scenario, and further improves use experience.

In the second possible scenario, after screen collaboration is established between the PC and the tablet computer, the second electronic device may determine, by listening to a change of a drag event, an event that the user drags content from the second window to the first window. In this case, the first electronic device does not need to listen to whether a mouse cursor on a display of the second electronic device enters the second window. Specifically, the first window and the second window of the second electronic device are displayed on different layers. If the user drags content from the second window to the first window, the layers are traversed. The second electronic device may perceive an event that the drag event traverses a layer. Therefore, when determining that the drag event arrives at a layer on which the first window is located, the second electronic device may determine that the user drags content to the first window (the drag event arrives at the first window), so as to trigger the mouse to shuttle back to the first electronic device.

It should be noted that, a mode in which the second electronic device determines a location of the mouse cursor based on a layer traversal event of the drag event may be applied to embodiments of this application, instead of a mode in which the second electronic device determines a location of the mouse cursor based on coordinates. The foregoing content is merely example descriptions of an implementation in one of the scenarios.

The following describes the foregoing control mode with reference to a specific procedure. For ease of understanding, in the following descriptions, an example in which the first electronic device is a PC, the second electronic device is a tablet computer, and the external input device connected to the first electronic device is a mouse is still used for description.

Refer to FIG. 8A, FIG. 8B, and FIG. 8C. A procedure of a control method in the first possible scenario includes the following steps.

S801: The first electronic device establishes a communication connection to the second electronic device, and projects a screen onto the second electronic device.

S802: The second electronic device listens to events that the user drags content to and out of the first window.

In this step, after the first electronic device projects the screen onto the second electronic device, a second projection service registers, for the first window at an application framework layer, a task of listening to a drag event, to listen to and obtain the events that the user drags the content to and out of the first window. The second projection service may call back to obtain the event from the application framework layer.

S803: The second electronic device listens to events of moving the mouse cursor out of and in the first window on the display.

After the first electronic device projects the screen onto the second electronic device, the second projection service registers, for the first window at the application framework layer, a task of listening to a mouse cursor movement event, to listen to and obtain the events moving the mouse cursor out of and in the first window on the display. The second projection service may call back to obtain the event from the application framework layer.

The steps S802 and S803 are both performed after the first electronic device projects the screen onto the second electronic device, and end until the projection ends. In addition, an execution sequence between steps S802 and S803 is not limited.

S804: The first electronic device triggers the mouse shuttle when determining that the user moves a mouse to a boundary of a first interface or the first window and continues to move.

For example, refer to a process A or C of moving the mouse cursor in a first direction shown in FIG. 6b-1 and FIG. 6b-2. The first direction shown in FIG. 6b-1 and FIG. 6b-2 is from a display of the first electronic device to the display of the second electronic device, from the display of the second electronic device to the first window, and from the first window to the second window. S805: The first electronic device sends a shuttle start message to the second electronic device. S806: The second electronic device determines that the mouse shuttle is completed.

S807: The first electronic device sends, to the second electronic device, a received mouse operation event that the user moves the mouse.

S808: When determining that an event that the user drags content to the first window is obtained through listening, the second electronic device triggers to end the mouse shuttle.

For example, refer to the process B of moving the mouse cursor in the first direction shown in FIG. 6b-1 and FIG. 6b-2.

When determining, based on the mouse operation event from the first electronic device, that the user moves the mouse to the boundary of the first window and continues to move (so that the mouse cursor moves in the first window), the second electronic device determines to end the mouse shuttle, so that a subsequent mouse operation event acts on the first electronic device.

S809: The second electronic device sends a shuttle end message to the first electronic device.

When determining to end the mouse shuttle, the second electronic device sends the shuttle end message to the first proj ection service. The shuttle end message is used to notify switching a mouse of the second electronic device to a mouse of the first electronic device, so that the mouse acts on the first electronic device after switching. For example, the second projection service may determine, based on a Hover_Enter event from the application framework layer, to trigger to end the mouse shuttle.

The Hover_Enter event is from the application framework layer, and is an action (action) attribute of a motion event (Motion Event) in a callback method (onHover(View view, MotionEvent motionEvent)) of a listener View.OnHoverListener at the application framework layer.

The shuttle end message carries location information indicating that the mouse cursor arrives at the layer on which the first window is located. The location information is used by the first electronic device to determine a start display location of the mouse cursor displayed after the mouse shuttle ends.

After the second electronic device sends the shuttle end message to the first electronic device, the second electronic device sets a mouse cursor of the second electronic device to a transparent state. Alternatively, after the second electronic device sends the shuttle end message to the first electronic device and receives a mouse shuttle end success message returned by the first electronic device, the second electronic device sets a mouse cursor of the second electronic device to a transparent state.

S810: The first electronic device determines to end the mouse shuttle.

After receiving the shuttle end message, the first projection service determines to end the mouse shuttle, subsequently applies the received operation event performed by the user by using the mouse to the first electronic device, does not send the event to the second electronic device, and may return the mouse shuttle end success message to the second projection service. The mouse shuttle end success message is used to notify the second electronic device that mouse shuttle end succeeds, so that the second electronic device subsequently performs corresponding processing, for example, setting the mouse cursor of the second electronic device to the transparent state. When determining to end the mouse shuttle, the first electronic device displays a mouse cursor of the first electronic device in the first window through real-time projection control.

S811: The first electronic device sends a location of the mouse cursor on the first interface to the second electronic device in real time.

The first projection service sends location coordinates of the mouse cursor of the first electronic device on the first interface to the second projection service.

S812: The second electronic device displays a transparent mouse cursor of the second electronic device at a corresponding location in the first window based on the location of the mouse cursor sent by the first electronic device.

Because the first interface projected by the first electronic device is displayed in the first window on the display of the second electronic device, the second projection service may determine, based on the received location coordinates, a location, in the first window, of the mouse cursor projected by the first electronic device. Because location coordinates of the first window on the display of the second electronic device may be determined by the second projection service, the second projection service may obtain, through calculation, the location of the mouse cursor of the first electronic device on the display of the second electronic device, based on a location of the mouse cursor of the first electronic device on the first window and the location of the first window on the display of the second electronic device.

When the second projection service determines, based on the location of the mouse cursor of the first electronic device on the display of the second electronic device, that the mouse cursor is located in the first window, the mouse cursor of the second electronic device is displayed at the location, and the mouse cursor of the second electronic device is displayed in a transparent state, so that the mouse cursor displayed in the first window and viewed by the user is only the mouse cursor of the first electronic device.

Through the steps S811 and S812, the mouse cursor of the second electronic device in the first window moves synchronously with the mouse cursor of the first electronic device.

The location of the mouse cursor of the second electronic device may be obtained by converting based on the location of the first window on the display of the second electronic device. Optionally, after the mouse shuttle ends, the mouse cursor of the first electronic device is located in the first window and does not enter the second window. If the user controls the first window by using the mouse, after step S812, the method may further include the following step S813.

S813: The first electronic device responds to the mouse operation event when determining, based on the received mouse operation event, that the user performs an operation on content in the first window by using the mouse.

After the step S812 or the S813, the method further includes the following steps S814 to S817. S814: The second electronic device triggers the mouse shuttle when determining that the user moves the mouse to the second window.

For example, refer to the process C of moving the mouse cursor in the first direction shown in FIG. 6b-1 and FIG. 6b-2.

The second projection service may determine, based on the event called back from the application framework layer, that the user moves the mouse to the second window, and trigger the mouse shuttle. For example, the second projection service may determine, based on a Hover_Exit event from the application framework layer, to trigger the mouse shuttle. When determining to trigger the mouse shuttle, the second electronic device may send a mouse shuttle notification message to the first electronic device, to notify the first electronic device to perform the mouse shuttle. S815: The first electronic device sends the shuttle start message to the second electronic device. S816: The second electronic device determines that the mouse shuttle is completed.

After the mouse shuttle is completed, the first electronic device sets the mouse cursor of the first electronic device to the transparent state, and the second electronic device sets the mouse cursor of the second electronic device to a non-transparent state, so that only the mouse cursor of the second electronic device is displayed in the second window viewed by the user.

S817: The first electronic device sends, to the second electronic device, the received mouse operation event that the user moves the mouse.

In the mouse operation event, the movement location of the mouse is always located in the second window.

Optionally, after the mouse shuttle is triggered, the mouse cursor of the second electronic device is located in the second window. If the user controls the second window by using the mouse, after step S817, the method may further include the following step S818.

S818: The second electronic device responds to the mouse operation event when determining, based on the mouse operation event from the first electronic device, that the user performs an operation on content in the second window by using the mouse.

For execution of some steps in the procedure, refer to related descriptions of related steps in FIG. 5A and FIG. 5B or FIG. 7A and FIG. 7B. Repeated content is not described herein again.

In the foregoing solution, in a scenario in which screen collaboration is established between the first electronic device and the second electronic device, the mouse of the first electronic device may shuttle to the second electronic device, serve as the mouse of the second electronic device, and control a window in the second electronic device other than a window projected by the first electronic device. Compared with a current mode in which the mouse of the first electronic device can control, only through projection, a window projected by the first electronic device onto the second electronic device, in the mode, different electronic devices can be quickly controlled by using one mouse. This improves flexibility and smoothness of the control mode in a projection scenario, and further improves use experience.

A difference between the control method provided in the mode 2 and the control method provided in the mode 1 lies in that mouse cursors displayed in the expanded screen window of the tablet computer are different. In the foregoing mode 1, the mouse cursor displayed in the expanded screen window is generated by the PC and then projected onto the tablet computer. However, when the PC displays the mouse cursor, icons of the mouse cursor may be different in different scenarios or at different locations. For example, when the mouse cursor is located above an application, some information of the application is displayed, and when the mouse cursor moves from the desktop to a document, the mouse cursor changes from an arrow to a vertical line. Therefore, in the mode 1, a display form of the mouse cursor displayed in the expanded screen window changes with a change of a scene or a location, and in the mode 2, a display form of the mouse cursor displayed in the expanded screen window is fixed.

In view of this, in some embodiments, the control method in the foregoing mode 1 may be adjusted, so that when the mouse cursor displayed in the expanded screen window of the tablet computer is the mouse cursor of the tablet computer, different mouse cursor display forms may also be switched in different display scenarios. In this way, a display form of the mouse cursor of the tablet computer is kept consistent as possible with a display form of the mouse cursor of the PC.

For example, as shown in FIG. 9A and FIG. 9B, a mouse cursor is displayed on the display of the PC. When the mouse cursor is located in a blank area corresponding to a location 1, the mouse cursor is displayed as an arrow. When the mouse cursor is moved to above an application corresponding to a location 2, namely, a folder 2, the mouse cursor is displayed as an arrow and an application information prompt box. When a mouse cursor generated by the tablet computer is displayed in the expanded screen window on the display of the tablet computer, the display form of the mouse cursor may also be correspondingly switched based on information from the PC. As shown in FIG. 9A and FIG. 9B, when the mouse cursor is located in a blank area corresponding to a location 3, the mouse cursor is displayed as an arrow. When the mouse cursor moves to above a text document 1 corresponding to a location 4, the mouse cursor is displayed as an arrow and an application information prompt box that includes information about the text document 1. In this way, although the mouse cursor is displayed as the mouse cursor of the second electronic device in the first window, effect of displaying the mouse cursor as the mouse cursor of the second electronic device is the same as that of displaying the mouse cursor projected by the first electronic device, and consistency of display of the mouse cursor on the second electronic device can be ensured.

With reference to a specific procedure, the following describes the foregoing control mode by using an example in which the first window occupies a part of an area on the display of the second electronic device. For ease of understanding, in the following descriptions, an example in which the first electronic device is a PC, the second electronic device is a tablet computer, and the external input device connected to the first electronic device is a mouse is still used for description.

Refer to FIG. 10A, FIG. 10B, and FIG. 10C. A method procedure of the control mode includes the following steps.

S1001: The first electronic device establishes a communication connection to the second electronic device, and projects a screen onto the second electronic device.

S1002: The second electronic device listens to the events that the user drags the content to and out of the first window.

S1003: The second electronic device listens to the events of moving the mouse cursor out of and in the first window on the display.

For execution of the steps S1001 to S1003, refer to related descriptions of steps S801 to S803 in FIG. 8A. Details are not described herein again.

S 1004: The first electronic device listens to whether a style of a mouse cursor on a display changes. After the first electronic device projects the screen onto the second electronic device, the first projection service starts to listen to whether the style of the mouse cursor on the first electronic device changes, and notifies the second projection service in real time when the style of the mouse cursor changes.

The steps S1002 to S1004 may be performed after the first electronic device projects the screen onto the second electronic device, and end until the projection ends. In addition, an execution sequence between the steps is not limited.

S1005: The first electronic device triggers mouse shuttle when determining that the user moves the mouse to the boundary of the first interface or the first window and continues to move. S1006: The first electronic device sends the shuttle start message to the second electronic device. S1007: The second electronic device determines that the mouse shuttle is completed.

S1008: The first electronic device sends, to the second electronic device, the received mouse operation event that the user moves the mouse.

S1009: When determining that the event that the user drags the content to the first window is obtained through listening, the second electronic device triggers to end the mouse shuttle. S1010: The second electronic device sends the shuttle end message to the first electronic device. S1011: The first electronic device determines to end the mouse shuttle.

After receiving the shuttle end message, the first projection service determines to end the mouse shuttle, subsequently applies the received operation event performed by the user by using the mouse to the first electronic device, does not send the event to the second electronic device, and may return the mouse shuttle end success message to the second projection service. The mouse shuttle end success message is used to notify the second electronic device that mouse shuttle end succeeds.

When determining to end the mouse shuttle, the first electronic device displays the mouse cursor of the first electronic device in the first window through real-time projection control, and sets the mouse cursor to the transparent state. In this way, although the mouse cursor of the first electronic device is displayed in the first window, the user cannot see the mouse cursor.

S1012: The first electronic device sends the location of the mouse cursor on the first interface to the second electronic device in real time.

For execution of the steps S1005 to S1012, refer to related descriptions of steps S804 to S811 in FIG. 8A and FIG. 8B. Details are not described herein again.

S1013: The second electronic device displays the mouse cursor of the second electronic device at the corresponding location in the first window based on the location of the mouse cursor sent by the first electronic device.

The mouse cursor of the second electronic device in the first window moves synchronously with the mouse cursor of the first electronic device.

For a manner of determining a display location of the mouse cursor of the second electronic device, refer to the determining manner described in step S812 in FIG. 8B.

In this manner, a mouse cursor projected by the first electronic device onto the first window is transparent, and the second electronic device displays the mouse cursor of the second electronic device at a location of the projected mouse cursor, so that only the mouse cursor of the second electronic device is displayed in the first window viewed by the user.

S1014: When obtaining, through listening, that the style of mouse cursor of the first electronic device changes, the first electronic device notifies the second electronic device of a change status of the style of the mouse cursor in real time.

For example, the first projection service may send a changed style of the mouse cursor to the second projection service in real time.

S1015: The second electronic device correspondingly adjusts, based on the change status of the style of the mouse cursor of the first electronic device, the style of the mouse cursor of the second electronic device displayed in the first window.

For example, after receiving the changed style of the mouse cursor sent by the first projection service, the second projection service updates the style of the mouse cursor of the second electronic device displayed in the first window to the changed style of the mouse cursor.

Optionally, after the mouse shuttle ends, the mouse cursor of the first electronic device is located in the first window and does not enter the second window. If the user controls the first window by using the mouse, after step S1015, the method may further include the following step S1016.

S1016: The first electronic device responds to the mouse operation event when determining, based on the received mouse operation event, that the user performs an operation on content in the first window by using the mouse.

After the step S1015 or S1016, the method further includes the following steps S 1017 and S 1018. S1017: The second electronic device performs a mouse shuttle procedure with the first electronic device when determining that the user moves the mouse to the second window.

For execution of this step, refer to related descriptions of steps S814 to S816 in FIG. 8B and FIG. 8C. Details are not described herein again.

S1018: The first electronic device sends, to the second electronic device, the received mouse operation event that the user moves the mouse, and the second electronic device responds.

For execution of this step, refer to related descriptions of steps S817 and S818 in FIG. 8C. Details are not described herein again.

In the foregoing solution, in a scenario in which screen collaboration is established between the first electronic device and the second electronic device, the mouse of the first electronic device may shuttle to the second electronic device, and is used as the mouse of the second electronic device to control the second electronic device, so that the mouse cursor of the second electronic device may always be displayed on the display of the second electronic device. Therefore, the second electronic device can intuitively and smoothly display movement paths of various operations performed by the user on content displayed by the second electronic device. The second electronic device also uses the mouse cursor of the second electronic device in the window that displays projection content of the first electronic device, so that the mouse shuttle is convenient and natural, display is smooth, and a selection (hover) effect of a control of the mouse cursor of the first electronic device is retained. This greatly improves user perception and use experience.

### Mode 3

A mouse cursor displayed on the display of the PC and in the expanded screen window of the tablet computer is a mouse cursor of the PC. The tablet computer may switch the expanded screen window to a specified window after the user performs a specified operation, and switch a mouse cursor displayed in the specified window to a mouse cursor of the tablet computer. In other words, the mouse cursor displayed on the display of the tablet computer may be switched between different display windows. A specific control implementation method is described below. The specified operation is a preset operation, for example, may be a fixed operation preset by the user. After screen collaboration is established between the PC and the tablet computer, if the PC determines, based on a mouse operation event performed by the user by using a mouse, that a mouse cursor is located in a specified area on the display of the tablet computer, for example, an edge location of an area in which an expanded screen of the PC is located, it is considered that the mouse shuttles to the tablet computer and serves as the mouse of the tablet computer. Then, the mouse operation event received by the PC acts on the tablet computer, and the tablet computer may respond to the operation event and display the mouse cursor of the tablet computer on the display. Then, the user may trigger, by performing the specified operation, the tablet computer to display the specified window, and switches the expanded screen window and/or the application window to the background. The specified window is a preset window. For example, the specified operation may be that the user slides up from the bottom of the tablet computer to trigger the tablet computer to display a desktop window, or the user slides down from the top of the tablet computer to trigger the tablet computer to display a notification bar interface, or the user clicks a specified switch button on the display by using the mouse, or the like. The user may trigger, by performing the specified operation, the tablet computer to display the desktop window.

After the tablet computer displays the specified window, the user may further indicate, through the specified operation, to exit from the specified window. In this case, the tablet computer no longer displays the specified window, and switches the expanded screen window and/or the application window from the background to the foreground for display.

When the expanded screen window is displayed on the display of the tablet computer again, if the mouse cursor is located at the edge location of the area in which the expanded screen of the PC is located, the mouse operation event received by the PC still acts on the tablet computer; and if the mouse cursor is not located at the edge location of the area in which the expanded screen of the PC is located, it is considered that the mouse shuttles back to the PC and serves as the mouse of the PC. Then, the mouse operation event received by the PC acts on the PC, and the PC may respond to the operation event.

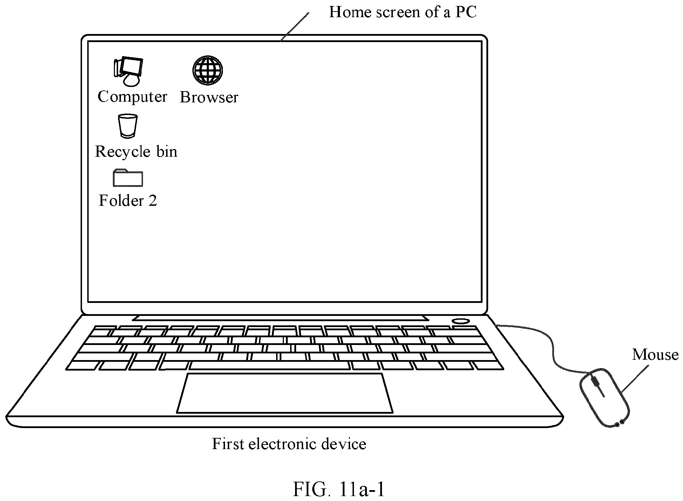

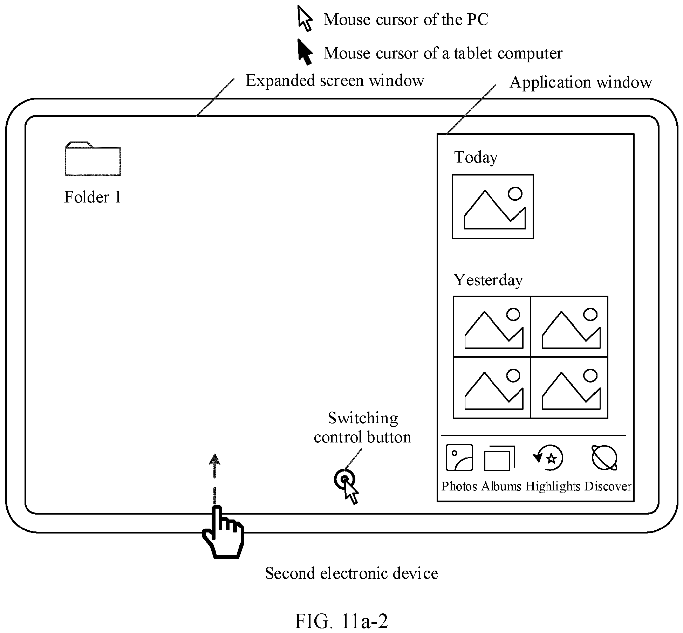

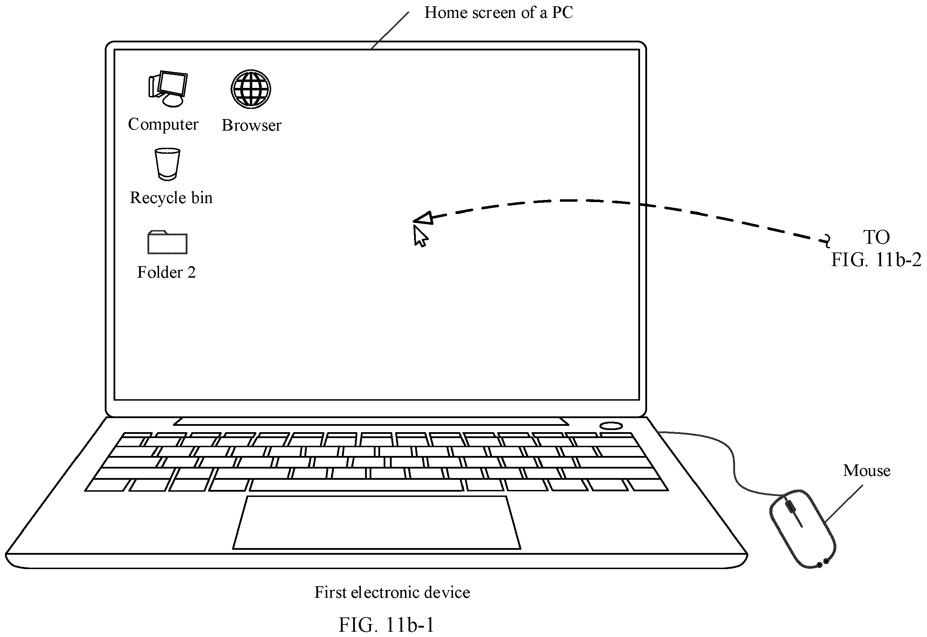

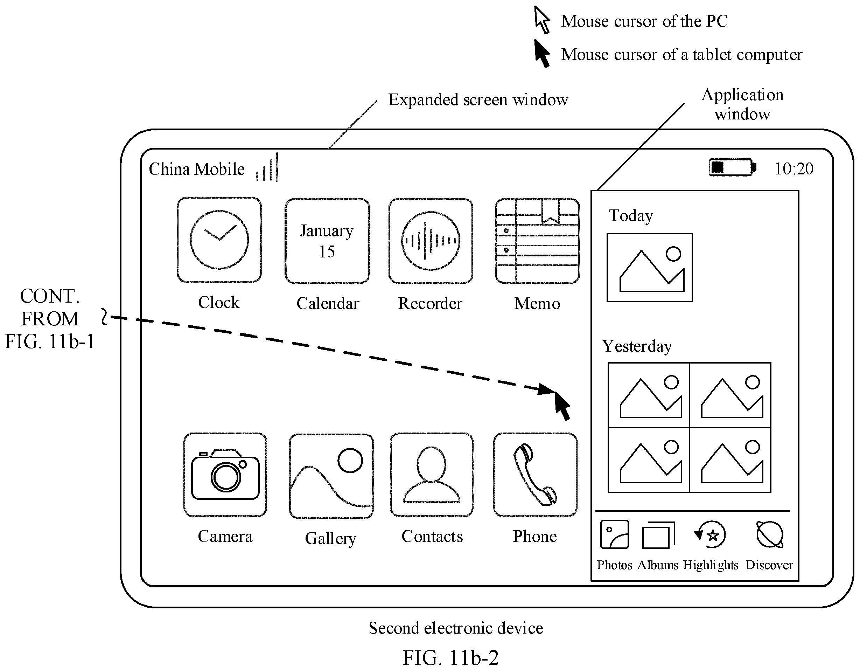

For example, as shown in FIG. 11a-1 and FIG. 11a-2, when the mouse cursor of the PC is located at an edge of the expanded screen window, the mouse of the PC is shuttled to the mouse of the tablet computer. In this case, the user may slide up from the bottom of the tablet computer to trigger the tablet computer to display a desktop, or touch, or click, by using the mouse, a switching control button that is in the expanded screen window and that is used to control switching to the desktop, to obtain a display interface shown in FIG. 1 1b-1 and FIG. 11b-2. In this case, an expanded screen window originally displayed on the display of the tablet computer is switched to a window corresponding to the desktop of the tablet computer.

In this mode, a mouse connected to the PC is shared between the PC and the tablet computer, and a system including the PC and the tablet computer may be operated by using the mouse, to control a plurality of windows on the display of the PC and the display of the tablet computer.

The following describes the foregoing control mode with reference to a specific procedure. For ease of understanding, in the following descriptions, an example in which the first electronic device is a PC, the second electronic device is a tablet computer, and the external input device connected to the first electronic device is a mouse is still used for description.

Refer to FIG. 12. A procedure of a control method provided in the mode 3 includes the following steps.

S1201: The first electronic device establishes a communication connection to the second electronic device, and projects a screen onto the second electronic device.

S1202: The second electronic device synchronizes, to the first electronic device, location information that is of a second window and that is on a display.

S1203: The first electronic device triggers mouse shuttle when determining that the user moves the mouse to a specified operation area and performs the specified operation.

The specified operation area may be, for example, an edge area of the first window projected by the first electronic device onto the second electronic device.

For example, when determining that the user moves the mouse to a corresponding edge area of the first window projected by the second electronic device and the specified operation is triggered, a first projection service determines that an operation event subsequently input by the mouse acts on the second electronic device, to trigger the mouse shuttle.

S1204: The first electronic device sends a shuttle start message to the second electronic device.

The shuttle start message carries a shuttle direction of the mouse of the first electronic device (for example, the mouse shuttles from the first electronic device to the second electronic device), and location information indicating that the mouse cursor moves to the edge area of the first window. The location information is used by the second electronic device to determine a start display location of the mouse cursor displayed after the mouse shuttles.

S1205: The second electronic device determines that the mouse shuttle is completed.

When determining that the mouse shuttle is completed, the second electronic device displays the mouse cursor of the second electronic device on the display. When determining that the mouse cursor moves to a boundary of the display, the second electronic device triggers the mouse to shuttle back to the first electronic device.

S1206: The first electronic device sends, to the second electronic device, a received mouse operation event that the user performs the specified operation by using the mouse.

For example, when determining that the user performs the specified operation by using the mouse, the first projection service sends a corresponding mouse operation event to a second input driver service, and the second input driver service triggers the second electronic device to respond.

S 1207: The second electronic device switches the first window to run in the background.

For example, after receiving the mouse operation event that the user performs the specified operation by using the mouse, the second input driver service triggers the second electronic device to switch the first window to run in the background.

S1208: When determining that the user moves the mouse to the specified operation area and performs the specified operation, the second electronic device switches the first window back to run in the foreground.

For example, after receiving the mouse operation event again that the user performs the specified operation by using the mouse, the second input driver service triggers the second electronic device to switch the first window to run in the foreground, and displays the first window on the display. S1209: When determining to end the mouse shuttle, the second electronic device synchronizes a location of the mouse cursor displayed on the display to the mouse of the first electronic device. For example, when determining that the user moves the mouse to the edge area of the first window, the second projection service determines to end the mouse shuttle, and synchronizes a location of the mouse cursor that is finally displayed on the display to the mouse cursor of the first electronic device.

For execution of some steps in the procedure, refer to related descriptions of related steps in FIG. 5A and FIG. 5B or FIG. 7A and FIG. 7B. Repeated content is not described herein again.

In the foregoing solution, in a scenario in which screen collaboration is established between the first electronic device and the second electronic device, the first electronic device may trigger, based on the specified operation performed by the user, the mouse of the first electronic device to shuttle to the second electronic device in a specified area of a window that is projected onto the second electronic device. In this way, an action target of the mouse of the first electronic device can be flexibly switched between a window displayed by the first electronic device and a window displayed by the second electronic device, and different electronic devices can be quickly controlled by using one mouse. This improves flexibility of a control mode and smoothness of an operation in a projection scenario, thereby improving use experience.

### Mode 4

A mouse cursor displayed on the display of the PC is a mouse cursor of the PC, and a mouse cursor displayed in the expanded screen window of the tablet computer is a mouse cursor of the PC and a mouse cursor of the tablet computer. The mouse cursor of the PC is in an opaque state, and the mouse cursor of the tablet computer is in a transparent state. A mouse cursor displayed in the application window of the tablet computer is the mouse cursor of the tablet computer. A specific control implementation method is described below.

After screen collaboration is established between the PC and the tablet computer, if the PC determines, based on a mouse operation event performed by the user by using a mouse, that a mouse cursor moves from the home screen of the PC to a boundary of the home screen of the PC and continues to move to the expanded screen window, it is considered that the mouse shuttles to the tablet computer and serves as the mouse of the tablet computer. In addition, the tablet computer enables a virtual mouse as a virtual external input device of the tablet computer. Then the mouse operation event received by the PC is input to the virtual mouse of the tablet computer, and the tablet computer may respond to the operation event from the virtual mouse, and display a mouse cursor of the virtual mouse on the display. The mouse cursor of the virtual mouse is used as the mouse cursor of the tablet computer. The tablet computer synchronizes a location of the mouse cursor of the virtual mouse to the PC, so that the mouse cursor of the PC moves as the mouse cursor of the virtual mouse moves.

When the mouse cursor of the virtual mouse is located in an expanded screen, the tablet computer hides the cursor of the virtual mouse (that is, the cursor of the virtual mouse is not displayed in the foreground), and the mouse cursor of the PC is displayed in the expanded screen window. When the mouse cursor of the virtual mouse enters the application window, the tablet computer displays the mouse cursor of the virtual mouse and stops synchronizing the location of the mouse cursor of the virtual mouse to the PC, and the PC hides the mouse cursor of the PC. After that, when the mouse cursor of the virtual mouse moves out of the application window, the tablet computer hides the mouse cursor of the virtual mouse, and continues to synchronize the location of the mouse cursor of the virtual mouse to the PC, and the PC displays the mouse cursor of the PC. This ensures that only one mouse cursor is displayed on the display of the tablet computer at a time.

For example, as shown in FIG. 13A and FIG. 13B, the mouse cursor displayed in the expanded screen window of the tablet computer is the mouse cursor of the PC, and the mouse cursor displayed in the application window of the tablet computer is the mouse cursor of the virtual mouse and the mouse cursor of the tablet computer.

In this mode, a mouse connected to the PC is shared between the PC and the tablet computer, and a system including the PC and the tablet computer may be operated by using the mouse, to control a plurality of windows on the display of the PC and the display of the tablet computer.

The following describes the foregoing control mode with reference to a specific procedure. For ease of understanding, in the following descriptions, an example in which the first electronic device is a PC, the second electronic device is a tablet computer, and the external input device connected to the first electronic device is a mouse is still used for description.

Refer to FIG. 14A, FIG. 14B, and FIG. 14C. A procedure of a control method provided in the mode 4 includes the following steps.

S1401: The first electronic device establishes a communication connection to the second electronic device, and projects a screen onto the second electronic device.

S1402: The first electronic device triggers mouse shuttle when determining that the user moves a mouse to a boundary of the first interface and continues to move.

S1403: The first electronic device sends a shuttle start message to the second electronic device.

The shuttle start message carries a shuttle direction of the mouse of the first electronic device (for example, the mouse shuttles from the first electronic device to the second electronic device), and location information indicating that the mouse cursor leaves the boundary of the first interface. The location information is used by the second electronic device to determine a start display location of the mouse cursor displayed after the mouse shuttles.

S1404: The second electronic device determines that the mouse shuttle is completed.

S1405: The first electronic device sends, to the second electronic device, a received mouse operation event that the user moves the mouse.

S1406: When determining that the mouse cursor of the second electronic device is located in the first window, the second electronic device displays the transparent mouse cursor of the second electronic device, and synchronizes a location of the mouse cursor to the first electronic device.

For example, after determining that the mouse shuttle is completed, the second electronic device enables a virtual mouse cursor of the second electronic device. A second projection service monitors a location of a mouse of the second electronic device on the display based on a mouse operation event from a first projection service. When determining that the mouse cursor of the second electronic device is located in the first window, the second projection service synchronizes the location of the mouse cursor to the first electronic device, and sets the mouse cursor to the transparent state.

When determining that the mouse cursor moves to a boundary of the display of the second electronic device, the second electronic device may trigger the mouse to shuttle back to the first electronic device.

S1407: Based on the location of the mouse cursor synchronized by the second electronic device, the first electronic device displays, through projection, a mouse cursor of the first electronic device at the location.

For example, the first projection service displays the mouse cursor of the first electronic device at a location synchronized by the second projection service.

Optionally, if the user controls the first window by using the mouse, the method may further include the steps S1408 to S1410 after the step S1407.

S1408: The second electronic device generates a corresponding operation event when determining, based on the mouse operation event from the first electronic device, that the user moves the mouse to the first window and performs an operation on content in the window.

S1409: The second electronic device sends the operation event to the first electronic device. S1410: The first electronic device responds to the received operation event.

Optionally, if the user controls the second window by using the mouse, the method may further include the steps S1411 to S1414 after the step S1407 or the step S1410.

S1411: When determining, based on the mouse operation event from the first electronic device, that the user moves the mouse to the second window, the second electronic device sets the mouse cursor of the second electronic device to a non-transparent state, and stops synchronizing the location of the mouse cursor to the first electronic device.

For example, when determining that the user moves the mouse to the second window, the second projection service displays the mouse cursor (opaque) of the second electronic device, and stops synchronizing the location of the mouse cursor to the first electronic device. In addition, the second electronic device may notify the first electronic device that synchronization of the location of the mouse cursor is stopped, and the first electronic device hides, through projection, the mouse cursor of the first electronic device displayed on the display of the second electronic device.

S1412: The second electronic device responds when determining, based on the mouse operation event from the first electronic device, that the user performs an operation on content in the second window by using the mouse.

S1413: When determining that the user moves the mouse out of the second window, the second electronic device sets the mouse cursor of the second electronic device to the transparent state, and synchronizes the location of the mouse cursor to the first electronic device.

For example, when the second electronic device determines, based on the mouse operation event from the first electronic device, that the user moves the mouse out of the second window, the second electronic device sets the mouse cursor of the second electronic device to be transparent, and synchronizes the location of the mouse cursor to the first electronic device. Then, based on the location of the mouse cursor of the second electronic device synchronized by the second electronic device, the first electronic device displays, through projection, the mouse cursor of the first electronic device at the location.

For execution of some steps in the procedure, refer to related descriptions of related steps in FIG. 5A and FIG. 5B, FIG. 7A and FIG. 7B, or FIG. 10A, FIG. 10B, and FIG. 10C. Repeated content is not described herein again.

In the foregoing solution, in a scenario in which screen collaboration is established between the first electronic device and the second electronic device, the mouse of the first electronic device may shuttle to the second electronic device, serve as the mouse of the second electronic device, and control a window in the second electronic device other than a window projected by the first electronic device. Compared with a current mode in which the mouse of the first electronic device can control, only through projection, a window projected by the first electronic device onto the second electronic device, in the mode, different electronic devices can be quickly controlled by using one mouse. This improves flexibility and smoothness of the control mode in a projection scenario, and further improves use experience.

It should be noted that, in the foregoing embodiments, when the control mode of using an external input device is used for the first electronic device side, a control mode on the second electronic device side may be the touch control mode, the control mode of using an external input device, or another control mode. This is not specifically limited in embodiments of this application.

The mode 1 to the mode 4 are provided in the solution of the first part. During specific implementation, one or more control modes may be selected, so that the user can control the first electronic device and the second electronic device when performing an operation on the first electronic device side.

2. The touch control mode is used for the second electronic device side.

The second electronic device may receive the operation event performed by the user on the display, and control, based on the operation event, content in the local window on the display or a window projected by the third electronic device, or control content projected by the first electronic device onto the display. In this way, the user can control various windows on the display of the second electronic device in the touch control mode.

If a touch operation event that is received by the second electronic device and performed by the user is applied to a window projected by the first electronic device onto the second electronic device, the second electronic device may perform corresponding processing on the window by using the first electronic device. After performing corresponding processing, the first electronic device projects processed content onto the second electronic device. In this case, the second electronic device can obtain and display the processed content of the window, so that the second electronic device side can control the window.

If a touch operation event that is received by the second electronic device and performed by the user acts on a local application window of the second electronic device, the second electronic device may process the application window based on processing logic of the second electronic device.

3. The control mode of using an external input device is used for the second electronic device side. A control method in which the control mode of using an external input device is used for the second electronic device side is similar to a control method in which the touch control mode is used, and a difference lies only in a mode in which the second electronic device receives an operation event. Therefore, for the control method in which the control mode of using an external input device is used for the second electronic device side, refer to the related descriptions in the second part. Details are not described herein again.

Based on the plurality of control modes provided in the first part to the third part, two application scenarios of the solutions in embodiments of this application may be: "content sharing between different windows on the display of the second electronic device is implemented under control of the second electronic device", and "content sharing between different windows on the display of the second electronic device is implemented under control of the first electronic device". Based on two specific application scenarios (a scenario 1 and a scenario 2 in the following) and the control modes of the first electronic device and the second electronic device provided in the foregoing embodiments, the following specifically describes the content sharing method provided in embodiments of this application.

Scenario 1: Content sharing between the different windows on the display of the second electronic device is implemented under control of the second electronic device.

In this scenario, the user can control the second electronic device through a touch operation or an external input device, so that the second electronic device controls content sharing between the first window and the second window on the second electronic device.

A method in which the user controls the second electronic device through the touch operation is similar to a method in which the user controls the second electronic device by using the external input device. A difference lies in different modes of receiving user operation information. Therefore, the following uses only an example in which the user controls the second electronic device through the touch operation to implement content sharing between the first window and the second window for description.

Refer to FIG. 15a-1 and FIG. 15a-2. In a screen collaboration scenario shown in FIG. 1a, after screen collaboration is established between the first electronic device and the second electronic device, a second window is displayed as a gallery interface that includes a picture a, and a first window is displayed as a PC desktop and content of an opened "folder 1" that includes a picture b. If the user expects to share the picture a in the second window to the folder 1 in the first window for display, the user may select the picture a on the display of the second electronic device through touching, and drag the picture a to the folder 1 in the first window, as shown in FIG. 15a-1 and FIG. 15a-2; or the user may select the picture a on the display of the second electronic device through touching, drag the picture a to the top of the "folder 1" icon on the PC desktop of the first window, and release the picture a, or add the picture a to the folder 1. On the contrary, if the user expects to share the picture b in the first window to a gallery in the second window for display, the user may select the picture b on the display of the second electronic device through touching, and drag the picture b to the gallery interface of the second window, as shown in FIG. 15a-1 and FIG. 15a-2.

In the foregoing process, content displayed in the first window needs to be obtained by the second electronic device from the first electronic device, and the content displayed in the first window is controlled by the first electronic device. Therefore, when the user drags the content in the second window to the first window, the second electronic device needs to send the content to the first electronic device, and the first electronic device updates, based on the content, content to be displayed in the first window. When the user drags the content in the first window to the second window, the second electronic device also needs to obtain the content from the first electronic device and then add the content to the second window for display. Therefore, the second electronic device needs to cooperate with the first electronic device to complete content transmission between two windows, to ensure smooth execution of content dragging. The following describes an example of the cross-device content sharing method in the scenario 1 with reference to specific embodiments (the following Embodiment 1 to Embodiment 4). A control mode used in each embodiment is one or more of the plurality of control modes provided above.

### Embodiment 1

In this embodiment, a user may control, on a second electronic device side, sharing of content in a second window to a first window in a touch control mode. Based on coordinate locations of the first window and the second window on a display, the second electronic device may determine, by listening to coordinate locations of a mouse cursor on the display, that the user drags second content from the second window to the first window. In addition, after determining that the user drags the content from the second window to the first window and releases drag, the second electronic device notifies a first electronic device of the drag event, and the first electronic device performs a related response given after drag is completed.

Refer to FIG. 16. A cross-device content sharing method provided in an embodiment of this application includes the following steps.

S1601: The first electronic device establishes a communication connection to the second electronic device, and projects a screen onto the second electronic device.

After the first electronic device projects the screen onto the second electronic device, the first electronic device displays a first interface on a display, and the second electronic device displays the first window and the second window on the display. The first window is a projection window of the first electronic device. The first window includes first content projected by the first electronic device onto the second electronic device, and the second window includes the second content.

For execution of this step, refer to the foregoing related descriptions of step S501 in FIG. 5A. Details are not described herein again.

S1602: The second electronic device receives operations that the user selects the second content in the second window through touching and performs drag.

A first application window service of the second electronic device may listen to a drag event generated through touching of the user in the second window. Herein, the drag event means that the user selects the second content in the second window through touching (for example, the user may touch and hold to select the second content), and continue to move through touching, to drag the second content. After determining that the second content is selected, the second electronic device generates and displays a shadow (shadow) of the second content. The shadow may be displayed as an icon of the second content, and a location of the shadow moves as a touch point of the user on the display moves.

For example, in a scenario shown in FIG. 15a-1 and FIG. 15a-2, when the second content is a picture a, the user can touch and hold to select the picture a, and can keep moving in a touch state, so as to drag the picture a. The second electronic device generates a corresponding shadow after the picture a is selected. Because the shadow moves as a touch point moves, a movement track of the shadow can indicate a movement track of the dragged picture a. The shadow may be displayed as a zoomed-out icon of the picture a, for example, as shown in FIG. 15b-1 and FIG. 15b-2, so that the display of the second electronic device can intuitively indicate that the user drags the picture a from the second window to the first window through a touch operation.

S1603: The second electronic device determines that the second content is dragged out of the second window to the first window.

The first application window service of the second electronic device may determine, based on a drag event from a hardware framework layer, that the second content is dragged out of the second window. A second projection service may determine, based on the drag event from the hardware framework layer, that the second content is dragged to the first window.

S1604: The second electronic device determines operations that the user drags the second content to the first window and then releases drag.

After obtaining, through listening, the drag event from the application framework layer, the second projection service continues to listen to a user operation until the second projection service determines that the user drags the second content to the first window and releases drag.

For example, in FIG. 15a-1 and FIG. 15a-2, if the user drags, through touch control, the selected picture a to a folder 1 in the first window, stops touching, and releases the drag event, it indicates that the user expects to share the picture a to the folder 1 displayed in the first window.

S1605: The second electronic device sends drag event release information to the first electronic device, where the drag event release information includes drag content information and release point location information.

The second projection service notifies the first projection service of the drag event release information. The drag content information is content dragged by the user, or information indicating content dragged by the user. The release point location information is a location at which the user stops dragging the content.

For example, the drag content information may be the second content, or may be information indicating the second content, and the release point location information may be a location point at which the user stops dragging the second content in the first window.

Optionally, when the content dragged by the user is a text (for example, a segment of text), the drag content information is the text. Alternatively, the content dragged by the user is a file (for example, a picture or a document), the drag content information is information indicating the file. In this case, after sending drag content information of the file to the first electronic device, the second electronic device separately transmits the file to the first electronic device.

For example, when the user drags the picture a in the second window to the folder 1 in the first window, as shown in FIG. 15a-1 and FIG. 15a-2, the content dragged by the user is the picture a, and corresponding drag content information is indication information of the picture a, for example, a name of the picture a, so that the first electronic device or the second electronic device can determine the picture a based on the indication information.

When the user drags content through touching on the display of the second electronic device, the user continuously touches the display of the second electronic device. An operation corresponding to releasing drag by the user or stopping dragging by the user means that the user stops touching the display of the second electronic device.

S1606: The first electronic device generates a drag event of the first electronic device on the first interface after receiving the drag event release information from the second electronic device.

The first projection service may display a transparent window at a target location that corresponds to a release point location and that is on the first interface, and generate the drag event of the first electronic device at the transparent window, to indicate that the user selects target content on the first interface. Then, the first projection service hides the transparent window and releases the drag event of the first electronic device, to indicate that the user drags the target content to the target location and then hides the transparent window. In this embodiment, the target content is the second content.

For example, when the first electronic device is connected to a mouse and uses the mouse as an external input device of the first electronic device to accept operation control of the user, after the first projection service receives the drag event release information from the second projection service, the first projection service may display the transparent window at the target location on the first interface, and a mouse button press (down) event is input in the transparent window, to indicate that the user selects the target content by using the mouse. Then, the first projection service hides the transparent window, and a mouse button release (up) event is input, to indicate that the user stops dragging the target content by using the mouse. In this way, the target content is dragged to the target location.

S1607: After receiving the second content from the second electronic device, the first electronic device determines content that needs to be displayed on the first interface after the second content is added to the first interface.

After receiving the second content from the second electronic device, the first electronic device completes drag based on drag logic of the first electronic device, to obtain the content that needs to be displayed on the first interface after the second content is added to the first interface, and sends the content to the second electronic device through real-time projection. The second electronic device updates, based on the content, content displayed in the first window.

If the second content is a text, the first electronic device directly adds, to the first interface, the text carried in the drag content information, to obtain a new interface, then projects the interface onto the second electronic device, and displays the interface in the first window of the second electronic device. If the second content is a file, the first electronic device first receives the file sent by the second electronic device. After receiving is completed, the first electronic device adds the file to the first interface to obtain a new interface, and then projects the interface onto the second electronic device for display in the first window of the second electronic device.

For example, when the user drags the picture a in the second window to the folder 1 in the first window, as shown in FIG. 15a-1 and FIG. 15a-2, after the first electronic device receives the picture a sent by the second electronic device, the first electronic device adds the picture a to the file 1, and projects, onto the second electronic device, the first interface to which the picture a is added. Then the second electronic device displays the interface in the first window, so that the picture a in the second window is shared to the first window for display.

S1608: The second electronic device updates, based on content that is obtained after the second content is added to the first interface and that is obtained from the first electronic device, content displayed in the first window.

In the foregoing embodiment, the user needs to perform the touch operation on only the display of the second electronic device, to drag content in an application window of the second electronic device to an application window of the first electronic device. This can easily and quickly implement cross-device content sharing in a screen collaboration scenario. In addition, an overall process is smooth and good experience is provided. In addition, in an entire drag process, a shadow generated in the second electronic device is always used as a shadow of the drag content, so that a moving path of the drag content may be continuously displayed on the display of the second electronic device. This further improves use experience on a side of the second electronic device.

### Embodiment 2

In this embodiment, a user may control, on a second electronic device side, sharing of content in a second window to a first window in a touch control mode. Based on coordinate locations of the first window and the second window on a display, the second electronic device may determine, by listening to coordinate locations of a mouse cursor on the display, that the user drags second content from the second window to the first window. In addition, when determining that the user drags content out of the second window to the first window, the second electronic device notifies the first electronic device of the drag event, and synchronizes subsequent drag and movement operations of the user to the first electronic device, so that the first electronic device maintains a same operation event. After the user releases drag, the second electronic device notifies the first electronic device of the event, and the first electronic device performs a related response given after drag is completed.

Refer to FIG. 17A and FIG. 17B. Another cross-device content sharing method provided in an embodiment of this application includes the following steps.

S1701: The first electronic device establishes a communication connection to the second electronic device, and projects a screen onto the second electronic device.

After the first electronic device projects the screen onto the second electronic device, the first electronic device displays a first interface on a display, and the second electronic device displays the first window and the second window on the display. The first window is a projection window of the first electronic device. The first window includes first content projected by the first electronic device onto the second electronic device, and the second window includes the second content.

S1702: The second electronic device receives operations that the user selects the second content in the second window through touching and performs drag.

When the second electronic device determines that a movement location of the second content is located in the second window, the second electronic device displays a shadow of the second content.

For execution of the steps S1701 and S1702, refer to related descriptions of steps S1601 and S1602 in Embodiment 1 in the scenario 1. Details are not described herein again.

S1703: When determining that the second content is dragged out of the second window or the second content is dragged to the first window, the second electronic device hides the shadow of the second content displayed on the display.

A first application window service may determine, based on a drag event from a hardware framework layer, that the second content is dragged out of the second window. Alternatively, a second projection service may determine, based on a drag event from a hardware framework layer, that the second content is dragged to the first window. After that, when the second content continues to be dragged, the second electronic device hides the shadow of the second content previously generated on the display.

S1704: The second electronic device sends drag event generation information to the first electronic device, where the drag event generation information includes drag content information and drag point location information.

The second projection service or the first application window service notifies a first projection service of the drag event generation information. The drag content information is content dragged by the user, or information indicating content dragged by the user. The drag point location information is a location point touched when the user drags content out of the second window, or is a location point touched when the user drags content to the first window.

For example, when determining that the user drags the second content out of the second window, the first application window service notifies the first projection service of the drag event generation information that carries the drag content information and the drag point location information. The drag content information may be information indicating the second content. The drag point location information may be a touch location point at which the user drags the second content out of the second window.

For another example, when determining that the user drags the second content out of the second window to the first window, the second projection service notifies the first projection service of the drag event generation information that carries the drag content information and the drag point location information. The drag content information may be information indicating the second content. The drag point location information may be a touch location point at which the user drags the second content to the first window.

S1705: The first electronic device generates a drag event of the first electronic device on the first interface after receiving the drag event generation information from the second electronic device. The first projection service may display a transparent window at a target location that corresponds to a drag point location and that is on the first interface, and generate the drag event of the first electronic device at the transparent window, to indicate that the user selects target content on the first interface and then hides the transparent window. In this embodiment, the target content is the second content. After generating the drag event at the transparent window on the first interface, the first electronic device generates and displays the shadow of the second content.

For example, when the first electronic device is connected to a mouse and uses the mouse as an external input device of the first electronic device to accept operation control of the user, after the first projection service receives the drag event generation information from the second projection service, the first projection service may display the transparent window at the target location on the first interface, and a mouse button press (down) event is input in the transparent window, to indicate that the user selects the target content by using the mouse. Then, the first projection service hides the transparent window, and generates and displays a shadow of the target content.

S1706: The second electronic device determines an operation that the user continues to drag the second content.

S1707: The second electronic device synchronizes, to the first electronic device, the received operation that the user drags the second content.

When the user continues to drag the second content on the display of the second electronic device, the second projection service sends, to the first projection service in real time, a drag event that the user drags the second content. Herein, the drag event includes a touch location point at which the user drags the second content on the display of the second electronic device. The first projection service inputs the drag event to a first input driver service, and the first input driver service drives, based on the drag event, the shadow of the second content to move, so that the shadow moves along with a touch operation performed by the user on the display of the second electronic device. A location of the shadow at a moment corresponds to a touch location point at which the user drags the second content on the display of the second electronic device at the moment.

S1708: The second electronic device determines operations that the user drags the second content to the first window and then releases drag.

S1709: The second electronic device sends drag event release information to the first electronic device, where the drag event release information includes the drag content information and release point location information.

For execution of the steps S1708 and S1709, refer to related descriptions of steps S1604 and S1605 in Embodiment 1 in the scenario 1. Details are not described herein again.

S1710: The first electronic device releases the drag event of the first electronic device on the first interface after receiving the drag event release information from the second electronic device. The first projection service releases the drag event of the first electronic device at a target location that corresponds to a release point location and that is on the first interface, to indicate that the user drags the selected target content to the target location.

For example, when the first electronic device is connected to the mouse and uses the mouse as the external input device of the first electronic device to accept operation control of the user, after the first projection service receives the drag event release information from the second projection service, the first projection service may input a mouse button release (up) event at a corresponding target location, to indicate that the user stops dragging the target content by using the mouse, so as to drag the target content to the target location.

S1711: After receiving the second content from the second electronic device, the first electronic device determines content that needs to be displayed on the first interface after the second content is added to the first interface.

S1712: The second electronic device updates, based on content that is obtained after the second content is added to the first interface and that is obtained from the first electronic device, content displayed in the first window.

For execution of the steps S1711 and S1712, refer to related descriptions of steps S1607 and S1608 in Embodiment 1 in the scenario 1. Details are not described herein again.

In the foregoing embodiment, the user needs to perform the touch operation on only the display of the second electronic device, to drag content in an application window of the second electronic device to an application window of the first electronic device. This can easily and quickly implement cross-device content sharing in a screen collaboration scenario. In addition, an overall process is smooth and good experience is provided. In addition, in a drag process, when the first electronic device projects a drag route onto a window of the second electronic device, a shadow of drag content may be a shadow generated in the first electronic device. When the drag route passes through another window, the shadow of the drag content may be a shadow generated in the second electronic device. Therefore, a movement path of the drag content may be flexibly displayed based on a control end of a window in which the drag content is located, and a transmission path of content shared between windows may further be intuitively displayed.

In Embodiment 1 or Embodiment 2, based on the coordinate locations of the first window and the second window on the display, the second electronic device may determine, by listening to the coordinate locations of the mouse cursor on the display, that the user drags the second content from the second window to the first window. In addition, the second electronic device may further determine, by listening to a change of the drag event, an event in which the user drags content from the second window to the first window. Specifically, the first window and the second window of the second electronic device are displayed on different layers. If the user drags content from the second window to the first window, the layers are traversed. The second electronic device may perceive an event that the drag event traverses a layer. Therefore, when determining that the drag event arrives at a layer on which the first window is located, the second electronic device may determine that the user drags the second content to the first window (the drag event arrives at the first window), so as to trigger the mouse to shuttle back to the first electronic device.

For a method procedure in which content in the second window displayed by the second electronic device is shared to the first window with reference to the method for listening to the change of the drag event and the control method used in Embodiment 2, refer to Embodiment 3.

### Embodiment 3

S1801: A first electronic device establishes a communication connection to a second electronic device, and projects a screen onto the second electronic device.

After the first electronic device projects the screen onto the second electronic device, the first electronic device displays a first interface on a display, and the second electronic device displays a first window and a second window on a display. The first window is a projection window of the first electronic device. The first window includes first content projected by the first electronic device onto the second electronic device, and the second window includes second content. S1802: The second electronic device listens to events that a user drags content to and out of the first window.

After the first electronic device projects the screen onto the second electronic device, when the second electronic device determines that the user selects the second content in the second window through touching and drags the second content, the second electronic device generates and displays a shadow of the second content.

In this step, a second projection service may register, for the first window at an application framework layer, a task of listening to a drag event, to listen to and obtain the events that the user drags the content to and out of the first window. The second projection service may call back to obtain the event from the application framework layer.

This step may be performed after the first electronic device projects the screen onto the second electronic device, and ends until the projection ends.

S1803: The second electronic device determines to obtain, through listening, the event that the user drags the content to the first window.

S1804: The second electronic device hides the shadow of the second content.

The second projection service may determine, based on the received Action_Entered and Action_Exited, that a drag event arrives at or leaves the first window. The messages Action_Entered and Action_Exited are from the application framework layer, and are an action (action) attribute of a drag event (Drag Event) in a callback method (onDrag(View view, DragEvent dragEvent)) of a listener View.OnDragListener at the application framework layer. When the drag event leaves the second window and enters the first window, the second projection service may receive Action_Entered.

S1805: The second electronic device sends drag event generation information to the first electronic device, where the drag event generation information includes drag content information and drag point location information.

The drag content information is content dragged by the user, and the drag point location information is a location at which the second electronic device obtains, through listening, the event that the user drags the content to the first window.

S1806: The first electronic device generates a drag event of the first electronic device on the first interface after receiving the drag event generation information from the second electronic device.

S1807: The second electronic device determines an operation that the user continues to drag the second content.

S1808: The second electronic device synchronizes, to the first electronic device, the received operation that the user drags the second content.

S1809: The second electronic device determines operations that the user drags the second content to the first window and then releases drag.

S1810: The second electronic device sends drag event release information to the first electronic device, where the drag event release information includes the drag content information and release point location information.

S1811: The first electronic device releases the drag event of the first electronic device on the first interface after receiving the drag event release information from the second electronic device. S1812: After receiving the second content from the second electronic device, the first electronic device determines content that needs to be displayed on the first interface after the second content is added to the first interface.

S1813: The second electronic device updates, based on content that is obtained after the second content is added to the first interface and that is obtained from the first electronic device, content displayed in the first window.

For execution of some steps in the procedure, refer to related descriptions of the related steps in FIG. 5A and FIG. 5B and FIG. 16. Repeated content is not described herein again. For example, the step S1801 is the same as the step S501 in FIG. 5A, and the steps 51806 to S1813 are the same as the steps S1705 to S1712 in FIG. 17A and FIG. 17B.

In the foregoing embodiment, the user needs to perform a touch operation on only the display of the second electronic device, to drag content in an application window of the second electronic device to an application window of the first electronic device. This can easily and quickly implement cross-device content sharing in a screen collaboration scenario. In addition, an overall process is smooth and good experience is provided. In addition, in a drag process, when the first electronic device projects a drag route onto a window of the second electronic device, a shadow of drag content may be a shadow generated in the first electronic device. When the drag route passes through another window or area, the shadow of the drag content may be a shadow generated in the second electronic device. Therefore, a movement path of the drag content may be flexibly displayed based on a control end of a window in which the drag content is located, and a transmission path of content shared between windows may further be intuitively displayed.

In a method procedure in which content in the second window displayed by the second electronic device is shared to the first window with reference to the method for listening to a change of the drag event and the control method used in Embodiment 1, only steps S1602 and S1603 in FIG. 16 need to be replaced with steps S1802 to S1804 in FIG. 18A, and the release point location information carried in the drag event release information in step S1605 needs to be replaced with a location at which the second electronic device obtains, through listening, that the event that the user drags the content to the first window stops or ends. Details are not described herein again. Embodiment 1 to Embodiment 3 describe a method procedure for sharing content in the second window displayed by the second electronic device to the first window. The following describes a method procedure for sharing content in the first window displayed by the second electronic device to the second window. A reverse content sharing procedure of content sharing provided in Embodiment 2 is described by using the control method in Embodiment 2 as an example. For details, refer to Embodiment 4. A content sharing process corresponding to another control method is similar. Details are not described again.

### Embodiment 4

Refer to FIG. 19A and FIG. 19B. Still another cross-device content sharing method provided in an embodiment of this application includes the following steps.

S1901: A first electronic device establishes a communication connection to a second electronic device, and projects a screen onto the second electronic device.

After the first electronic device projects the screen onto the second electronic device, the first electronic device displays a first interface on a display, and the second electronic device displays a first window and a second window on a display. The first window is a projection window of the first electronic device. The first window includes first content projected by the first electronic device onto the second electronic device, and the second window includes second content.

S1902: The second electronic device determines operation event information indicating that a user selects the first content in the first window and drags the first content out of the first window. For example, a second projection service may determine, based on a touch operation of the user, operations that the user selects the first content in the first window and drags the first content out of the first window. Corresponding operation event information includes an operation event that the user selects the first content and performs drag and a location point at which the user selects the first content.

S1903: The second electronic device sends the operation event information to the first electronic device.

The second projection service sends the operation event information to a first projection service. After receiving the operation event information, the first projection service may send the operation event information to a first input driver service, and the first input driver service drives the first electronic device to respond to the operation event.

S1904: The second electronic device requests corresponding drag event information from the first electronic device when determining that the first content is dragged to the second window.

For example, when determining that the first content is dragged to the second window, the second projection service requests the corresponding drag event information from the first projection service. The drag event information includes drag event metadata, and the drag event metadata is the first content.

S1905: The first electronic device generates drag event information of the first electronic device on the first interface as requested by the second electronic device.

The first projection service may display a transparent window at a target location that is on the first interface and that corresponds to the location point at which the user selects the first content in the first window, and may generate a drag event of the first electronic device at the transparent window, to indicate that the user selects target content in the first window and then hides the transparent window. In this embodiment, the target content is the first content.

S1906: The first electronic device sends drag event generation information to the second electronic device.

For example, the first projection service sends the drag event generation information to the second projection service. The drag event generation information includes drag content information and drag point location information. The drag content information is information indicating the drag event metadata. The drag point location information is a location point touched when the user drags content out of the first window.

S1907: The second electronic device generates a drag event of the second electronic device in the second window after receiving the drag event generation information from the first electronic device.

The drag event means that the user drags the first content in the first window to the second window.

S1908: The second electronic device determines operations that the user drags the second content to the first window and then releases drag.

For example, the second projection service continues to listen to a user operation until the second projection service determines that the user drags the first content to the second window and releases drag.

S1909: The second electronic device sends drag event release information to the first electronic device, where the drag event release information includes the drag content information and release point location information.

S1910: The first electronic device releases the drag event of the first electronic device on the first interface after receiving the drag event release information from the second electronic device. The first projection service releases the drag event of the first electronic device at a target location that corresponds to a release point location and that is on the first interface, to indicate that the user drags the selected target content to the target location.

S1911: After receiving the first content from the first electronic device, the second electronic device adds the first content to the second window for display.

For execution of some steps in the procedure, refer to related descriptions of the related steps in FIG. 16. Repeated content is not described herein again.

In the foregoing embodiment, the user needs to perform the touch operation on only the display of the second electronic device, to drag content in an application window of the first electronic device to an application window of the second electronic device. This can easily and quickly implement cross-device content sharing in a screen collaboration scenario. In addition, an overall process is smooth and good experience is provided.

Scenario 2: Content sharing between the different windows on the display of the second electronic device is implemented under control of the first electronic device.

In this scenario, the user can control the first electronic device by using the external input device, so that the first electronic device controls and implements content sharing between the first window and the second window on the second electronic device.

The following describes a cross-device content sharing method in the scenario 2 with reference to specific embodiments (Embodiment 5 to Embodiment 7). One or more of the plurality of control modes provided above are used in each embodiment.

The following describes, by using an example in which the first electronic device and the second electronic device perform related control in a content sharing process in the control mode described in the mode 1, the content sharing method provided in this embodiment of this application. For details, refer to Embodiment 5.

### Embodiment 5

In this embodiment, a content sharing method provided in this embodiment of this application is described by using an example in which a first electronic device and a second electronic device perform related control in a content sharing process in the control mode described in the mode 1. Refer to FIG. 20A and FIG. 20B. In a screen collaboration scenario shown in FIG. 1a-1 and FIG. 1a-2, after screen collaboration is established between the first electronic device and the second electronic device, a second window is displayed as a gallery interface that includes a picture a, and a first window is displayed as an expanded screen desktop that is of a PC desktop and that includes content of an opened "folder 1". If a user expects to share the picture a in the second window to the folder 1 in the first window, the user performs operation control by using a mouse, and sends an operation on the mouse to the second electronic device by using the first electronic device, so as to select the picture a on a display of the second electronic device, and drag the picture a to the folder 1 in the first window. Optionally, in this process, after a mouse cursor moves out of a first interface and enters the first window, a mouse of the first electronic device may trigger mouse shuttle to switch to a mouse cursor of the second electronic device, and then switch back to the mouse of the first electronic device when the mouse cursor moves into the first interface. In this case, a mouse cursor on the display of the second electronic device is displayed as the mouse cursor of the second electronic device, as shown in FIG. 20A and FIG. 20B.

For execution of the content sharing procedure, refer to a cross-device content sharing method provided in FIG. 21A and FIG. 21B.

Refer to FIG. 21A and FIG. 21B. A cross-device content sharing method provided in an embodiment of this application includes the following steps.

S2101: The first electronic device establishes a communication connection to the second electronic device, and projects a screen onto the second electronic device.

S2102: The first electronic device triggers the mouse shuttle when determining that the user moves the mouse to a boundary of the first interface and continues to move.

S2103: The first electronic device sends a shuttle start message to the second electronic device. S2104: The second electronic device determines that the mouse shuttle is completed.

For example, for the operation process of triggering the mouse shuttle, refer to a process A of moving a mouse cursor in a first direction shown in FIG. 20A and FIG. 20B. The first direction shown in FIG. 20A and FIG. 20B is from the first interface to the first window, and from the first window to the second window.

S2105: The first electronic device sends, to the second electronic device, a received mouse operation event that the user moves the mouse.

For execution of the steps S2101 to S2105, refer to related descriptions of steps S501 to S505 in FIG. 5A. Details are not described herein again.

S2106: The second electronic device receives operations that the user selects second content in the second window by using the mouse and performs drag.

A first application window service may determine, based on the mouse operation event from the first electronic device, a drag event generated by the user in the second window. Herein, the drag event means that the user selects the second content by using the mouse in the second window (for example, the user may touch and hold to select the second content), and continues to move the mouse to drag the second content. After determining that the second content is selected, the second electronic device generates and displays a shadow (shadow) of the second content. The shadow may be displayed as an icon of the second content, and a location of the shadow moves as the mouse of the user moves.

S2107: The second electronic device determines that the second content is dragged out of the second window to the first window.

For example, refer to a process B of moving the mouse cursor in a second direction shown in FIG. 20A and FIG. 20B.

The first application window service of the second electronic device may determine, based on the mouse operation event from the first electronic device, that the second content is dragged out of the second window. A second projection service may determine, based on the mouse operation event from the first electronic device, that the second content is dragged to the first window. S2108: The second electronic device determines operations that the user drags the second content to the first window and then releases drag.

A first projection service determines, based on the mouse operation event from the first electronic device, that the user drags the second content to the first window and releases drag.

S2109: The second electronic device sends drag event release information to the first electronic device, where the drag event release information includes drag content information and release point location information.

S2110: The first electronic device generates a drag event of the first electronic device on the first interface after receiving the drag event release information from the second electronic device.

S2111: After receiving the second content from the second electronic device, the first electronic device determines content that needs to be displayed on the first interface after the second content is added to the first interface.

S2112: The second electronic device updates, based on content that is obtained after the second content is added to the first interface and that is obtained from the first electronic device, content displayed in the first window.

For execution of steps S2106 to S2112 in the procedure, refer to related descriptions of related content in steps S1602 to S1608 in FIG. 16. Repeated content is not described herein again.

In the foregoing embodiment, the user needs to perform a control operation on only the display of the second electronic device by using the mouse, to drag content in an application window of the second electronic device to an application window of the first electronic device. This can easily and quickly implement cross-device content sharing in a screen collaboration scenario. In addition, an overall process is smooth and good experience is provided. In addition, in an entire drag process, a shadow generated in the second electronic device is always used as a shadow of the drag content, so that a moving path of the drag content may be continuously displayed on the display of the second electronic device. This further improves use experience on a side of the second electronic device.

The following describes, by using an example in which a first electronic device and a second electronic device perform related control in a content sharing process in the control mode described in the mode 2, a content sharing method provided in this embodiment of this application.

Refer to FIG. 22a-1 and FIG. 22a-2 or FIG. 22b-1 and FIG. 22b-2. In the screen collaboration scenario described above, after screen collaboration is established between the first electronic device and the second electronic device, a second window is displayed as a gallery interface that includes a picture a, and a first window is displayed as an expanded screen desktop that is of a PC desktop and that includes content of an opened folder 1. If a user expects to share the picture a in the second window to the folder 1 in the first window, the user may perform control by using a mouse of the first electronic device, select the picture a on a display of the second electronic device, and drag the picture a to the "folder 1" in the first window. Optionally, in this process, after a mouse cursor moves out of a first interface or moves into the second window, a mouse of the first electronic device may trigger mouse shuttle to switch to a mouse of the second electronic device, and then switch back to the mouse of the first electronic device when the mouse cursor moves into the first window or moves out of the second window. In this case, a mouse cursor displayed on the first interface and the first window is the mouse cursor of the first electronic device, and a mouse cursor displayed in areas that are of the second window and the display of the second electronic device and that are not occupied by the first window is a mouse cursor of the second electronic device, as shown in FIG. 22a-1 and FIG. 22a-2 or FIG. 22b-1 and FIG. 22b-2.

In the first possible scenario, the first window occupies an entire area of the display of the second electronic device (namely, a tablet computer), as shown in FIG. 22a-1 and FIG. 22a-2. In the second possible scenario, the first window occupies a part of the area of the display of the tablet computer, as shown in FIG. 22b-1 and FIG. 22b-2.

For execution of the content sharing procedure, refer to the cross-device content sharing method provided in Embodiment 6 or Embodiment 7 below.

### Embodiment 6

Refer to FIG. 23A and FIG. 23B. In the first possible scenario, a cross-device content sharing method provided in an embodiment of this application includes the following steps.

S2301: The first electronic device establishes a communication connection to the second electronic device, and projects a screen onto the second electronic device.

S2302: The second electronic device synchronizes, to the first electronic device, location information that is of a second window and that is on a display.

For example, a first application window service notifies a first projection service of regional coordinate information of the second window on the display, and the first projection service converts the coordinate information into regional coordinate information corresponding to a first window.

S2303: The first electronic device triggers mouse shuttle when determining that a user moves a mouse to an area that corresponds to the second window and that is in the first window.

S2304: The first electronic device sends a shuttle start message to the second electronic device. S2305: The second electronic device determines that the mouse shuttle is completed.

For example, for the operation process of triggering the mouse shuttle, refer to a process A of moving a mouse cursor in a first direction shown in FIG. 22a-1 and FIG. 22a-2. The first direction shown in FIG. 22a-1 and FIG. 22a-2 is from a first interface to the first window, and from the first window to the second window.

S2306: The first electronic device sends, to the second electronic device, a received mouse operation event that the user moves the mouse.

For execution of the steps S2301 to S2306, refer to related descriptions of steps S701 to S706 in FIG. 7A. Details are not described herein again.

S2307: The second electronic device receives operations that the user selects second content in the second window by using the mouse and performs drag.

When the second electronic device determines that a movement location of the second content is located in the second window, the second electronic device displays a shadow of the second content.

S2308: When determining that the second content is dragged out of the second window or the second content is dragged to the first window, the second electronic device hides the shadow of the second content displayed on the display.

S2309: The second electronic device sends drag event generation information to the first electronic device, where the drag event generation information includes drag content information and drag point location information.

S2310: The first electronic device generates a drag event of the first electronic device on the first interface after receiving the drag event generation information from the second electronic device. S2311: The second electronic device determines an operation that the user continues to drag the second content.

For execution of the steps S2307 to S2310, refer to related descriptions of related content in steps S1703 to S1706 in Embodiment 2 in the scenario 1. Details are not described herein again. S2312: The second electronic device synchronizes, to the first electronic device, the received operation that the user drags the second content.

When the user continues to drag the second content on the display of the second electronic device, a second projection service sends, to the first projection service in real time, a drag event that the user drags the second content. Herein, the drag event includes a track point of an operation that the user drags the second content on the display of the second electronic device. The first projection service inputs the drag event to a first input driver service, and the first input driver service drives, based on the drag event, the shadow of the second content to move, so that the shadow moves as the user moves the mouse. A location of the shadow at a moment corresponds to a track point of an operation that the user drags the second content on the display of the second electronic device by using the mouse at the moment.

S2313: The second electronic device determines operations that the user drags the second content to the first window and then releases drag.

For example, refer to a process B of moving the mouse cursor in a second direction shown in FIG. 22a-1 and FIG. 22a-2. The second direction shown in FIG. 22a-1 and FIG. 22a-2 is from the second window to the first window, and from the first window to the first interface.

S2314: The second electronic device sends drag event release information to the first electronic device, where the drag event release information includes the drag content information and release point location information.

S2315: The first electronic device releases the drag event of the first electronic device on the first interface after receiving the drag event release information from the second electronic device.

S2316: After receiving the second content from the second electronic device, the first electronic device determines content that needs to be displayed on the first interface after the second content is added to the first interface.

S2317: The second electronic device updates, based on content that is obtained after the second content is added to the first interface and that is obtained from the first electronic device, content displayed in the first window.

For execution of the steps S2313 to S2317, refer to related descriptions of steps S1708 to S1712 in Embodiment 2 in the scenario 1. Details are not described herein again.

### Embodiment 7

Refer to FIG. 24A, FIG. 24B, and FIG. 24C. In the second possible scenario, a cross-device content sharing method provided in an embodiment of this application includes the following steps.

S2401: The first electronic device establishes a communication connection to the second electronic device, and projects a screen onto the second electronic device.

S2402: The second electronic device listens to events that a user drags content out of and to a first window.

S2403: The second electronic device listens to events of moving a mouse cursor out of and in the first window on a display.

S2404: A mouse of the first electronic device shuttles to a second window of the second electronic device.

For execution of this step, refer to the method described in steps S804 to S806 in FIG. 8A. Details are not described herein again.

After a mouse cursor of the first electronic device shuttles to the second window of the second electronic device, the second electronic device displays the mouse cursor of the second electronic device in the second window. When the second electronic device obtains, through listening, a drag event generated on a layer on which the second window is located, the second electronic device displays a shadow of drag content in the second window.

S2405: When determining that the event that the user drags the content to the first window is obtained through listening, the second electronic device triggers to end mouse shuttle.

For example, refer to a process C of moving the mouse cursor in a second direction shown in FIG. 22b-1 and FIG. 22b-2. The second direction is from the second window to the first window.

When a second projection service obtains, through listening, that the drag event enters the first window, the second projection service hides the mouse cursor of the second electronic device and a shadow of the dragged second content, and triggers to end the mouse shuttle.

S2406: The second electronic device sends drag event generation information and a shuttle end message to the first electronic device. The drag event generation information includes drag content information and drag point location information.

The shuttle end message carries location information indicating that the mouse cursor arrives at the layer on which the first window is located. The location information is used by the first electronic device to determine a start display location of the mouse cursor displayed after the mouse shuttle ends.

S2407: The first electronic device generates a drag event of the first electronic device on a first interface after receiving the drag event generation information from the second electronic device. S2408: The second electronic device determines operations that the user drags the second content to the first window and then releases drag.

S2409: The second electronic device sends drag event release information to the first electronic device, where the drag event release information includes the drag content information and release point location information.

S2410: The first electronic device releases the drag event of the first electronic device on the first interface after receiving the drag event release information from the second electronic device. S2411: The second electronic device sends the second content to the first electronic device. S2412: The first electronic device adds, through projection, the second content to the first window for display.

The second electronic device sends the second content to the first electronic device only after determining that the user releases the dragged second content.

Optionally, the method may further include the steps S2413 to S2419.

S2413: The second electronic device determines to obtain, through listening, an event that the user drags the first content out of the first window.

For example, refer to a process C of moving the mouse cursor in a first direction shown in FIG. 22b-1 and FIG. 22b-2. The first direction is from the first window to the second window.

S2414: The mouse cursor of the first electronic device shuttles to the second window of the second electronic device.

For execution of this step, refer to the method described in steps S804 to S806 in FIG. 8A. Details are not described herein again.

S2415: The second electronic device requests corresponding drag event information from the first electronic device.

S2416: The first electronic device generates drag event information of the first electronic device on the first interface as requested by the second electronic device.

S2417: The first electronic device sends drag event generation information to the second electronic device.

S2418: The second electronic device generates a drag event of the second electronic device after receiving the drag event generation information from the first electronic device.

For execution of the steps S2415 to S2418, refer to related descriptions of steps S1904 to S1907 in FIG. 19A. Details are not described herein again.

S2419: The second electronic device releases the drag event of the second electronic device when determining that the user drags the first content to the second window and releases drag.

S2420: After obtaining the first content from the first electronic device through a file transfer process, the second electronic device adds the first content to the second window for display. The file transfer process is executed after the user drags the first content to the second window and releases drag. If there is no operation that the user releases drag, the file transfer process is not triggered.

For execution of this step, refer to the method described in steps S1908 to S1911 in FIG. 19B. Details are not described herein again.

In the foregoing embodiment, the user needs to perform a control operation on only a display of the first electronic device by using a mouse, to drag content in an application window of the second electronic device to an application window of the first electronic device. This can easily and quickly implement cross-device content sharing in a screen collaboration scenario. In addition, an overall process is smooth and good experience is provided. In addition, in a drag process, when the first electronic device projects a drag route onto a window of the second electronic device, a shadow of drag content may be a shadow generated in the first electronic device. When the drag route passes through another window, the shadow of the drag content may be a shadow generated in the second electronic device. Therefore, a movement path of the drag content may be flexibly displayed based on a control end of a window in which the drag content is located, and a transmission path of content shared between windows may further be intuitively displayed.

It should be noted that step numbers in the embodiments are merely an example of an execution procedure, and do not constitute a limitation on an execution sequence of the steps. In embodiments of this application, there is no strict execution sequence between steps that do not have a time sequence dependency relationship with each other.

Based on the foregoing embodiments and a same concept, an embodiment of this application provides a cross-device content sharing method, applied to a system including a first electronic device and a second electronic device. The second electronic device displays a first window and a second window. The first window includes first content projected by the first electronic device onto the second electronic device. The second window includes second content. As shown in FIG. 25, the method includes the following steps.

S2501: When receiving a first operation, the second electronic device sends information about the first operation to the first electronic device, and sends second content to the first electronic device, where the first operation is used to drag the second content from the second window to the first window.

S2502: The first electronic device sends projection data to the second electronic device in response to the received information about the first operation and the received second content, where the projection data includes the first content and the second content.

S2503: The second electronic device updates the first content in the first window to the first content and the second content in response to the received projection data.

For specific steps performed by the first electronic device and the second electronic device in the method, refer to descriptions in the foregoing embodiments. Details are not described herein again. Based on the foregoing embodiments and a same concept, an embodiment of this application further provides an electronic device. The electronic device may be a first electronic device or a second electronic device. The electronic device is configured to implement the cross-device content sharing method provided in embodiments of this application. As shown in FIG. 26, an electronic device 2600 may include a display 2601, one or more processors 2602, a memory 2603, and one or more computer programs (not shown in the figure). The foregoing components may be coupled through one or more communication buses 2604.

The display 2601 is configured to display a related user interface, for example, a desktop or an application interface. Optionally, the display 2601 is a touch display.

The memory 2603 stores the one or more computer programs, and the one or more computer programs include instructions. The processor 2602 invokes the instructions stored in the memory 2603, so that the electronic device 2600 performs the cross-device content sharing method provided in embodiments of this application.

Based on the foregoing embodiments and a same concept, an embodiment of this application further provides a system. The system includes a first electronic device and a second electronic device. The second electronic device displays a first window and a second window. The first window includes first content projected by the first electronic device onto the second electronic device. The second window includes second content. The first electronic device is configured to perform the method that is applied to the first electronic device and that is provided in the foregoing embodiments. The second electronic device is configured to perform the method that is applied to the second electronic device and that is provided in the foregoing embodiments.

Optionally, the system further includes a third electronic device. The third electronic device is configured to project the generated and displayed second content onto the second electronic device, and the second electronic device displays the second content in the first window.

Optionally, the system further includes a first external input device. There is a communication connection between the first external input device and the first electronic device. The first external input device is configured to report, to the first electronic device, an operation performed on the first external input device.

Optionally, the system further includes a second external input device. There is a communication connection between the second external input device and the second electronic device. The second external input device is configured to report, to the second electronic device, an operation performed on the second external input device.

Based on the foregoing embodiments and a same concept, an embodiment of this application further provides a computer-readable storage medium. The computer-readable storage medium stores a computer program. When the computer program is run on an electronic device, the electronic device is enabled to perform the cross-device content sharing method provided in embodiments of this application that is applied to the first electronic device or the second electronic device.

Based on the foregoing embodiments and a same concept, an embodiment of this application further provides a computer program product. The computer program product includes a computer program or instructions. When the computer program or the instructions are run on an electronic device, the electronic device is enabled to perform the cross-device content sharing method provided in embodiments of this application that is applied to the first electronic device or the second electronic device.

The electronic device, the computer storage medium, the computer program product, or the chip provided in embodiments is configured to perform the corresponding method provided above.

Therefore, for beneficial effects that can be achieved, refer to the beneficial effects in the corresponding method provided above. Details are not described herein again.

Based on descriptions about the foregoing implementations, a person skilled in the art may understand that, for a purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In embodiments of this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be discarded or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It is clear that a person skilled in the art can make various modifications and variations to embodiments of this application without departing from the scope of embodiments of this application. In this way, embodiments of this application are intended to cover these modifications and variations provided that they fall within the protection scope defined by the following claims and their equivalent technologies of this application.

## Claims

1. A cross-device content sharing method, applied to a system comprising a first electronic device and a second electronic device, wherein the second electronic device displays a first window and a second window, the first window comprises first content projected by the first electronic device onto the second electronic device, and the second window comprises second content; and the method comprises:
sending, by the second electronic device when receiving a first operation, information about the first operation to the first electronic device, and sending the second content to the first electronic device, wherein the first operation is used to drag the second content from the second window to the first window;
sending, by the first electronic device, projection data to the second electronic device in response to the received information about the first operation and the received second content, wherein the projection data comprises the first content and the second content; and
updating, by the second electronic device, the first content in the first window to the first content and the second content in response to the received projection data.

2. The method according to claim 1, wherein the method further comprises:
sending, by the second electronic device, information about a second operation to the first electronic device when receiving the second operation, wherein the second operation is used to drag the first content from the first window to the second window;
sending, by the first electronic device, content data to the second electronic device in response to the received information about the second operation, wherein the content data comprises the first content; and
updating, by the second electronic device, the second content in the second window to the first content and the second content in response to the received content data.

3. The method according to claim 1 or 2, wherein the first content is content that is on a first interface and that is displayed after being generated by the first electronic device, or the first content is content that is on a second interface and that is not displayed after being generated by the first electronic device; and
the second content is content displayed after being generated by the second electronic device, or the second content is content projected by a third electronic device onto the second electronic device.

4. The method according to any one of claims 1 to 3, wherein the first operation or the second operation comprises at least one of the following:
an operation indicated by operation information from the first electronic device, wherein the operation information is information about an operation performed on a first external input device of the first electronic device, and the first external input device is configured to report, to the first electronic device, the operation performed on the first external input device;
an operation performed on a second external input device of the second electronic device, wherein the second external input device is configured to report, to the second electronic device, the operation performed on the second external input device; or
a touch operation performed on a display of the second electronic device.

5. The method according to any one of claims 1 to 4, wherein when the second electronic device receives the first operation, or when the second electronic device receives the second operation, the method further comprises:
displaying, by the second electronic device, a first mark in response to a target operation, wherein the first mark moves synchronously with a track point of the target operation, and the target operation is the first operation or the second operation;
when determining that a track point of a target operation is located outside the first window, displaying, by the second electronic device, a first mark in response to the target operation; or when determining that a track point of a target operation is located inside the first window, displaying, by the second electronic device, a second mark projected by the first electronic device, wherein the second mark moves synchronously with the track point of the target operation; or
when determining that a track point of a target operation is located outside the first window, displaying, by the second electronic device, a first mark in response to the target operation; or displaying, by the second electronic device, a first mark and a second mark when determining that a track point of a target operation is located inside the first window, wherein the second mark is transparent and the first mark moves synchronously with the second mark, or the first mark is transparent and the second mark moves synchronously with the first mark.

6. The method according to claim 5, wherein any mark comprises a cursor and/or a content icon, the cursor indicates a location of the track point of the target operation, the content icon indicates operation content of the target operation, and the operation content is the second content when the target operation is the first operation, or the operation content is the first content when the target operation is the second operation.

7. The method according to claim 6, wherein a cursor comprised in the first mark is different from a cursor comprised in the second mark.

8. The method according to any one of claims 5 to 7, wherein the method further comprises:
if determining that location coordinates of the track point of the target operation are within a location coordinate range of the first window, determining, by the second electronic device, that the track point of the target operation is located inside the first window; or if determining that location coordinates of the track point of the target operation are not within a location coordinate range of the first window, determining that the track point of the target operation is located outside the first window; or
if determining that the track point of the target operation is located on a layer on which the first window is located, determining, by the second electronic device, that the track point of the target operation is located inside the first window; or if determining that the track point of the target operation is not located on a layer on which the first window is located, determining that the track point of the target operation is located outside the first window.

9. The method according to any one of claims 5 to 8, wherein the method further comprises:
in response to a received third operation, switching, by the second electronic device, the first window to run in the background, and displaying a third window, wherein the third window comprises third content; and
in response to a received fourth operation, switching, by the second electronic device, the first window to display in the foreground, and stopping displaying the third window.

10. The method according to claim 9, wherein after the second electronic device displays the third window, the method further comprises:
if determining that the second mark is currently displayed, switching, by the second electronic device, the second mark to the first mark; and
after the second electronic device switches the first window to display in the foreground, the method further comprises:
if determining that the first mark is located inside the first window, switching, by the second electronic device, the first mark to the second mark.

11. The method according to any one of claims 5 to 10, wherein the displaying, by the second electronic device, a first mark and a second mark when determining that a track point of a target operation is located inside the first window comprises:
displaying, by the second electronic device, the first mark in response to the target operation, wherein the first mark moves synchronously with the track point of the target operation; when determining that the first mark is located inside the first window, setting, by the second electronic device, the first mark to be transparent, and sending first location information to the first electronic device, wherein the first location information comprises the location of the track point of the target operation or a location of the first mark; generating, by the first electronic device, the second mark in response to the first location information, and projecting the second mark onto the second electronic device; and displaying, by the second electronic device, the second mark in the first window in response to the received second mark; or
sending, by the second electronic device, information about the target operation to the first electronic device; generating, by the first electronic device, the second mark in response to the received information about the target operation, setting the second mark to be transparent, projecting the second mark onto the second electronic device, and sending second location information to the second electronic device, wherein the second location information comprises a location of the second mark; and displaying, by the second electronic device, the second mark in the first window in response to the received second mark, and displaying the first mark in the first window in response to received first location information.

12. The method according to claim 11, wherein after the displaying, by the second electronic device, the second mark in the first window in response to the received second mark, and displaying the first mark in the first window in response to received first location information, the method further comprises:
when determining that an icon style of the second mark changes, notifying, by the first electronic device, the second electronic device of a changed icon style of the first mark; and
updating, by the second electronic device, the icon style of the second mark to the changed icon style of the first mark in response to the received changed icon style of the first mark.

13. The method according to any one of claims 5 to 12, wherein the first interface displayed after being generated by the first electronic device comprises the second mark; and
before the second electronic device receives the first operation, the method further comprises: when determining that the second mark moves out of the first interface, stopping, by the first electronic device, displaying the second mark, and sending received information about an operation to the second electronic device.

14. The method according to claim 13, wherein the first window and the second window are located on a third interface displayed after being generated by the second electronic device, and the method further comprises:
when determining that the first mark moves out of the third interface, sending, by the second electronic device, first switching mark information to the first electronic device, wherein the first switching mark information is used to notify the first electronic device to display a mark; and
displaying, by the first electronic device in response to the received first switching mark information, the second mark on the first interface, and stopping sending the received information about the operation to the second electronic device.

15. The method according to any one of claims 5 to 12, wherein the first interface displayed after being generated by the first electronic device or the second interface not displayed after being generated by the first electronic device comprises the second mark; and
before the second electronic device receives the first operation, the method further comprises:
sending, by the second electronic device, third location information to the first electronic device, wherein the third location information is location information that is of the second window and that is on an interface on which the first window is located;
determining, by the first electronic device, a target area that corresponds to the received third location information and that is on the first interface or the second interface; and
when determining that the second mark moves into the target area, stopping, by the first electronic device, displaying the second mark, and sending received information about an operation to the second electronic device.

16. The method according to claim 15, wherein the method further comprises:
when determining that the first mark moves into the first window, sending, by the second electronic device, second switching mark information to the first electronic device, wherein the second switching mark information is used to notify the first electronic device to display a mark through projection;
generating, by the first electronic device, the second mark in response to the received second switching mark information, projecting the second mark onto the second electronic device, and stopping sending the received information about the operation to the second electronic device; and
displaying, by the second electronic device, the second mark in the first window in response to the received second mark.

17. The method according to any one of claims 1 to 16, wherein the information about the first operation comprises at least one of the following:
first drag event information, second drag event information, and the first operation; and
the first drag event information comprises a location of a track point at which the first operation ends and information about the second content, and the second drag event information comprises a location at which a track point of the first operation enters the first window and the information about the second content.

18. The method according to claim 17, wherein the sending, by the second electronic device when receiving a first operation, information about the first operation to the first electronic device comprises:
when determining that the first operation ends, sending, by the second electronic device, the first drag event information to the first electronic device; or
when determining that the track point of the first operation enters the first window, sending, by the second electronic device, the second drag event information to the first electronic device, and synchronizing the first operation to the first electronic device.

19. The method according to claim 18, wherein after the second electronic device sends the first drag event information to the first electronic device, the method further comprises:
displaying, by the first electronic device, a first transparent window in response to the received first drag event information, wherein the first transparent window is used to carry an event of dragging the second content by the first electronic device; and
stopping, by the first electronic device, displaying the first transparent window.

20. The method according to claim 18, wherein after the second electronic device sends the second drag event information to the first electronic device, the method further comprises:
displaying, by the first electronic device, a second transparent window in response to the received second drag event information, wherein the second transparent window is used by the first electronic device to generate an event of dragging the second content; and
stopping, by the first electronic device, displaying the second transparent window; and
when the second electronic device synchronizes the first operation to the first electronic device, the method further comprises:
determining, by the first electronic device based on the first operation synchronized by the second electronic device, an operation of dragging the second content on the first electronic device; and
when determining that the first operation synchronized by the second electronic device ends, determining, by the first electronic device, to end the event of dragging the second content.

21. The method according to any one of claims 1 to 20, wherein a display area of the second window is comprised in a display area of the first window; or
the first window and the second window are located in different display areas.

22. A cross-device content sharing method, applied to a second electronic device, wherein the second electronic device displays a first window and a second window, the first window comprises first content projected by a first electronic device onto the second electronic device, and the second window comprises second content; and the method comprises:
sending information about a first operation to the first electronic device when the first operation is received; and sending the second content to the first electronic device, wherein the first operation is used to drag the second content from the second window to the first window;
receiving projection data from the first electronic device, wherein the projection data comprises the first content and the second content; and
updating the first content in the first window to the first content and the second content in response to the received projection data.

23. The method according to claim 22, wherein the method further comprises:
sending information about a second operation to the first electronic device when the second operation is received, wherein the second operation is used to drag the first content from the first window to the second window;
receiving content data from the first electronic device, wherein the content data comprises the first content; and
updating the second content in the second window to the first content and the second content in response to the received content data.

24. The method according to claim 22 or 23, wherein the first content is content that is on a first interface and that is displayed after being generated by the first electronic device, or the first content is content that is on a second interface and that is not displayed after being generated by the first electronic device; and
the second content is content displayed after being generated by the second electronic device, or the second content is content projected by a third electronic device onto the second electronic device.

25. The method according to any one of claims 22 to 24, wherein the first operation or the second operation comprises at least one of the following:
an operation indicated by operation information from the first electronic device, wherein the operation information is information about an operation performed on a first external input device of the first electronic device, and the first external input device is configured to report, to the first electronic device, the operation performed on the first external input device;
an operation performed on a second external input device of the second electronic device, wherein the second external input device is configured to report, to the second electronic device, the operation performed on the second external input device; or
a touch operation performed on a display of the second electronic device.

26. The method according to any one of claims 22 to 25, wherein when the first operation is received, or when the second operation is received, the method further comprises:
displaying a first mark in response to a target operation, wherein the first mark moves synchronously with a track point of the target operation, and the target operation is the first operation or the second operation;
when it is determined that a track point of a target operation is located outside the first window, displaying a first mark in response to the target operation; or when it is determined that a track point of a target operation is located inside the first window, displaying a second mark projected by the first electronic device, wherein the second mark moves synchronously with the track point of the target operation; or
when it is determined that a track point of a target operation is located outside the first window, displaying a first mark in response to the target operation; or displaying a first mark and a second mark when it is determined that a track point of a target operation is located inside the first window, wherein the second mark is transparent and the first mark moves synchronously with the second mark, or the first mark is transparent and the second mark moves synchronously with the first mark.

27. The method according to claim 26, wherein any mark comprises a cursor and/or a content icon, the cursor indicates a location of the track point of the target operation, the content icon indicates operation content of the target operation, and the operation content is the second content when the target operation is the first operation, or the operation content is the first content when the target operation is the second operation.

28. The method according to claim 27, wherein a cursor comprised in the first mark is different from a cursor comprised in the second mark.

29. The method according to claim 26 or 28, wherein the method further comprises:
if it is determined that location coordinates of the track point of the target operation are within a location coordinate range of the first window, determining that the track point of the target operation is located inside the first window; or if it is determined that location coordinates of the track point of the target operation are not within a location coordinate range of the first window, determining that the track point of the target operation is located outside the first window; or
if it is determined that the track point of the target operation is located on a layer on which the first window is located, determining that the track point of the target operation is located inside the first window; or if it is determined that the track point of the target operation is not located on a layer on which the first window is located, determining that the track point of the target operation is located outside the first window.

30. The method according to any one of claims 26 to 29, wherein the method further comprises:
in response to a received third operation, switching the first window to run in the background, and displaying a third window, wherein the third window comprises third content; and
in response to a received fourth operation, switching the first window to display in the foreground, and stopping displaying the third window.

31. The method according to claim 30, wherein after the third window is displayed, the method further comprises:
if it is determined that the second mark is currently displayed, switching the second mark to the first mark; and
after the first window is switched to display in the foreground, the method further comprises: if it is determined that the first mark is located inside the first window, switching the first mark to the second mark.

32. The method according to any one of claims 26 to 31, wherein the displaying a first mark and a second mark when it is determined that a track point of a target operation is located inside the first window comprises:
displaying the first mark in response to the target operation, wherein the first mark moves synchronously with the track point of the target operation; when it is determined that the first mark is located inside the first window, setting the first mark to be transparent, and sending first location information to the first electronic device, wherein the first location information comprises the location of the track point of the target operation or a location of the first mark; receiving the second mark projected by the first electronic device; and displaying the second mark in the first window in response to the received second mark; or
sending information about the target operation to the first electronic device; receiving the second mark projected by the first electronic device, and receiving second location information from the first electronic device, wherein the second mark is transparent, and the second location information comprises a location of the second mark; and displaying the second mark in the first window in response to the received second mark, and displaying the first mark in the first window in response to the received first location information.

33. The method according to claim 32, wherein after the displaying the second mark in the first window in response to the received second mark, and displaying the first mark in the first window in response to the received first location information, the method further comprises:
receiving a changed icon style of the first mark from the first electronic device; and
updating an icon style of the second mark to the changed icon style of the first mark in response to the received changed icon style of the first mark.

34. The method according to any one of claims 26 to 33, wherein the first window and the second window are located on a third interface displayed after being generated by the second electronic device, and the method further comprises:
when it is determined that the first mark moves out of the third interface, sending first switching mark information to the first electronic device, wherein the first switching mark information is used to notify the first electronic device to display a mark.

35. The method according to any one of claims 26 to 33, wherein before the first operation is received, the method further comprises:
sending third location information to the first electronic device, wherein the third location information is location information that is of the second window and that is on an interface on which the first window is located.

36. The method according to claim 35, wherein the method further comprises:
when it is determined that the first mark moves into the first window, sending second switching mark information to the first electronic device, wherein the second switching mark information is used to notify the first electronic device to display a mark through projection;
receiving the second mark projected by the first electronic device; and
displaying the second mark in the first window in response to the received second mark.

37. The method according to any one of claims 22 to 36, wherein the information about the first operation comprises at least one of the following:
first drag event information, second drag event information, and the first operation, wherein
the first drag event information comprises a location of a track point at which the first operation ends and information about the second content, and the second drag event information comprises a location at which a track point of the first operation enters the first window and the information about the second content.

38. The method according to claim 37, wherein the sending information about a first operation to the first electronic device when the first operation is received comprises:
when it is determined that the first operation ends, sending the first drag event information to the first electronic device; or
when it is determined that the track point of the first operation enters the first window, sending the second drag event information to the first electronic device, and synchronizing the first operation to the first electronic device.

39. The method according to any one of claims 22 to 38, wherein a display area of the second window is comprised in a display area of the first window; or
the first window and the second window are located in different display areas.

40. An electronic device, wherein the electronic device comprises a display, a memory, and one or more processors; and
the memory is configured to store computer program code, the computer program code comprises computer instructions; and when the computer instructions are executed by the one or more processors, the electronic device is enabled to perform the method according to any one of claims 22 to 39.

41. A computer-readable storage medium, wherein the computer-readable storage medium stores a computer program, and when the computer program is run on an electronic device, the electronic device is enabled to perform the method according to any one of claims 22 to 39.

42. A computer program product, wherein the computer program product comprises a computer program or instructions, and when the computer program or the instructions are run on an electronic device, the electronic device is enabled to perform the method according to any one of claims 22 to 39.
